(19) Europäisches Patentamt
European Patent Office
Office européen des brevets

(11) **EP 4 369 714 A1**

(12) **EUROPEAN PATENT APPLICATION**
published in accordance with Art. 153(4) EPC

(43) Date of publication:
**15.05.2024 Bulletin 2024/20**

(21) Application number: **22837350.2**

(22) Date of filing: **24.05.2022**

(51) International Patent Classification (IPC):
*H04N 19/597* (2014.01)     *G06T 17/20* (2006.01)
*H04N 19/46* (2014.01)

(52) Cooperative Patent Classification (CPC):
**G06T 17/20; H04N 19/46; H04N 19/597**

(86) International application number:
**PCT/JP2022/021181**

(87) International publication number:
**WO 2023/281929 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.07.2021 JP 2021113579**

(71) Applicant: **Sony Group Corporation
Tokyo 108-0075 (JP)**

(72) Inventors:
• **KUMA, Satoru**
**Tokyo 108-0075 (JP)**
• **KATO, Tsuyoshi**
**Tokyo 108-0075 (JP)**
• **HAYASHI, Kao**
**Tokyo 108-0075 (JP)**
• **NAKAGAMI, Ohji**
**Tokyo 108-0075 (JP)**

(74) Representative: **D Young & Co LLP
3 Noble Street
London EC2V 7BQ (GB)**

(54) **INFORMATION PROCESSING DEVICE AND METHOD**

(57) The present disclosure relates to information processing device and method capable of suppressing reduction in encoding efficiency.

At least some of internal vertices which are vertices of a mesh representing an object having a three-dimensional structure and positioned other than the boundary of a patch of a geometry are deleted, vertex connection information indicating the vertices of the mesh and connections between the vertices is generated, and the vertex connection information is encoded. Furthermore, coded data of vertex connection information indicating boundary vertices which are vertices of a mesh representing an object having a three-dimensional structure and positioned at least at the boundary of a patch of a geometry and connections between the boundary vertices is decoded, and the vertices positioned in the patch and the connections between the vertices are reconstructed using the vertex connection information obtained by decoding the coded data and a geometry image in which the patch is arranged on a two-dimensional plane. The present disclosure may be applied to, for example, an information processing apparatus, an electronic device, an information processing method, a program or the like.

*FIG. 6*

```
Patch A
  Inclusive  #0 u00, v00, #1 u10, v10, #2 u20, v20, #4 u40, v40
  Exclusive  #5 u50, v50, #6 u60, v60, #7 u70, v70, #8 u80, v80
  Non-boundary Vertex #9 u90, v90, #10 u100, v100
Patch B
  Inclusive  #3 u31, v31, #2 u21, v21, #1 u11, v11, #0 u01, v01
  Exclusive  none
  Non-boundary Vertex  none
Patch C
  Inclusive  #4 u42, v42, #2 u22, v22, #3 u32, v32
  Exclusive  none
  Non-boundary Vertex  none
Patch D
  Inclusive  #5 u53, v53, #8 u83, v83, #7 u73, v73, #6 u63, v63
  Exclusive  none
  Non-boundary Vertex  none
```

111

**Description**

TECHNICAL FIELD

The present disclosure relates to information processing device and method, and more particularly relates to information processing device and method capable of suppressing reduction in encoding efficiency.

BACKGROUND ART

Conventionally, a mesh (Mesh) has been used as 3D data representing an object having a three-dimensional shape. As a mesh compression method, a method of compressing a mesh by extending video-based point cloud compression (VPCC) has been proposed (see, for example, Non-Patent Document 1). In a case of this method, the geometry (position information) of the object is patched and encoded as a geometry image. Therefore, information indicating the position of each vertex in the geometry image is generated and encoded as meta information.

CITATION LIST

NON-PATENT DOCUMENT

Non-Patent Document 1: Danillo Graziosi, Alexandre Zaghetto, Ali Tabatabai, "[VPCC] [EE2.6-related] Mesh Patch Data", ISO/IEC JTC 1/SC 29/WG 7 m 55368, October 2020

SUMMARY OF THE INVENTION

PROBLEMS TO BE SOLVED BY THE INVENTION

However, in a case of this method, since the meta information is generated for all the vertices included in the geometry image, there is a possibility that an encoding efficiency is lowered.
The present disclosure has been made in view of such a situation, and an object thereof is to make it possible to suppress reduction in encoding efficiency.

SOLUTIONS TO PROBLEMS

An information processing device of one aspect of the present technology is an information processing device including a vertex connection information generation unit that deletes at least some of internal vertices which are vertices of a mesh representing an object having a three-dimensional structure and positioned other than the boundary of a patch of a geometry and generates vertex connection information indicating the vertices of the mesh and a connection between the vertices, and an encoding unit that encodes the vertex connection information.
An information processing method of one aspect of the present technology is an information processing method including deleting at least some of internal vertices which are vertices of a mesh representing an object having a three-dimensional structure and positioned other than the boundary of a patch of a geometry and generating vertex connection information indicating the vertices of the mesh and a connection between the vertices, and encoding the vertex connection information.
An information processing device of another aspect of the present technology is an information processing device including a decoding unit that decodes coded data of vertex connection information indicating boundary vertices which are vertices of a mesh representing an object having a three-dimensional structure and positioned at least at the boundary of a patch of a geometry and a connection between the boundary vertices, and a vertex connection reconstruction unit that reconstructs the vertices positioned in the patch and the connection between the vertices using the vertex connection information obtained by decoding the coded data by the decoding unit and a geometry image in which the patch is arranged on a two-dimensional plane.
An information processing method of another aspect of the present technology is an information processing method including decoding coded data of vertex connection information indicating boundary vertices which are vertices of a mesh representing an object having a three-dimensional structure and positioned at least at a boundary of a patch of a geometry and a connection between the boundary vertices, and reconstructing the vertices positioned in the patch and the connection between the vertices using the vertex connection information obtained by decoding the coded data and a geometry image in which the patch is arranged on a two-dimensional plane.
In the information processing method and device of one aspect of the present technology, at least some of internal vertices which are vertices of a mesh representing an object having a three-dimensional structure and positioned other than the boundary of a patch of a geometry are deleted, vertex connection information indicating the vertices of the mesh and a connection between the vertices is generated, and the vertex connection information is encoded.

In the information processing method and device of another aspect of the present technology, coded data of vertex connection information indicating boundary vertices which are vertices of a mesh representing an object having a three-dimensional structure and positioned at least at the boundary of a patch of a geometry and a connection between the boundary vertices is decoded, and the vertices positioned in the patch and the connection between the vertices are reconstructed using the vertex connection information obtained by decoding the coded data and a geometry image in which the patch is arranged on a two-dimensional plane.

BRIEF DESCRIPTION OF DRAWINGS

Fig. 1 is a diagram for explaining a video-based approach.
Fig. 2 is a diagram for explaining a mesh.
Fig. 3 is a table for explaining vertex connection information.
Fig. 4 is a table for explaining vertices and connections.
Fig. 5 is a diagram for explaining boundary vertices.
Fig. 6 is a diagram for explaining an example of the vertex connection information.
Fig. 7 is a diagram for explaining an example of the vertex connection information.
Fig. 8 is a diagram for explaining an example of the vertex connection information.
Fig. 9 is a diagram for explaining density.
Fig. 10 is a diagram for explaining refinement of a vertex position.
Fig. 11 is a diagram for explaining a method of reconstructing the vertices and the connections.
Fig. 12 is a diagram for explaining interpolation of the boundary vertices.
Fig. 13 is a diagram for explaining formation of polygons.
Fig. 14 is a diagram for explaining merging of polygons outside a patch region.
Fig. 15 is a diagram for explaining merging of polygons inside the patch region.
Fig. 16 is a diagram for explaining addition of internal vertices.
Fig. 17 is a diagram for explaining a method of reconstructing the vertices and the connections.
Fig. 18 is a diagram for explaining a method of setting a boundary.
Fig. 19 is a diagram for explaining setting of a triangular region and a rectangular region.
Fig. 20 is a diagram for explaining boundary correction.
Fig. 21 is a diagram for explaining boundary correction.
Fig. 22 is a diagram for explaining boundary correction.
Fig. 23 is a diagram for explaining boundary correction.
Fig. 24 is a diagram for explaining arrangement of internal vertices in the rectangular region.
Fig. 25 is a diagram for explaining arrangement of the internal vertices in the rectangular region.
Fig. 26 is a table for explaining connection formation in the rectangular region.
Fig. 27 is a diagram for explaining connection formation in the rectangular region.
Fig. 28 is a diagram for explaining connection formation in the triangular region.
Fig. 29 is a diagram for explaining connection formation in the triangular region.
Fig. 30 is a diagram for explaining connection formation in the triangular region.
Fig. 31 is a diagram for explaining connection formation in the triangular region.
Fig. 32 is a diagram for explaining connection formation in the triangular region.
Fig. 33 is a block diagram illustrating a main configuration example of an encoding device.
Fig. 34 is a flowchart for explaining an example of the flow of encoding processing.
Fig. 35 is a block diagram illustrating a main configuration example of a decoding device.
Fig. 36 is a flowchart for explaining an example of the flow of decoding processing.
Fig. 37 is a flowchart for explaining an example of the flow of vertex connection reconstruction processing.
Fig. 38 is a flowchart for explaining an example of the flow of the vertex connection reconstruction processing.
Fig. 39 is a diagram for explaining addition of the internal vertices.
Fig. 40 is a diagram for explaining an example of the vertex connection information.
Fig. 41 is a diagram for explaining an example of generation of an occupancy image based on the vertex connection information.
Fig. 42 is a diagram for explaining an example of generation of the occupancy image based on the vertex connection information.
Fig. 43 is a diagram for explaining an example of generation of the occupancy image based on the vertex connection information.

Fig. 44 is a diagram for explaining the front and back of the polygon.

Fig. 45 is a diagram for explaining an example of Omap correction information.

Fig. 46 is a block diagram illustrating a main configuration example of an encoding device.

Fig. 47 is a flowchart for explaining an example of the flow of encoding processing.

Fig. 48 is a flowchart for illustrating an example of the flow of Omap correction information generation processing.

Fig. 49 is a block diagram illustrating a main configuration example of a decoding device.

Fig. 50 is a flowchart for explaining an example of the flow of decoding processing.

Fig. 51 is a flowchart for explaining an example of the flow of occupancy image generation processing.

Fig. 52 is a diagram for explaining an example of patch reconstruction.

Fig. 53 is a diagram for explaining an example of patch reconstruction.

Fig. 54 is a diagram for explaining an example of patch reconstruction.

Fig. 55 is a diagram for explaining an example of a state of adding polygons.

Fig. 56 is a diagram for explaining an example of a state of adding polygons.

Fig. 57 is a diagram for explaining an example of a state of adding polygons.

Fig. 58 is a block diagram illustrating a main configuration example of a computer.

MODE FOR CARRYING OUT THE INVENTION

Hereinafter, modes for carrying out the present disclosure (hereinafter referred to as embodiments) will be described. Note that description will be given in the following order.

1. Mesh Compression in VPCC Extension
2.Transmission of Vertex Connection Information
3. First Embodiment (Encoding Device)
4. Second Embodiment (Decoding Device)
5. Application Example
6. Supplementary Note

<1. Mesh Compression in VPCC Extension>

<Documents and the Like Supporting Technical Contents and Technical Terms>

The scope disclosed in the present technology includes not only the content described in the embodiments but also the content described in the following non-patent documents and the like that are known at the time of filing, content of other documents referred to in the following non-patent documents, and the like.

Non-Patent Document 1: (described above)
Non-Patent Document 2: "Information technology - Coded Representation of Immersive Media - Part 5: Visual Volumetric Video-based Coding (V3C) and Video-based Point Cloud Compression (V-PCC)", ISO/IEC 23090-5:2020(E),ISO/IEC JTC 1/SC 29/WG 11 w19579

That is, the contents described in the above-described Non-Patent Documents, the contents of other documents referred to in the above-described Non-Patent Documents, and the like are also basis for determining the support requirement.

<Point Cloud>

Conventionally, there has been 3D data such as a point cloud representing a three-dimensional structure by point position information, attribute information, and the like.

For example, in a case of the point cloud, a three-dimensional structure (three-dimensional shaped object) is expressed as a set of a large number of points. The point cloud includes position information (also referred to as geometry) and attribute information (also referred to as attribute) on each point. The attribute can include any information. For example, color information, reflectance information, normal line information, and the like on each point may be included in the attribute. As described above, the point cloud has a relatively simple data structure, and can express any three-dimensional structure with sufficient accuracy by using a sufficiently large number of points.

<VPCC>

Video-based point cloud compression (VPCC) is one of such point cloud encoding techniques, and encodes point cloud data, which is 3D data representing a three-dimensional structure, using a codec for two-dimensional images.

In the VPCC, the geometry and the attribute of a point cloud are each decomposed into small regions (also referred to as patches), and each patch is projected onto a projection plane that is a two-dimensional plane. For example, the geometry and the attribute are projected onto any of the six surfaces of the bounding box containing the object. The geometry and the attribute projected on the projection plane are also referred to as projection images. Furthermore, the patch projected on the projection plane is also referred to as a patch image.

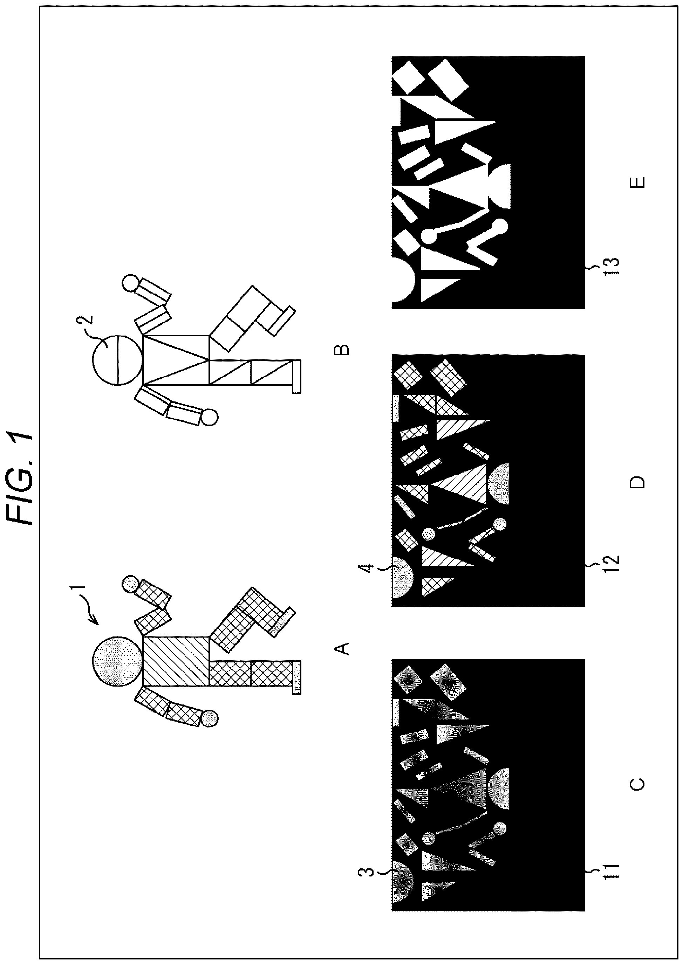

For example, the geometry of a point cloud 1 illustrating an object having a three-dimensional structure illustrated in A of Fig. 1 is decomposed into patches 2 as illustrated in B of Fig. 1, and each patch is projected onto a projection plane. That is, a patch image (projection image for each patch) of the geometry is generated. Each pixel value of the patch image of the geometry indicates a distance (depth value (Depth)) from the projection plane to the point.

The attribute of the point cloud 1 is also decomposed into patches 2 similarly to the geometry, and each patch is projected onto the same projection plane as that for the geometry. That is, a patch image of the same size and same shape attribute as the patch image of the geometry is generated. Each pixel value of the patch image of the attribute indicates an attribute (color, normal vector, reflectance, and the like) of a point at the same position of the patch image of the corresponding geometry.

Then, each patch image generated in this way is disposed in a frame image (also referred to as a video frame) of a video sequence. That is, each patch image on the projection plane is arranged on a predetermined two-dimensional plane.

For example, the frame image in which the patch images of the geometry are arranged is also referred to as a geometry video frame. Furthermore, this geometry video frame is also referred to as a geometry image, a geometry map, or the like. The geometry image 11 illustrated in C of Fig. 1 is a frame image (geometry video frame) in which the patch images 3 of the geometry are arranged. The patch images 3 correspond to the patches 2 in B of Fig. 1 (the patches 2 of the geometry are projected onto the projection plane).

In addition, the frame image in which the patch images of the attribute are arranged is also referred to as an attribute video frame. Furthermore, the attribute video frame is also referred to as an attribute image or an attribute map. The attribute image 12 illustrated in D of Fig. 1 is a frame image (attribute video frame) in which the patch images 4 of the attribute are arranged. The patch images 4 correspond to the patches 2 in B of Fig. 1 (the patches 2 of the attribute are projected on the projection plane).

Then, these video frames are encoded by an encoding method for a two-dimensional image, such as, for example, advanced video coding (AVC) or high efficiency video coding (HEVC). That is, point cloud data that is 3D data representing a three-dimensional structure can be encoded using a codec for a two-dimensional image. Generally, an encoder of 2D data is more widespread than an encoder of 3D data, and can be realized at low cost. That is, by applying the video-based approach as described above, an increase in cost can be suppressed.

Note that, in a case of such a video-based approach, an occupancy image (also referred to as an occupancy map) can also be used. The occupancy image is map information indicating the presence or absence of the projection image (patch image) for each NxN pixels of the geometry video frame and the attribute video frame. For example, an occupancy image indicates the region in the geometry image or the attribute image where the patch image exists (NxN pixels) with the value "1" and the region where the patch image does not exist (NxN pixels) with the value "0".

Such an occupancy image is encoded as data different from the geometry image and the attribute image and transmitted to the decoding side. Since the decoder can grasp whether or not the region is a region where the patch exists by referring to this occupancy map, it is possible to suppress the influence of noise and the like caused by encoding/decoding, and to reconstruct the point cloud more accurately. For example, even if the depth value changes due to encoding/decoding, the decoder can ignore the depth value of the region where no patch image exists (not process the depth value as the position information of the 3D data) by referring to the occupancy map.

For example, the occupancy image 13 as illustrated in E of Fig. 1 may be generated for the geometry image 11 in C of Fig. 1 or the attribute image 12 in D of Fig. 1. In the occupancy image 13, a white portion indicates the value "1" and a black portion indicates the value "0".

It should be noted that, similarly to the geometry video frame, the attribute video frame, and the like, this occupancy image can also be transmitted as a video frame. That is, similarly to the geometry and the attribute, encoding is performed by an encoding method for a two-dimensional image such as AVC or HEVC.

That is, in a case of the VPCC, the geometry and the attribute of the point cloud are projected onto the same projection plane and are arranged at the same position in the frame image. That is, the geometry and the attribute of each point are associated with each other by the position on the frame image.

<Mesh>

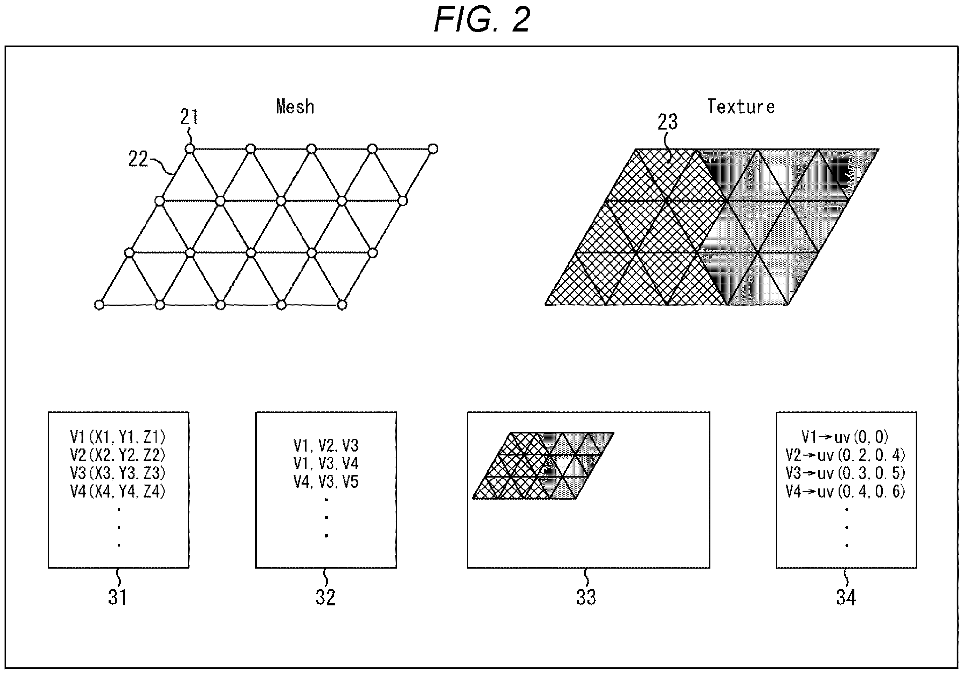

Meanwhile, as 3D data representing an object having a three-dimensional structure, for example, a mesh exists in addition to a point cloud. As illustrated in Fig. 2, the mesh represents the surface of the object in the three-dimensional space by a polygon that is a plane (polygon) surrounded by the sides 22 connecting the vertices 21. As illustrated in Fig. 2, the 3D data representing the object includes the mesh and the texture 23 attached to each polygon.

For example, as illustrated in the lower part of Fig. 2, the 3D data using the mesh includes vertex information 31 including position information (three-dimensional coordinates (X, Y, Z)) on each vertex 21, connectivity 32 indicating a vertex 21 and a side 22 forming each polygon, a texture image 33 that is map information on a texture 23 attached to each polygon, and a UV map 34 indicating a position (that is, the position of each vertex 21 in the texture image 33) in the texture image 33 of the texture corresponding to each vertex 21. The UV map 34 indicates the position of each vertex by UV coordinates which are coordinates on the texture image 33.

In a case of 3D data using meshes, unlike the case of VPCC described above, the correspondence between each vertex 21 and the texture 23 is indicated by the UV map 34. Therefore, as in the example of Fig. 2, the texture image 33 is configured as map information independent of the vertex information 31 configured by the three-dimensional coordinates of each vertex. Therefore, in the texture image 33, the projection direction and resolution of the texture 23 of each polygon can be arbitrarily set.

<Mesh Compression Using VPCC>

As a method of compressing 3D data using such a mesh, for example, a method of compressing (encoding) 3D data using a mesh by extending the above-described VPCC has been proposed in Non-Patent Document 1 and the like. In a case of this method, the geometry (position information) of the object is patched and encoded as a geometry image as in the example of C of Fig. 1. Therefore, information indicating the position of each vertex in the geometry image is generated and encoded as meta information.

However, in a case of this method, since the meta information is generated for all the vertices included in the geometry image, there is a possibility that an encoding efficiency is lowered.

<2.Transmission of Vertex Connection Information>

Therefore, the encoder reduces the number of vertices for transmitting the position information on the geometry image as the meta information. That is, the encoder generates position information on some vertices among the vertices of the mesh included in the geometry image and vertex connection information indicating connections between the vertices, encodes the vertex connection information as meta information, and transmits the meta information to the decoder.

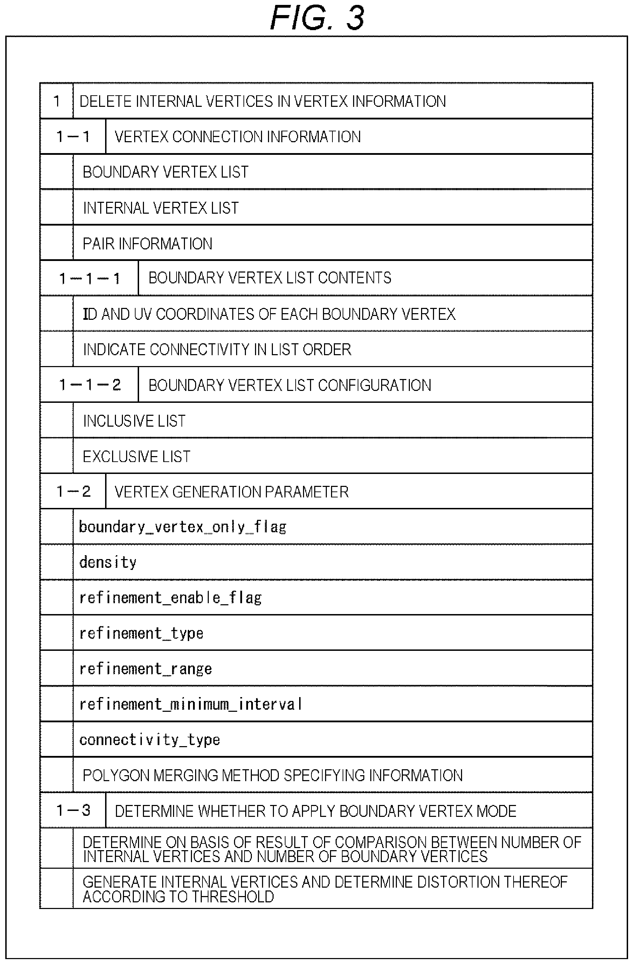

At that time, the vertex connection information includes at least information regarding a vertex (also referred to as a boundary vertex) positioned at the boundary of the patch. In other words, as illustrated in the uppermost row of the table in Fig. 3, the encoder deletes at least some of vertices (also referred to as internal vertices) positioned other than the boundary of the patch (inside the patch) among the vertices of the mesh included in the geometry image, and generates vertex connection information on the remaining vertices.

For example, in an information processing method, at least some of internal vertices which are vertices of a mesh representing an object having a three-dimensional structure and positioned other than the boundary of the patch of the geometry are deleted, vertex connection information indicating the vertices of the mesh and the connections between the vertices is generated, and the vertex connection information is encoded.

For example, an information processing device includes a vertex connection information generation unit that deletes at least some of internal vertices which are vertices of a mesh representing an object having a three-dimensional structure and positioned other than the boundary of the patch of the geometry and generate vertex connection information indicating the vertices of the mesh and the connections between the vertices and an encoding unit that encodes the vertex connection information.

With this configuration, the encoder can reduce the number of vertices indicated by the vertex connection information, and can suppress an increase in the information amount of the vertex connection information. Therefore, the encoder can suppress reduction in encoding efficiency due to encoding of the vertex connection information.

Furthermore, the decoder to which such vertex connection information is transmitted reconstructs the vertices of the mesh included in the geometry image and the connections between the vertices.

For example, in an information processing method, coded data of vertex connection information indicating boundary vertices which are vertices of a mesh representing an object having a three-dimensional structure and positioned at least at the boundary of the patch of the geometry and connections between the boundary vertices is decoded, and the vertices positioned in the patch and the connections between the vertices are reconstructed using the vertex connection information obtained by decoding the coded data and a geometry image in which the patch is arranged on a two-dimensional plane.

For example, an information processing device includes a decoding unit that decodes coded data of vertex connection information indicating boundary vertices which are vertices of a mesh representing an object having a three-dimensional structure and positioned at least at the boundary of the patch of the geometry and connections between the boundary vertices and a vertex connection reconstruction unit that reconstructs the vertice positioned in the patch and the connections between the vertices using the vertex connection information obtained by decoding the coded data and a geometry image in which the patch is arranged on a two-dimensional plane.

With this configuration, the decoder can reconstruct the vertices and the connection in the decoded geometry image. That is, the decoder can suppress reduction in the number of vertices of the mesh due to encoding and decoding. Therefore, the decoder can suppress reduction in the quality of the mesh due to the encoder reducing the number of vertices in the vertex connection information. Therefore, the number of vertices in the vertex connection information can be reduced in practice. In other words, the encoder can suppress reduction in encoding efficiency due to encoding of the vertex connection information.

Note that in the present specification, transmission of information from the encoder to the decoder includes not only transmission via any communication medium (that is, transmission of information by communication.), but also transmission via any storage medium (that is, writing of information into the storage medium and reading of information from the storage medium.).

<Vertex Connection Information>

As described with reference to Fig. 2, in the 3D data using the mesh, only the vertex is indicated in the geometry, and the geometry is configured as non-image data such as vertex information and connectivity. When this 3D data is encoded using the VPCC, a geometry image is generated from these pieces of information. That is, the 3D data is divided into patches including polygons adjacent to each other, each patch is projected onto a two-dimensional plane (projection plane), and a patch image including depth information from the projection plane is generated. Then, the patch image is arranged in a geometry image which is a two-dimensional plane, and is encoded as a frame image of a video sequence.

In this geometry image, the vertices of the mesh are not represented. Therefore, vertex connection information indicating where in the geometry image is vertices and connections between the vertices is generated and encoded as meta information.

The encoder reduces the information amount of vertex connection information by reducing the number of internal vertices in the vertex connection information. In other words, the encoder generates vertex connection information including at least information regarding boundary vertices which are vertices positioned at the boundary of the patch.

That is, as illustrated in the third row from the top of the table in Fig. 3, the vertex connection information generated by the encoder may include a "boundary vertex list" which is the list of boundary vertices as vertices positioned at the boundary of the patch (patch image). In other words, the encoder may generate such a boundary vertex list as vertex connection information. For example, the encoder may delete all internal vertices.

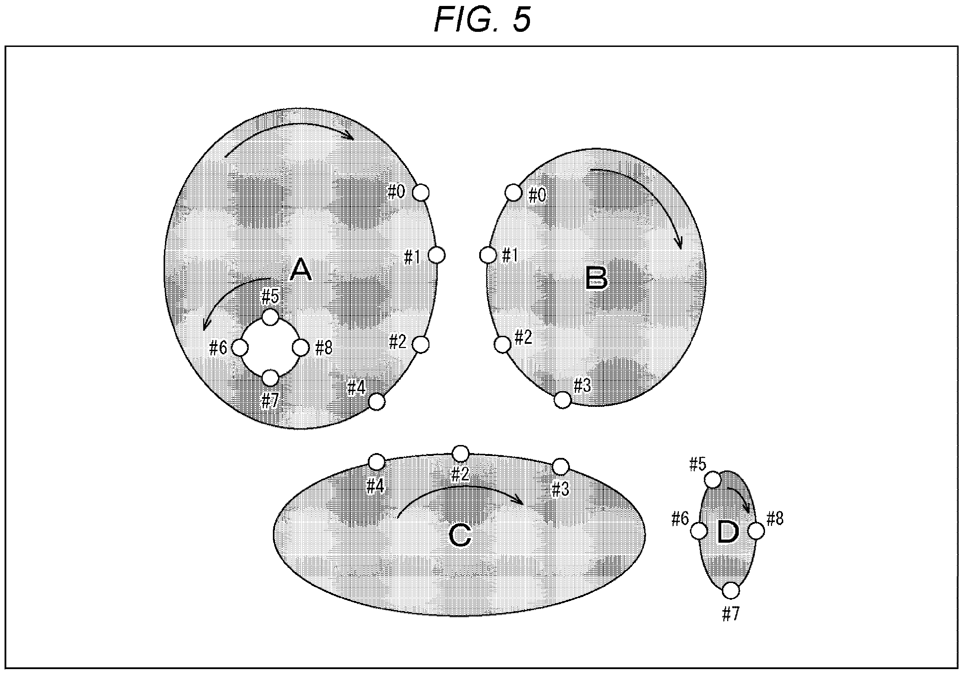

For example, Fig. 5 illustrates a patch image A, a patch image B, a patch image C, and a patch image D. In the figure, a region indicated by gray is a region in the patch (also referred to as a patch region). In addition, a white circle indicated at the boundary of each patch image (boundary between a patch region and a portion other than the patch region) indicates a boundary vertex. A "#" + a number indicated in the vicinity of each boundary vertex indicates identification information (information for identifying the vertex in the patch) on the vicinity boundary vertex.

In the vertex connection information, the boundary vertex list may be indicated for each boundary of the patch. For example, the patch image A has a boundary where boundary vertices #0 to #4 are positioned and a boundary where boundary vertices #5 to #8 are positioned. The patch image B has a boundary where boundary vertices #0 to #3 are positioned. The patch image C has a boundary where boundary vertices #2 to #4 are positioned. The patch image D has a boundary where boundary vertices #5 to #8 are positioned. The boundary vertex list may be generated for each of such boundaries.

As illustrated in Fig. 5, at the boundary of the patch (patch image), there may be a case where the inside of the boundary is a patch region and a case where the outside of the boundary is a patch region. For example, the boundary of the patch image A where the boundary vertices #0 to #4 are positioned, the boundary of the patch image B where the boundary vertices #0 to #3 are positioned, the boundary of the patch image C where the boundary vertices #2 to #4 are positioned, and the boundary of the patch image D where the boundary vertices #5 to #8 are positioned are boundaries where the inside is the patch region. Furthermore, the boundary of the patch image A where the boundary vertices #5 to #8 are positioned is a boundary where the outside is the patch region.

As described above, the boundary vertex list corresponding to the boundary where the inside is the patch region (list configured by the boundary vertices positioned at the boundary and the connections between the boundary vertices) is referred to as an inclusive list. In addition, the boundary vertex list corresponding to the boundary where the outside is the patch region is referred to as an exclusive list.

As illustrated in Fig. 5, the patch (patch image) necessarily has one boundary where the inside is the patch region. On the other hand, the boundary where the outside is the patch region does not necessarily present in the patch (patch image) as in the patch images B to D. The patch image A has one boundary where the outside is the patch region, but a plurality of boundaries where the outside is the patch region may be included in one patch (patch image).

That is, as illustrated in the tenth row from the top of the table in Fig. 3, the boundary vertex list may include an inclusive list in which a region surrounded by boundary vertices forming the list and connections between the boundary vertices is included in the patch region. For example, an inclusive list may be formed one for each patch.

Furthermore, as illustrated in the eleventh row from the top of the table in Fig. 3, the boundary vertex list may further include an exclusive list in which a region surrounded by boundary vertices forming the list and connections between the boundary vertices is not included in the patch region. For example, for one patch, one or more exclusive lists may be formed in addition to a single inclusive list.

The boundary vertex list may include any information. For example, as illustrated in the seventh row from the top of the table in Fig. 3, the boundary vertex list may include identification information on each boundary vertex and position information (UV coordinates) on each boundary vertex in the geometry image. Furthermore, as illustrated in the eighth row from the top of the table in Fig. 3, the boundary vertex list may indicate the connections between the boundary vertices in the arrangement order (list order) of the boundary vertices. For example, in the boundary vertex list, each boundary vertex may be described in the order of the direction of an arrow illustrated in Fig. 5, and indicate that adjacent boundary vertices are connected to each other. That is, the inclusive list or the exclusive list may include these pieces of information.

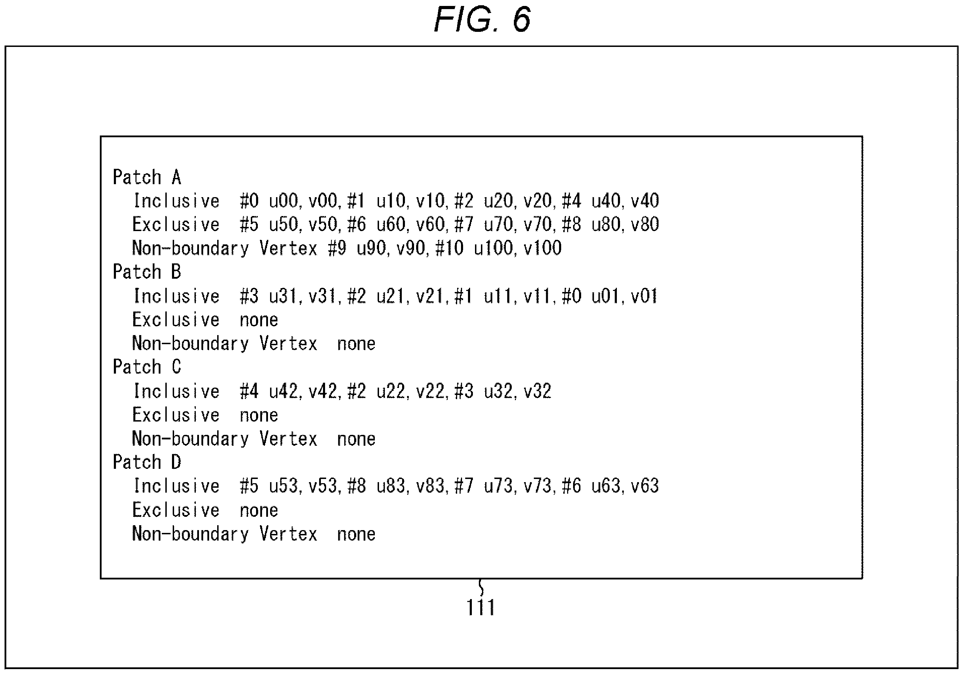

Fig. 6 illustrates an example of the vertex connection information. Vertex connection information 111 illustrated in Fig. 6 includes a boundary vertex list for each patch (patch image). In the figure, an inclusive list is shown in the row of "Inclusive," and an exclusive list is shown in the row of "Exclusive." In a case of this example, the boundary vertex list includes identification information on each boundary vertex as indicated by "# number" and the UV coordinates of each boundary vertex.

For example, in a case of the vertex connection information 111, the inclusive list of the patch image A (Patch A) includes a boundary vertex #0 (UV coordinates $(u00, v00)$), a boundary vertex #1 (UV coordinates $(u10, v10)$), a boundary vertex #2 (UV coordinates $(u20, v20)$), and a boundary vertex #4 (UV coordinates $(u40, v40)$). Then, the boundary vertex #0 and the boundary vertex #1 are connected to each other, the boundary vertex #1 and the boundary vertex #2 are connected to each other, the boundary vertex #2 and the boundary vertex #4 are connected to each other, and the boundary vertex #4 and the boundary vertex #0 are connected to each other. Furthermore, the exclusive list of the patch image A (Patch A) includes a boundary vertex #5 (UV coordinates $(u50, v50)$), a boundary vertex #6 (UV coordinates $(u60, v60)$), a boundary vertex #7 (UV coordinates $(u70, v70)$), and a boundary vertex #8 (UV coordinates $(u80, v80)$). Then, the boundary vertex #5 and the boundary vertex #6 are connected to each other, the boundary vertex #6 and the boundary vertex #7 are connected to each other, the boundary vertex #7 and the boundary vertex #8 are connected to each other, and the boundary vertex #8 and the boundary vertex #5 are connected to each other.

Similarly, the inclusive list of the patch image B (Patch B) includes a boundary vertex #3 (UV coordinates $(u31, v31)$), a boundary vertex #2 (UV coordinates $(u21, v21)$), a boundary vertex #1 (UV coordinates $(u11, v11)$), and a boundary vertex #0 (UV coordinates $(u01, v01)$). Then, the boundary vertex #3 and the boundary vertex #2 are connected to each other, the boundary vertex #2 and the boundary vertex #1 are connected to each other, the boundary vertex #1 and the boundary vertex #0 are connected to each other, and the boundary vertex #0 and the boundary vertex #3 are connected to each other. In addition, there is no exclusive list for the patch image B (Patch B) (none).

Similarly, the inclusive list of the patch image C (Patch C) includes a boundary vertex #4 (UV coordinates $(u42, v42)$), a boundary vertex #2 (UV coordinates $(u22, v22)$), and a boundary vertex #3 (UV coordinates $(u32, v32)$). Then, the boundary vertex #4 and the boundary vertex #2 are connected to each other, the boundary vertex #2 and the boundary vertex #3 are connected to each other, and the boundary vertex #3 and the boundary vertex #4 are connected to each other. In addition, there is no exclusive list for the patch image C (Patch C) (none).

Similarly, the inclusive list of the patch image D (Patch D) includes a boundary vertex #5 (UV coordinates $(u53, v53)$), a boundary vertex #8 (UV coordinates $(u83, v83)$), a boundary vertex #7 (UV coordinates $(u73, v73)$), and a boundary vertex #6 (UV coordinates $(u63, v63)$). Then, the boundary vertex #5 and the boundary vertex #8 are connected to each other, the boundary vertex #8 and the boundary vertex #7 are connected to each other, the boundary vertex #7 and the boundary vertex #6 are connected to each other, and the boundary vertex #6 and the boundary vertex #5 are connected to each other. In addition, there is no exclusive list for the patch image D (Patch D) (none).

Furthermore, as illustrated in the fourth row from the top of the table in Fig. 3, the vertex connection information may further include an internal vertex list which is the list of internal vertices positioned in the patch region (portion other than the boundary). As described above, all or some of the internal vertices may be deleted. In other words, the vertex connection information may include information regarding the internal vertex. That is, for example, when only some of the internal vertices are deleted, the encoder may generate, as vertex connection information, an internal vertex list indicating information regarding such internal vertices in addition to the above-described boundary vertex list.

The internal vertex list may include any information. For example, the internal vertex list may include identification information on the internal vertex and position information on the internal vertex in the geometry image.

For example, in a case of the vertex connection information 111 illustrated in Fig. 6, an internal vertex list is shown in the row of "Non-boundary Vertex" of each patch. For example, the internal vertex list of the patch image A (Patch A) includes an internal vertex #9 (UV coordinates (u90, v90)) and an internal vertex #10 (UV coordinates (u100, v100)). Note that there is no internal vertex list (none) for the patch images B (Patch B) to D (Patch D).

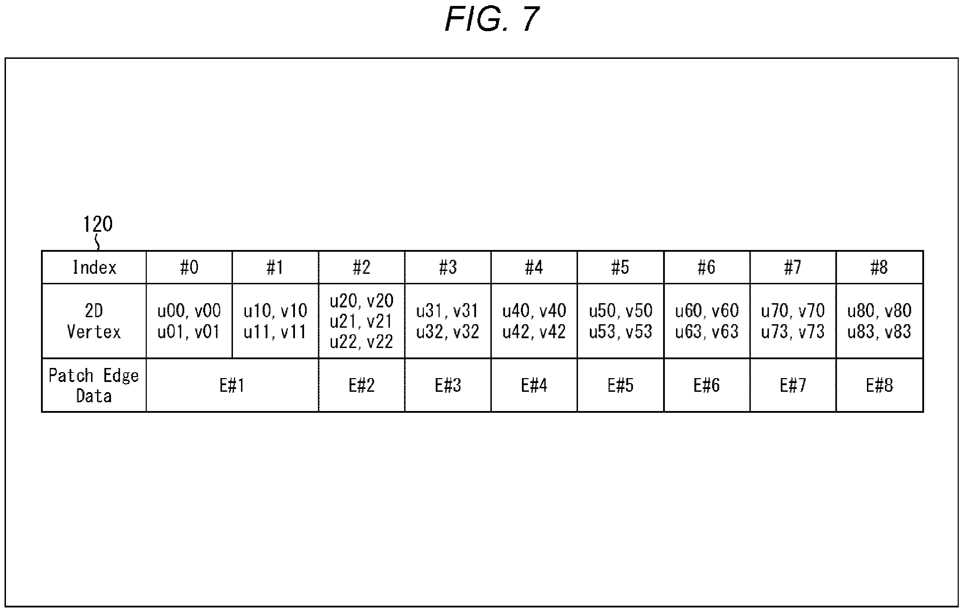

Furthermore, the boundary vertex list may include only identification information on each boundary vertex. For example, the encoder may generate a common boundary vertex list 120 as illustrated in Fig. 7 as vertex connection information, and indicate the UV coordinates of each boundary vertex in the common boundary vertex list 120.

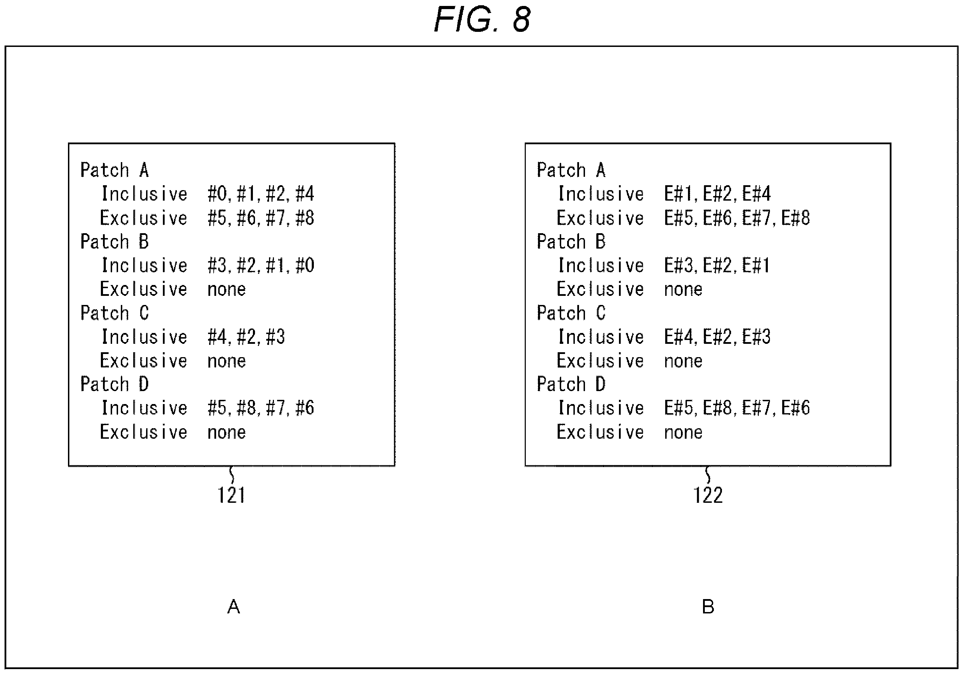

An example of the boundary vertex list included in the vertex connection information in this case is illustrated in A of Fig. 8. In the boundary vertex list 121 illustrated in A of Fig. 8, an inclusive list and an exclusive list include identification information on the boundary vertex. Note that also in this case, as in the example of Fig. 6, the connections between the boundary vertices is indicated in the description order of each boundary vertex.

Furthermore, the boundary vertex list may include identification information on edges. For example, in the common boundary vertex list 120 of Fig. 7, identification information (E#l, E#2, E#3, E#4, E#5, E#6, E#7, and E#8) of edges configured by boundaries of patches (boundary vertices and connections between the boundary vertices) may be indicated, and a boundary list may be formed using the identification information on the edges. B of Fig. 8 illustrates an example of the boundary vertex list in this case. In a boundary vertex list 122 illustrated in B of Fig. 8, an inclusive list and an exclusive list include not identification information on the boundary vertex, but identification information on edges.

For example, in a case of the boundary vertex list 122, the inclusive list of the patch image A (Patch A) includes an edge E#1, an edge E#2, and an edge E#4. Furthermore, the exclusive list of the patch image A (Patch A) includes an edge E#5, an edge E#6, an edge E#7, and an edge E#8.

Similarly, the inclusive list of the patch image B (Patch B) includes an edge E#3, an edge E#2, and an edge E#1. In addition, there is no exclusive list for the patch image B (Patch B) (none).

Similarly, the inclusive list of the patch image C (Patch C) includes an edge E#4, an edge E#2, and an edge E#3. In addition, there is no exclusive list for the patch image C (Patch C) (none).

Similarly, the inclusive list of the patch image D (Patch D) includes an edge E#5, an edge E#8, an edge E#7, and an edge E#6. In addition, there is no exclusive list for the patch image D (Patch D) (none).

As illustrated in the fifth row from the top of the table in Fig. 3, the vertex connection information may further include pair information indicating a boundary vertex correspondence between patches. For example, a patch image as illustrated in Fig. 5 is obtained by dividing 3D data of a mesh into patches and projecting the patches on a two-dimensional plane as described above. Therefore, in the 3D data, one vertex or overlapping point (a plurality of vertices having the same position) may be expressed as a plurality of vertices.

For example, Fig. 5 illustrates that boundary vertices to which the same identification information is assigned is one vertex (or overlapping point) in the 3D data. That is, the boundary vertex #0 of the patch image A and the boundary vertex #0 of the patch image B are one vertex (or overlapping point) in the 3D data. Similarly, the boundary vertex #1 of the patch image A and the boundary vertex #1 of the patch image B are one vertex (or overlapping point) in the 3D data. The boundary vertex #2 of the patch image A, the boundary vertex #2 of the patch image B, and the boundary vertex #2 of the patch image C are one vertex (or overlapping point) in the 3D data. The boundary vertex #3 of the patch image B and the boundary vertex #3 of the patch image C are one vertex (or overlapping point) in the 3D data. The boundary vertex #4 of the patch image A and the boundary vertex #4 of the patch image C are one vertex (or overlapping point) in the 3D data. The boundary vertex #5 of the patch image A and the boundary vertex #5 of the patch image D are one vertex (or overlapping point) in the 3D data. The boundary vertex #6 of the patch image A and the boundary vertex #6 of the patch image D are one vertex (or overlapping point) in the 3D data. The boundary vertex #7 of the patch image A and the boundary vertex #7 of the patch image D are one vertex (or overlapping point) in the 3D data. The boundary vertex #8 of the patch image A and the boundary vertex #8 of the patch image D are one vertex (or overlapping point) in the 3D data. That is, when the 3D data is reconstructed, these vertices are set as one vertex (or overlapping point).

Note that in the present specification, a "pair" refers to a "set" (which may also be expressed as a "pair" or a "group") including a plurality of vertices of a patch generated from such a single vertex (or overlapping point) of a mesh. That is, the vertices forming the pair correspond to the same vertex in the mesh. In other words, the "pair information" indicating this pair is information indicating a correspondence between vertices of a plurality of patches (which vertex corresponds to which vertex). Note that the pair may include three or more vertices. That is, one vertex of the mesh may be divided into three or more patches.

Furthermore, processing of matching vertices on the basis of such pair information is also referred to as pairing processing.

The encoder may include such pair information indicating the pair in the vertex connection information. For example, as in the example of Fig. 5, the same identification information may be assigned to boundary vertices forming a pair, and UV coordinates may be indicated for each piece of identification information in the common boundary vertex list 120 illustrated in Fig. 7 to indicate that these vertices form the pair. Furthermore, edges formed by the boundary vertices forming the pair are integrated when the 3D data is reconstructed (edges are joined). Therefore, as illustrated in Fig. 7, the same identification information may be assigned to the edges.

By including such pair information in the vertex connection information, the decoder can execute the pairing processing on the basis of the pair information at the time of reconstructing the 3D data. Therefore, for example, it is possible to suppress reduction in the quality of the 3D data, such as suppressing occurrence of cracks.

<Vertex Connection Reconstruction Parameters>

As illustrated in the twelfth row from the top of the table in Fig. 3, in addition to the vertex connection information described above, the encoder may further generate a parameter (also referred to as a vertex connection reconstruction parameter) used when reconstructing vertices and connections between the vertices. That is, the vertex connection reconstruction parameter may be encoded together with the vertex connection information as meta information, and be transmitted to the decoder. Then, the decoder may reconstruct vertices and connection on the basis of the transmitted vertex connection reconstruction parameter.

The vertex connection reconstruction parameter may have any contents as long as the parameter is used for reconstruction of vertices and connection.

For example, as illustrated in the thirteenth row from the top of the table in Fig. 3, the encoder may generate, as the vertex connection reconstruction parameter, flag information (boundary_vertex_only_flag) indicating whether or not at least some of the internal vertices of the mesh have been deleted. That is, the flag information (boundary_vertex_only_flag) may be transmitted from the encoder to the decoder. Then, the decoder may determine whether or not to perform vertex reconstruction on the basis of the flag information (boundary_vertex_only_flag).

For example, when the boundary_vertex_only_flag is true (for example, "1"), it indicates that at least some of the internal vertices are deleted and the vertex connection information is generated as described above. Furthermore, when the boundary_vertex_only_flag is false (for example, "0"), it indicates that vertex connection information indicating all vertices included in the geometry image and connections between the vertices has been generated as in the related art.

That is, when the boundary_vertex_only_flag is true, the decoder reconstructs vertices and connections are not included in the transmitted vertex connection information, and generates connectivity, a UV map, vertex information, and the like including these vertices and connections. Furthermore, when the boundary_vertex_only_flag is false, the decoder generates connectivity, a UV map, connection information, and the like including only vertices and connections included in the transmitted vertex connection information.

Such flag information (boundary_vertex_only_flag) is transmitted from the encoder to the decoder, whereby the decoder can more easily and properly determine whether or not to reconstruct the vertices and connections not included in the transmitted vertex connection information on the basis of the flag information (boundary_vertex_only_flag).

Furthermore, for example, as illustrated in the fourteenth row from the top of the table in Fig. 3, the encoder may generate, as the vertex connection reconstruction parameter, information (density) regarding the density of vertices at the time of reconstruction. That is, this information (density) may be transmitted from the encoder to the decoder. Then, the decoder may reconstruct the vertices according to the information (density).

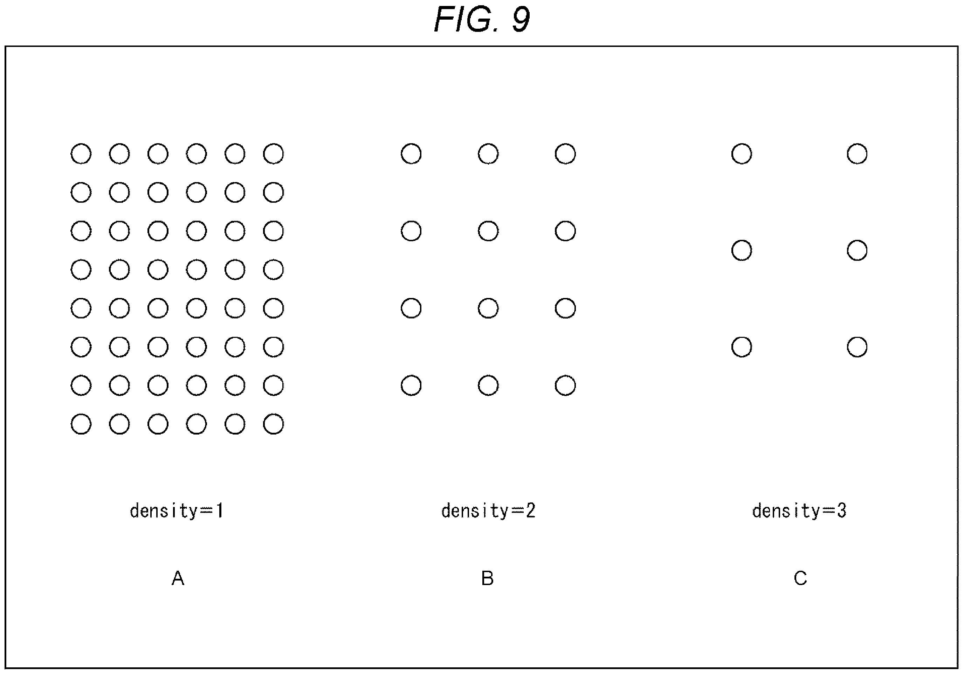

The density is a parameter indicating the density (LoD) (sampling interval) of internal vertices to be restored. For example, Fig. 9 illustrates an example of the reconstructed vertices. In Fig. 9, a white circle indicates a reconstructed vertex. A of Fig. 9 illustrates an example of reconstructed vertices when density = 1. B of Fig. 9 illustrates an example of reconstructed vertices when density = 2. C of Fig. 9 illustrates an example of reconstructed vertices when density = 3. As illustrated in such examples, density = 1 indicates the maximum density (pixel unit), and a vertex interval increases (density decreases) as the value of density increases.

The density may be set in any unit. For example, the density may be set for each patch, or may be set for each frame (for each geometry image).

When the density is transmitted from the encoder to the decoder, the decoder can reconstruct the vertices according to the density. That is, the information amount (quality) of the 3D data reconstructed by the encoder can be controlled.

Furthermore, for example, when the decoder reconstructs the vertices, the positions of the reconstructed vertices may be corrected on the basis of the geometry image (depth value). In general, the vertex of the mesh is often an extreme value (local maximum value or local minimum value) of the depth value in a surrounding region thereof. Therefore, when the vertex is generated at a position other than the extreme value of the depth value by reconstruction, the decoder may correct the position of the vertex to the extreme value of the depth value.

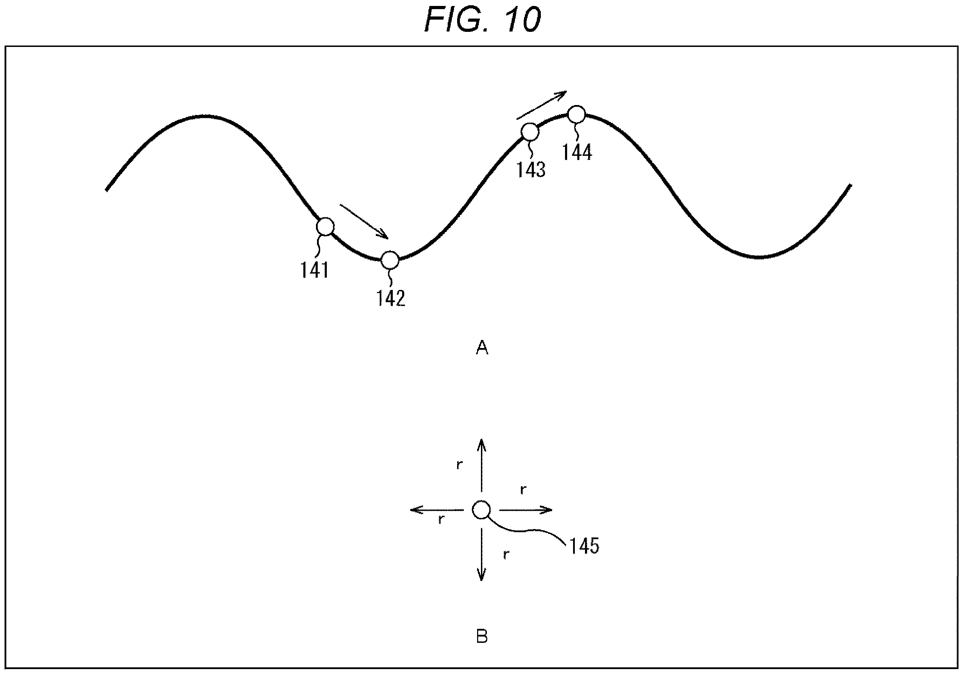

In A of Fig. 10, a curve indicates a pixel value (that is, depth value) of the geometry image. When correction is performed as described above, for example, the decoder moves the position of a vertex 141 generated by reconstruction to the position of the local minimum value of the depth value therearound (vertex 142). Similarly, the decoder moves the position of a vertex 143 generated by reconstruction to the position of the local maximum value of the depth value therearound (vertex 144).

When the decoder can perform such vertex position correction, for example, as illustrated in the fifteenth row from the top of the table in Fig. 3, the encoder may generate, as a vertex connection reconstruction parameter, flag information (refinement_enable_flag) indicating whether or not to correct the position of the vertices to be reconstructed by the decoder. That is, the flag information (refinement_enable_flag) may be transmitted from the encoder to the decoder. Then, the decoder may determine whether or not to correct the vertices on the basis of the flag information (refinement_enable_flag).

For example, when the refinement_enable_flag is true (e.g., "1"), it indicates that vertex position correction is to be executed. Furthermore, when the refinement_enable_flag is false (e.g., "0"), it indicates that vertex position correction is not to be executed. That is, the decoder executes vertex position correction when the transmitted refinement_enable_flag is true, and does not execute vertex position correction when the refinement_enable_flag is false.

In this manner, by transmitting the refinement_enable_flag from the encoder to the decoder, the encoder can control whether or not the decoder executes vertex position correction.

Furthermore, for example, as illustrated in the sixteenth row from the top of the table in Fig. 3, the encoder may generate, as the vertex connection reconstruction parameter, information (refinement_type) regarding the feature of the geometry targeted for correction of the vertices to be reconstructed by the decoder. That is, the information (refinement_type) may be transmitted from the encoder to the decoder. Then, the decoder may correct the vertices according to the information (refinement_type).

The refinement_type is a parameter for specifying the type of extreme value targeted for correction (for example, whether the refinement_type is only Local minimal (local minimum value), Local maximal (local maximum value), or both the local minimum value and the local maximum value). For example, when the value of refinement_type indicates only the local minimum value, a vertex movement destination by correction is limited to a position at which the depth value is the local minimum value. Moreover, when the value of refinement_type indicates only the local maximum value, a vertex movement destination by correction is limited to a position at which the depth value is the local maximum value. Furthermore, when the value of refinement_type indicates both the local minimum value and the local maximum value, the vertex movement destination by correction may be a position at which the depth value is the local minimum value or a position at which the depth value is the local maximum value.

By transmitting the refinement_type from the encoder to the decoder, the encoder can control the way to correct the vertex position by the decoder.

Furthermore, for example, as illustrated in the seventeenth row from the top of the table in Fig. 3, the encoder may generate, as the vertex connection reconstruction parameter, information (refinement_range) regarding a target search range of correction of the vertices to be reconstructed. That is, the information (refinement_range) may be transmitted from the encoder to the decoder. Then, the decoder may correct the vertices according to the information (refinement_range).

The refinement_range(r) is a parameter indicating a search range (extreme value search range (which is also a vertex movable range)). For example, as illustrated in B of Fig. 10, the search for the extreme value of the depth value to be the correction target of the vertex 145 is performed within the range of a distance r specified by this refinement_range. In this manner, by limiting the search range of the extreme value of the depth value, an increase in the load of the correction processing can be suppressed. Furthermore, by transmitting the refinement_range from the encoder to the decoder, the encoder can control the search range of the extreme value of the depth value in vertex position correction by the decoder.

In other words, the information (refinement_range) indicates a range in which the reconstructed vertex is movable (correctable range). Thus, by transmitting the refinement_range from the encoder to the decoder, the encoder can control the range in which the vertex position is movable by the decoder (legal range).

Furthermore, for example, as illustrated in the eighteenth row from the top of the table in Fig. 3, the encoder may generate, as the vertex connection reconstruction parameter, information (refinement_minimum_interval) regarding the minimum interval after correction of the vertices to be reconstructed. That is, the information (refinement_minimum_interval) may be transmitted from the encoder to the decoder. Then, the decoder may perform correction according to the information (refinement_minimum_interval).

The refinement_minimum_interval is a parameter indicating the minimum value (minimum interval) allowed as a corrected distance between vertices. The decoder performs vertex position correction according to this information. That is, the decoder performs correction such that the interval between the vertices does not become smaller than the distance specified by refinement_minimum_interval.

Thus, by transmitting the refinement_minimum_interval from the encoder to the decoder, the encoder can control the way to correct the vertex positions by the decoder. In other words, the encoder can control the quality of the corrected 3D data.

Furthermore, for example, as illustrated in the nineteenth row from the top of the table in Fig. 3, the encoder may generate, as the vertex connection reconstruction parameter, information (connectivity_type) regarding the way to connect the vertices to be reconstructed. That is, the information (connectivity_type) may be transmitted from the encoder to the decoder. Then, the decoder may reconstruct the connections between the vertices according to the information (connectivity_type).

The connectivity_type is information indicating the way to connect the vertices. For example, when the connectivity_type is triangle, the decoder reconstructs the connections between the vertices to form a polygon (triangle). Furthermore, when the connectivity_type is non triangle, the decoder reconstructs the connections between the vertices to form a shape other than a polygon (triangle).

Note that the connectivity_type may be set in any unit. For example, the connectivity_type may be set for each patch, or may be set for each boundary vertex.

By transmitting such connectivity_type from the encoder to the decoder, the encoder can control the way to reconstruct the connection by the decoder.

Furthermore, for example, as illustrated in the twentieth row from the top of the table in Fig. 3, the encoder may generate, as the vertex connection reconstruction parameter, information regarding a method of merging polygons formed by the vertices to be reconstructed. That is, this information may be transmitted from the encoder to the decoder. Then, the decoder may merge the polygons according to the information.

For example, as the polygon merging method (mesh reduction method), information specifying which algorithm is to be applied may be transmitted from the encoder to the decoder, and the decoder may merge polygons according to this information.

Note that this information may be set in any unit. For example, the information may be set for each patch.

By transmitting such information from the encoder to the decoder, the encoder can control the method of merging the polygons by the decoder.

<Boundary Vertex Mode Application Determination>

Note that when generating the vertex connection information as described above, the encoder may determine whether or not to apply a boundary vertex mode of deleting some of the internal vertices included in the geometry image, as illustrated in the twenty-first row from the top of the table in Fig. 3. That is, the encoder may determine whether or not to delete the internal vertices of the mesh on the basis of a predetermined condition, and when it is determined to delete the internal vertices, the boundary vertex mode may be applied and at least some of the internal vertices of the mesh may be deleted to generate the vertex connection information.

This determination condition is arbitrary. For example, as illustrated in the twenty-second row from the top of the table in Fig. 3, the encoder may compare the number of internal vertices with the number of boundary vertices, and determine whether or not to apply the boundary vertex mode (that is, whether or not to delete the internal vertices of the mesh) on the basis of the comparison result.

For example, the encoder may determine to apply the boundary vertex mode when the number of internal vertices is sufficiently greater than the number of boundary vertices (when the number of vertices can be sufficiently reduced). In other words, the encoder may determine not to apply the boundary vertex mode when the number of internal vertices is not sufficiently greater than the number of boundary vertices (when the number of vertices cannot be sufficiently reduced).

For example, when the number of boundary vertices is extremely greater than the number of internal vertices, even if the internal vertices are reduced, sufficient reduction in the information amount of the vertex connection information cannot be expected. That is, there is a possibility that the encoding efficiency cannot be sufficiently reduced. In such a case, by not applying the boundary vertex mode, the encoder can suppress an increase in the load of the encoding processing.

On the other hand, for example, when the number of internal vertices is sufficiently greater than the number of boundary vertices, it is possible to expect sufficient reduction in the information amount of the vertex connection information by reducing the internal vertices. Therefore, in such a case, by applying the boundary vertex mode, the encoder can sufficiently suppress reduction in the encoding efficiency.

Furthermore, as illustrated in the lowermost row of the table in Fig. 3, the encoder may determine whether or not to apply the boundary vertex mode (that is, whether or not to delete the internal vertices of the mesh) on the basis of the magnitude of distortion caused by deleting at least some of the internal vertices and reconstructing the internal vertices.

For example, the encoder actually deletes the internal vertices, further reconstructs the internal vertices, and determines an internal vertex difference (magnitude of distortion) before and after the processing according to a threshold. Then, when the distortion is the threshold or less, the encoder applies the boundary vertex mode. In other words, when the distortion is greater than the threshold, the encoder does not apply the boundary vertex mode. That is, the encoder applies the boundary vertex mode only when the change amount of the internal vertices by applying the boundary vertex mode is within an allowable range.

In this manner, the encoder can suppress reduction in the quality of the 3D data due to application of the boundary vertex mode.

<Vertex Connection Reconstruction Method 1>

Next, reconstruction of the vertices and the connections between the vertices by the decoder will be described. A method of reconstructing the vertices and the connection is arbitrary.

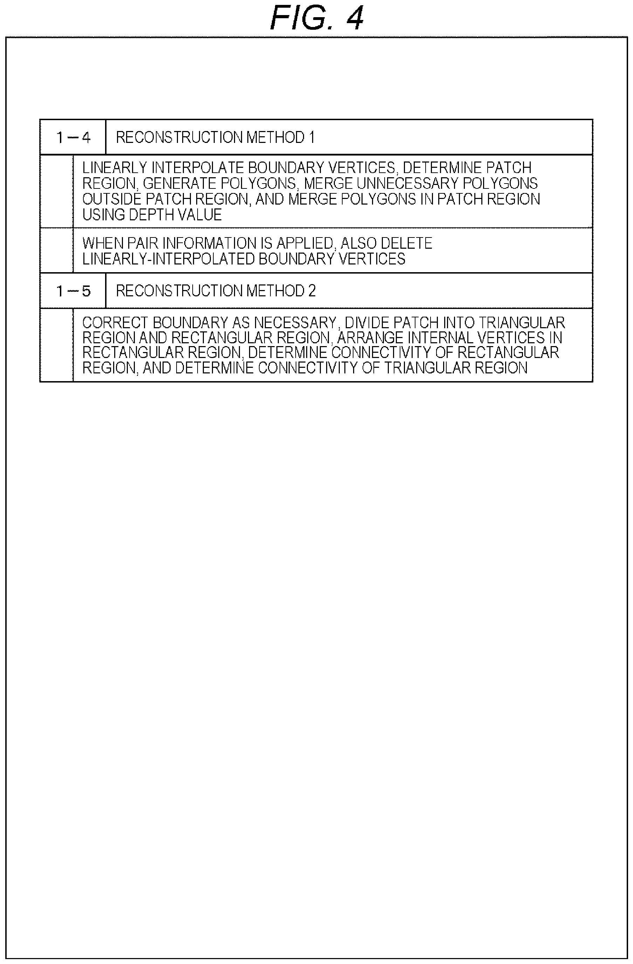

For example, as illustrated in the second row from the top of the table in Fig. 4, the decoder may linearly interpolate boundary vertices, determine a patch region which is a region included in a patch, generate polygons, merge unnecessary polygons outside the patch region, and merge polygons in the patch region on the basis of the geometry (depth value), thereby reconstructing vertices positioned in the patch and connections between the vertices.

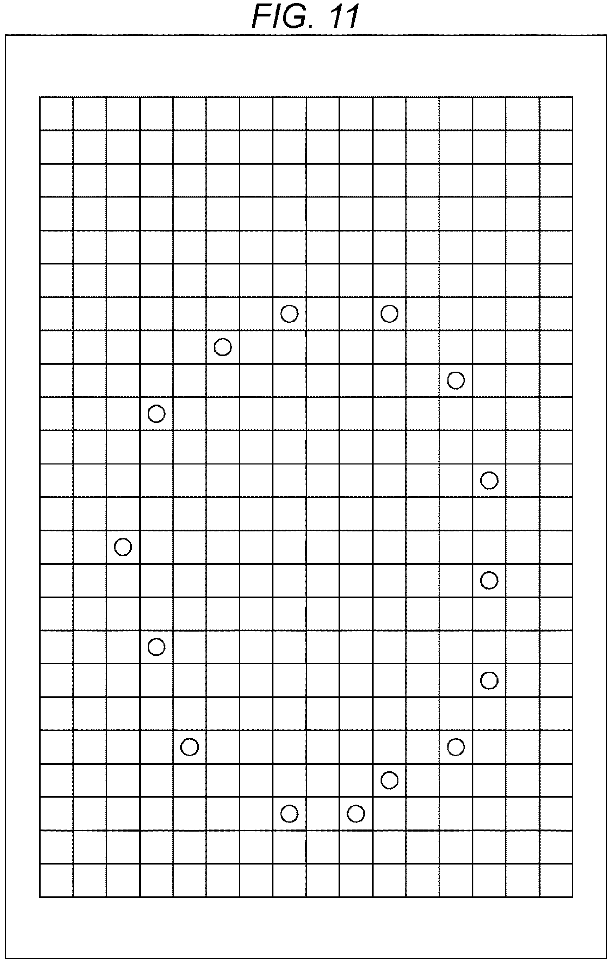

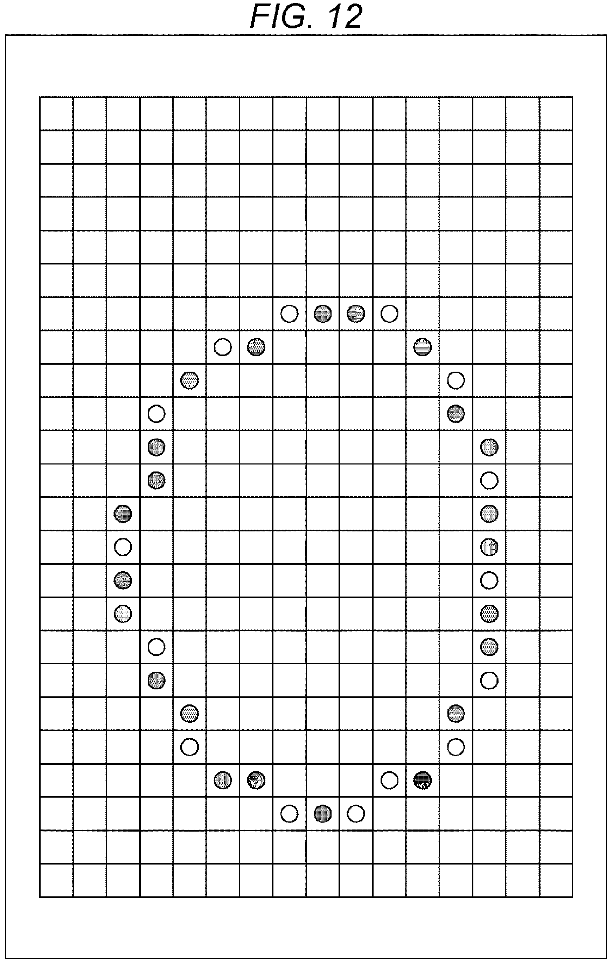

For example, it is assumed that a boundary vertex is indicated as a white circle illustrated in Fig. 11 for a certain patch by the vertex connection information transmitted from the encoder. The decoder linearly interpolates the boundary vertices as indicated by gray circles in Fig. 12. At this time, the decoder interpolates the boundary vertices at intervals based on a parameter such as the density, for example.

Then, the decoder determines the patch region on the basis of these boundary vertices. For example, when the boundary vertices illustrated in Fig. 11 are vertices forming an inclusive list, an inner region surrounded by the boundary vertices illustrated in Fig. 12 is determined to be the patch region. Furthermore, for example, when the boundary vertices illustrated in Fig. 11 are vertices forming an exclusive list, an outer region surrounded by the boundary vertices illustrated in Fig. 12 is determined to be the patch region.

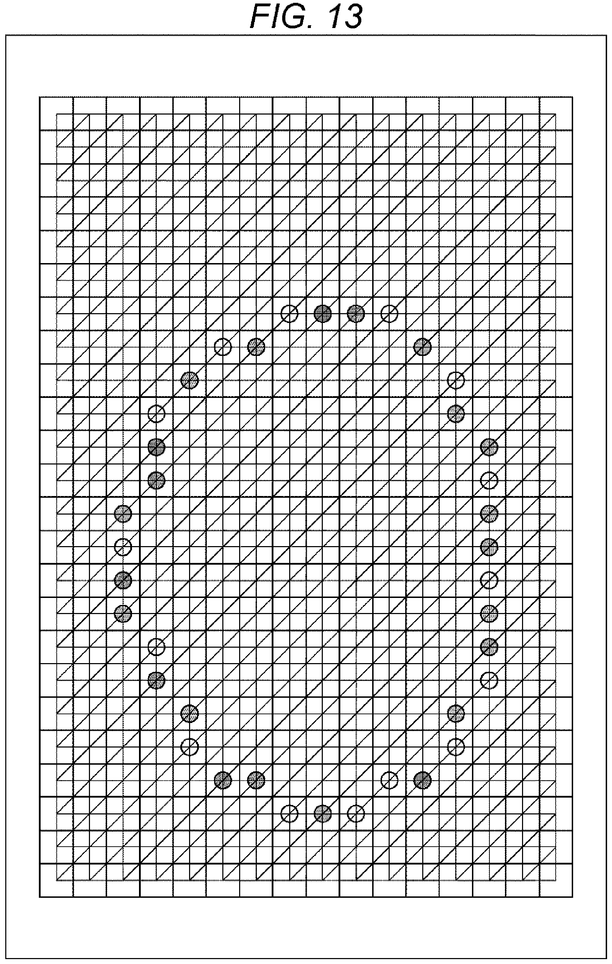

Next, the decoder generates polygons for such a processing target region, for example, as illustrated in Fig. 13. In Fig. 13, only connections forming the polygons are illustrated, and the vertices are not shown. At that time, the decoder generates the polygons so as to form the vertices at intervals based on the parameters supplied from the encoder, such as the density. For example, the decoder arranges the vertices in units of voxels, and connects the vertices (generates connectivity) according to a predetermined rule.

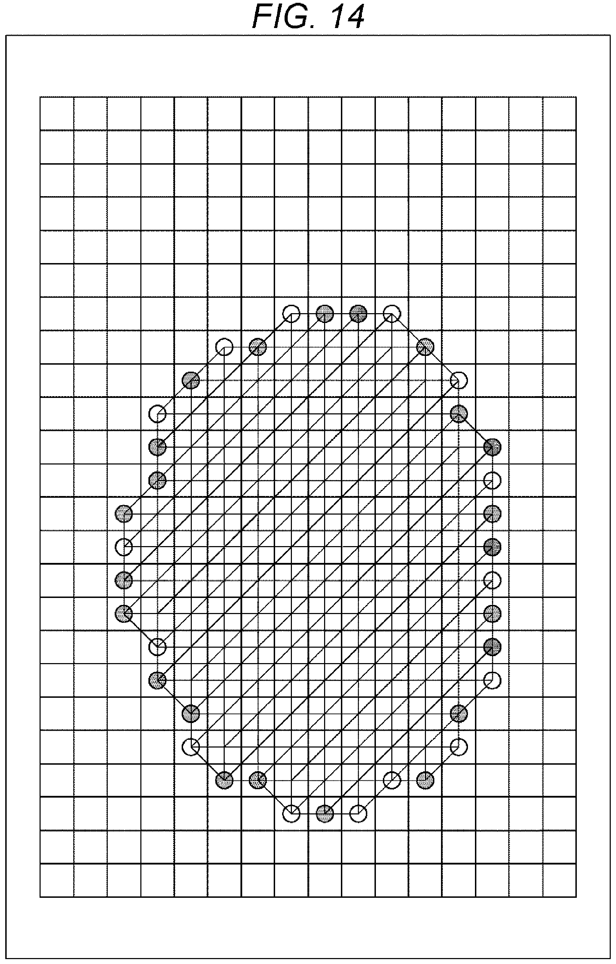

Next, as illustrated in Fig. 14, the decoder merges unnecessary polygons outside the patch region. That is, the decoder deletes the polygons (vertices and connections) outside the patch region.

Note that as illustrated in the third row from the top of the table in Fig. 4, when the pair information is applied as described above, the decoder may further delete boundary vertices (gray circles) subjected to linear interpolation. This is because the linearly-interpolated boundary vertexes do not form pairs with the boundary vertices of other patches, and thus, the pairing processing may not be correctly executed if such vertices are present. In other words, by deleting the linearly-interpolated boundary vertices, the decoder can correctly perform the pairing processing.

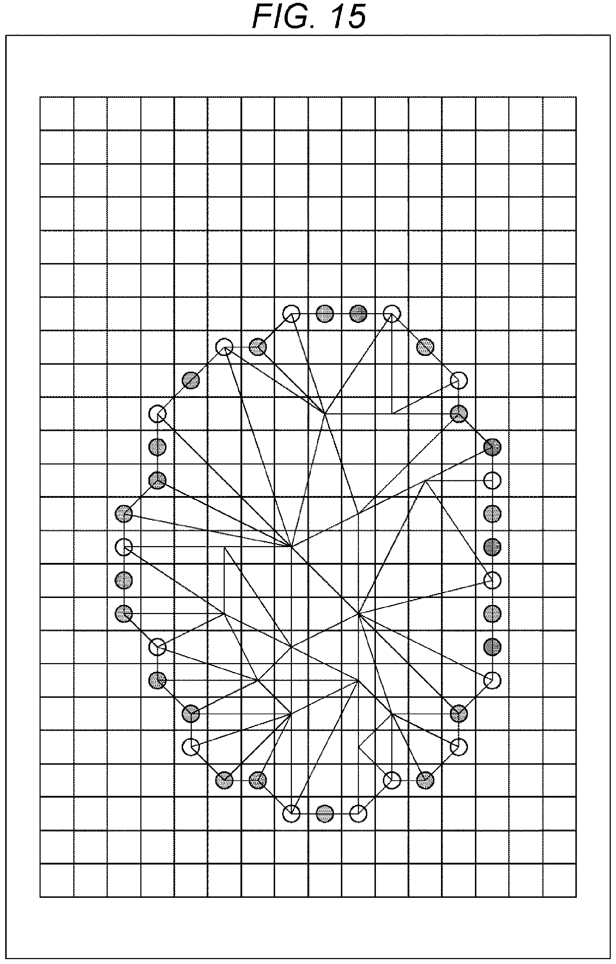

Next, as illustrated in Fig. 15, the decoder merges polygons in the patch region on the basis of the geometry (depth value). That is, the decoder performs mesh reduction using the depth value. This merging method is arbitrary. For example, the decoder may apply a method based on the parameters (polygon merging method specifying information and the like) supplied from the encoder.

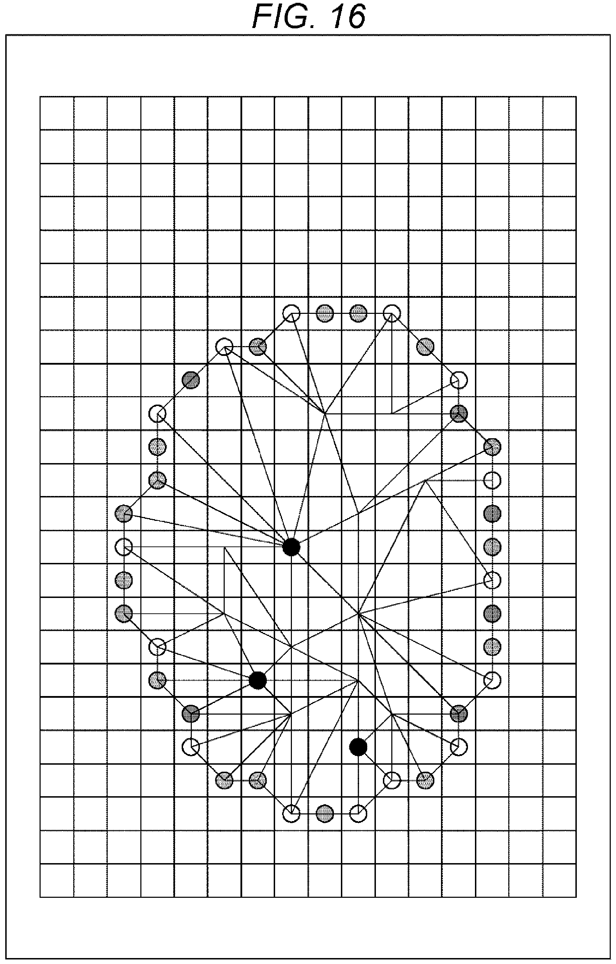

For example, the decoder may determine whether or not each polygon can be merged from the change amount of the depth value of an adjacent vertex position. Furthermore, when the internal vertex list (non boundary vertices) is present, the decoder merges the polygons in the patch region so as not to merge (delete) internal vertices (black circles in Fig. 16) included in the internal vertex list, as illustrated in Fig. 16.

Note that as described above, the decoder may correct the positions of the vertices reconstructed on the basis of, for example, the geometry (depth value). In this case, the decoder may correct the vertices on the basis of, for example, the vertex connection reconstruction parameters transmitted from the encoder.

<Vertex Connection Reconstruction Method 2>

Furthermore, for example, as illustrated in the lowermost row of the table of Fig. 4, the decoder may reconstruct the vertices positioned in the patch and the connections between the vertices by correcting the boundary of the patch as necessary, dividing the patch into a triangular region and a rectangular region, arranging the vertices in the rectangular region, determining the connections between the vertices in the rectangular region, and determining the connection (connectivity) between the vertices in the triangular region.

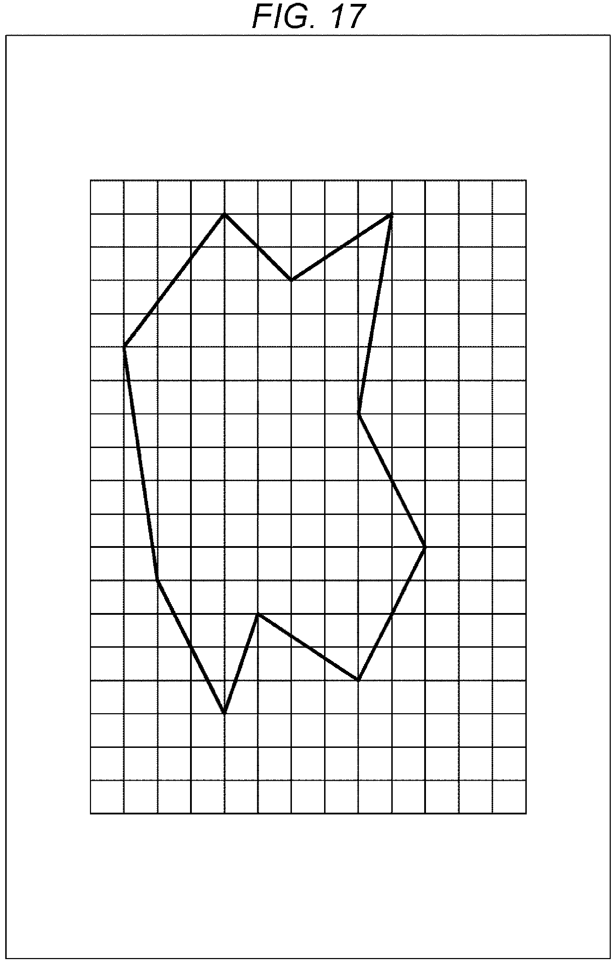

For example, it is assumed that a patch boundary is shown in Fig. 17 by the vertex connection information transmitted from the encoder. It is assumed that a (inner) region surrounded by a line in Fig. 17 is the patch region.

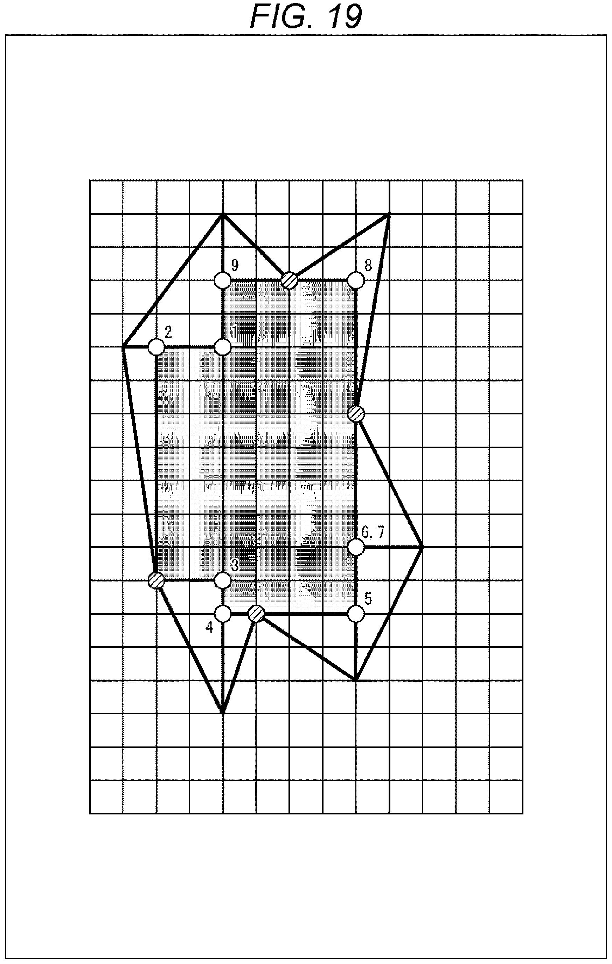

The decoder divides the patch region into a triangular region and a rectangular region. For example, the decoder sets two candidate points (x1, y2), (x2, y1) for two boundary vertices (x1, y1), (x2, y2). Then, the decoder adopts, as a point on the boundary of the rectangular region, a point inside the polygon among the candidate points. The decoder sets the point as described above, and as in an example illustrated in Fig. 19, sets a rectangular region in the patch region on the basis of the point. Then, the decoder sets triangular regions (regions formed by triangles) outside the rectangular region.

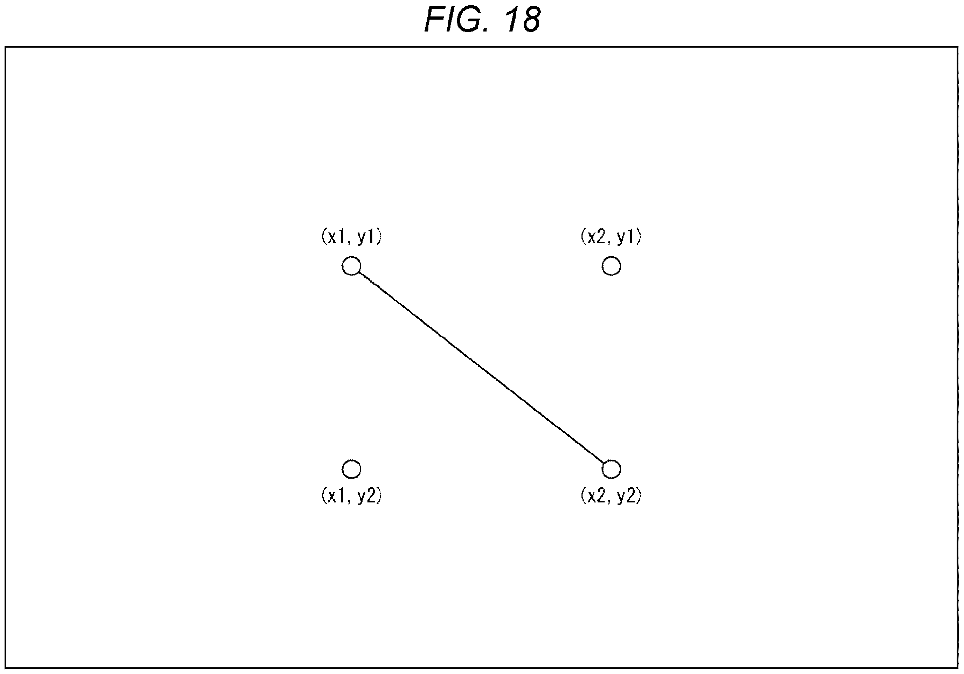

Note that in the example of Fig. 18, when both the candidate points are not inside the polygon, the decoder may perform similar determination using the previous vertices.

In such selection of the candidate points, when the point cannot be set in the polygon, the decoder may correct the shape of the boundary of the patch.

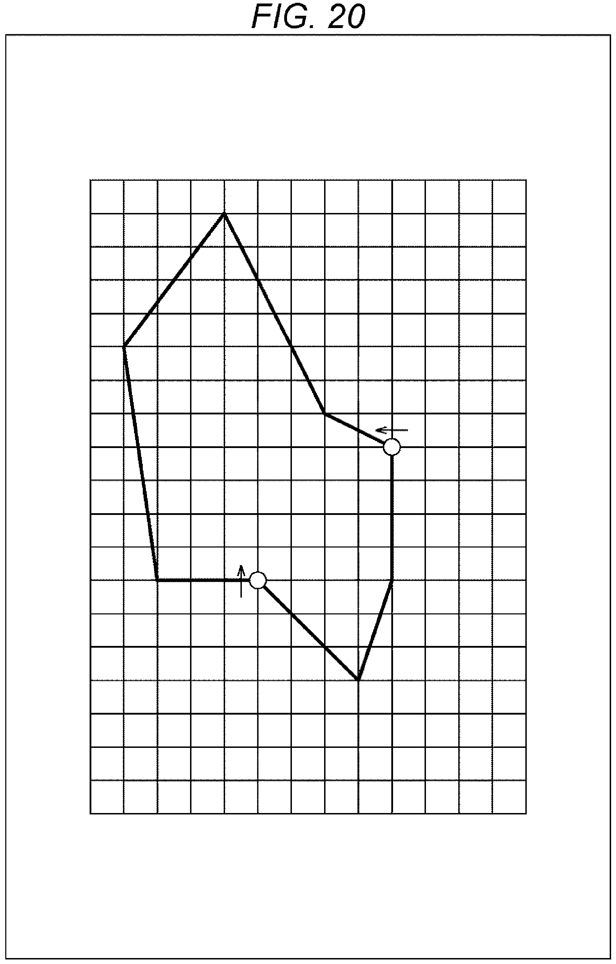

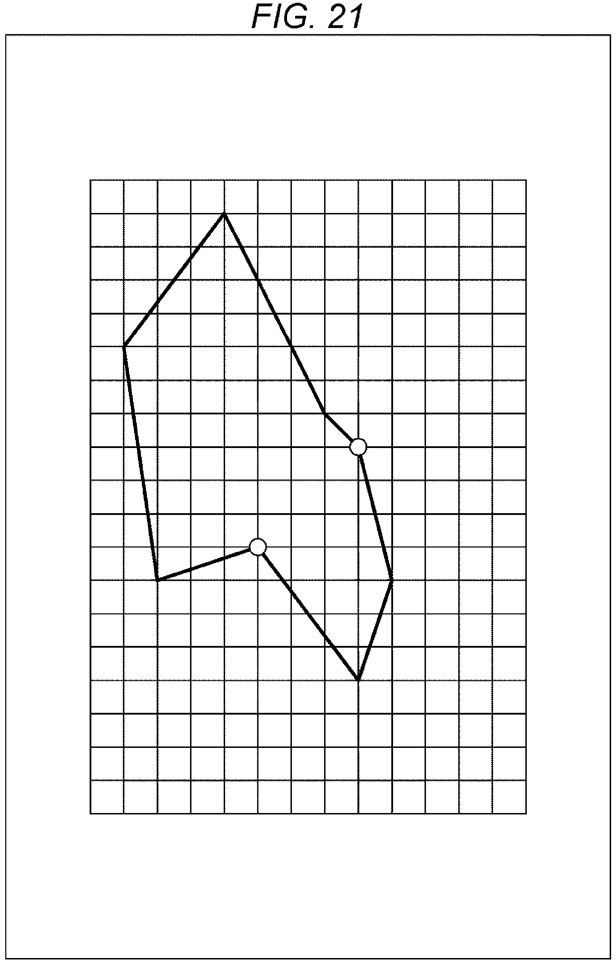

For example, the decoder may correct the shape of the boundary of the patch by moving the boundary vertices. For example, the decoder may change the shape of the boundary of the patch indicated by a thick line as illustrated in Fig. 21 by moving vertices indicated by white circles in Fig. 20 as indicated by arrows.

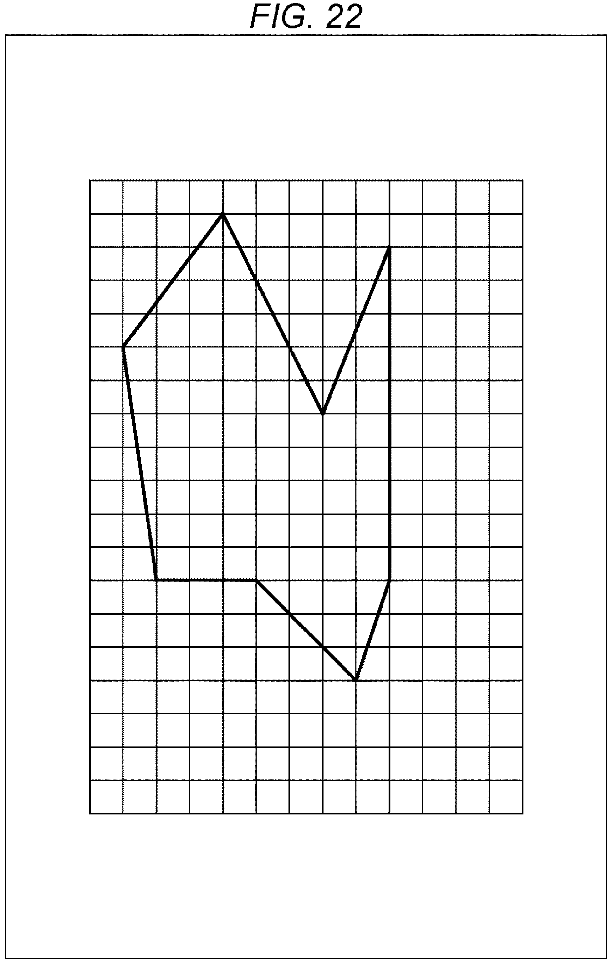

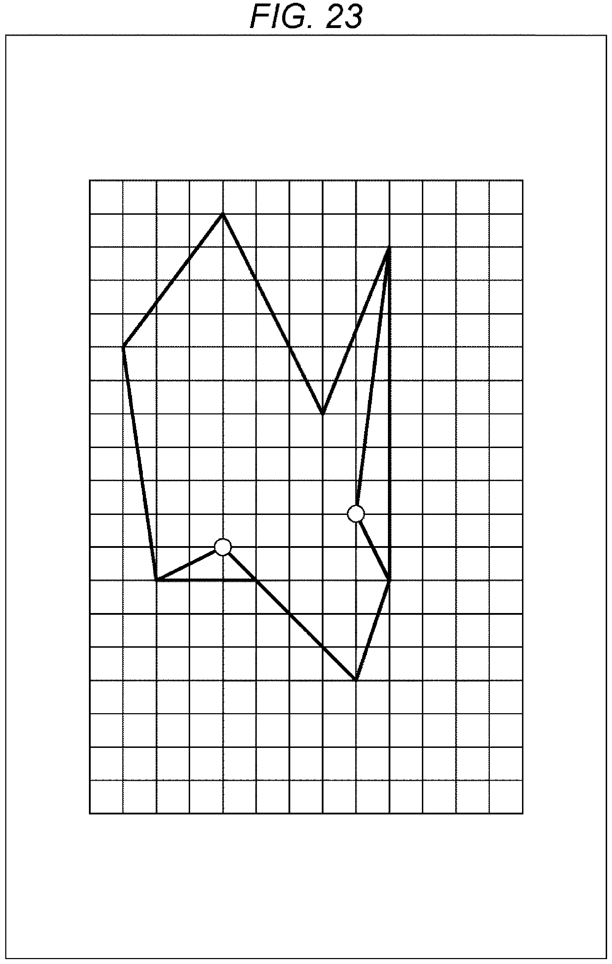

Furthermore, for example, the decoder may correct the shape of the boundary of the patch by adding vertices. For example, the decoder may change the shape of the boundary of the patch by adding vertices as indicated by white circles in Fig. 23 to a patch having a boundary shape as indicated by a thick line in Fig. 22.

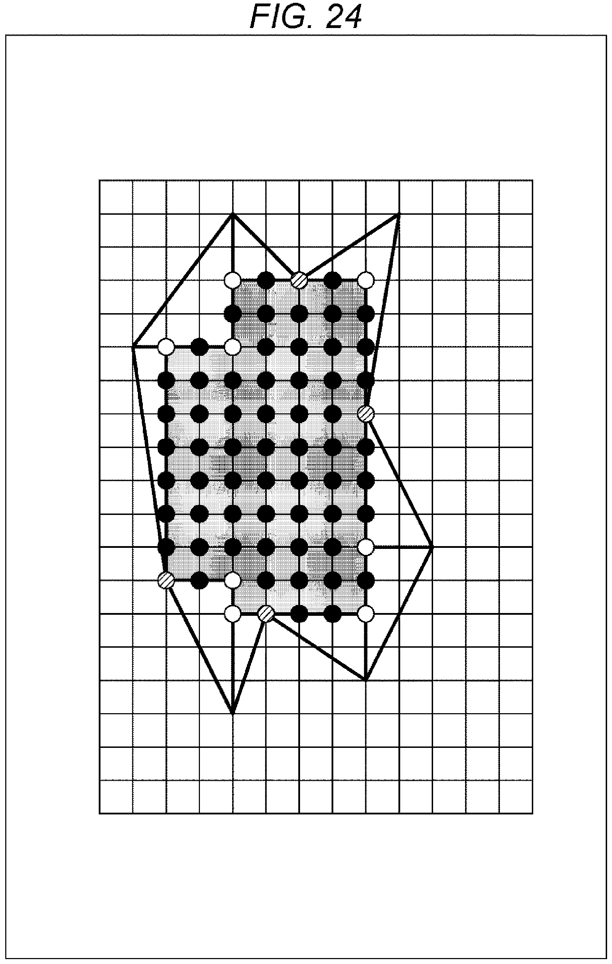

When the rectangular region is set, the decoder arranges internal vertices in the rectangular region as illustrated in Fig. 24. In Fig. 24, the internal vertices indicated by black circles indicate internal vertices reconstructed in the rectangular region. The decoder uniformly arranges the vertices at intervals according to the density (LoD), for example. However, necessary vertexes may be separately arranged. For example, for each of the vertices of the rectangle and the boundary vertices, a line may be drawn in each of u and v directions, and line intersections (in the rectangular region) and the vertices of the rectangle may be necessarily arranged.

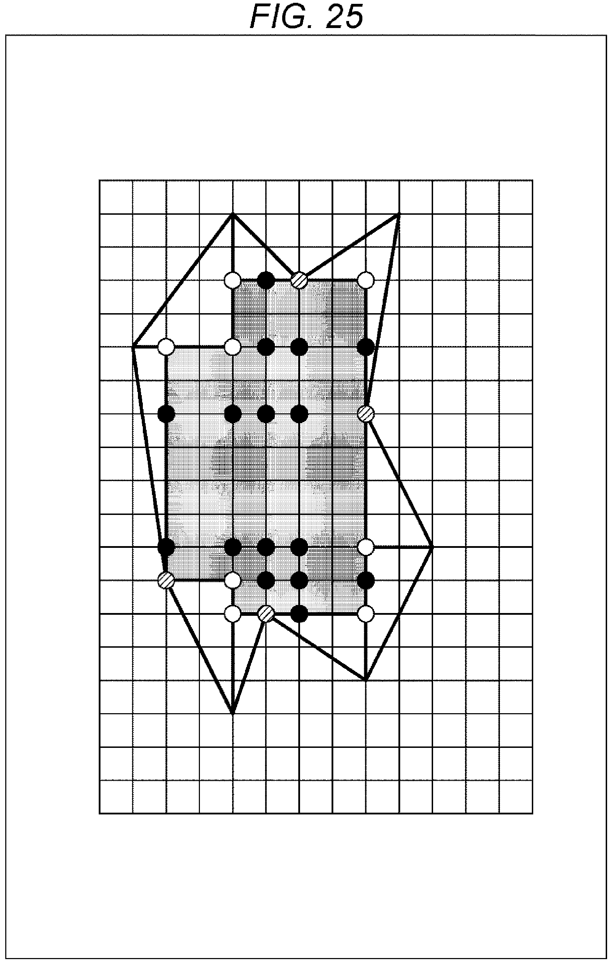

Fig. 24 illustrates an example when the vertices are arranged densely. Fig. 25 illustrates an example when the vertexes are arranged sparsely.

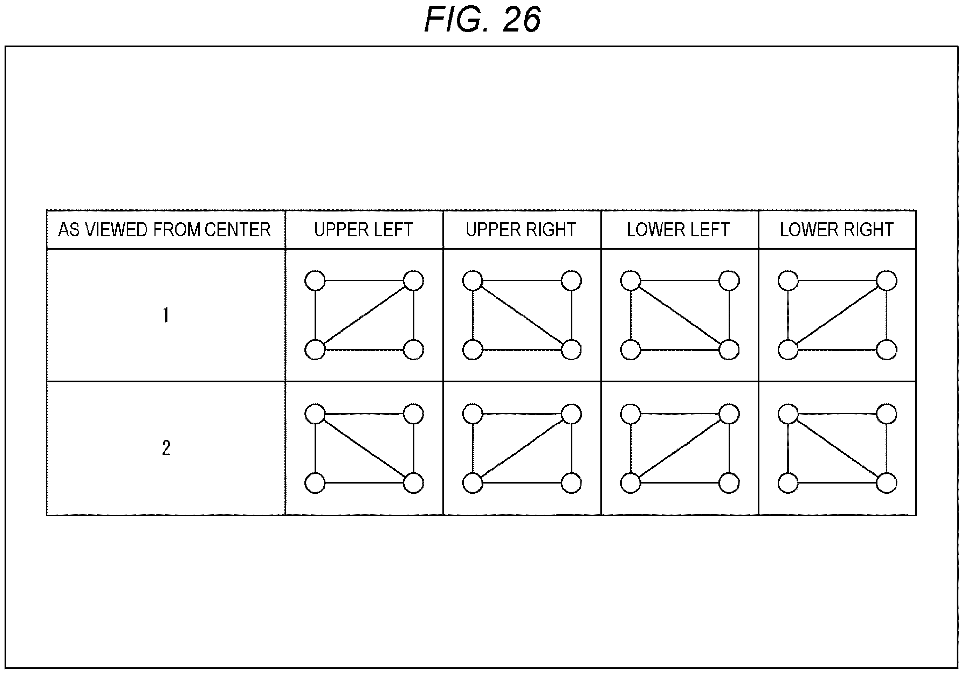

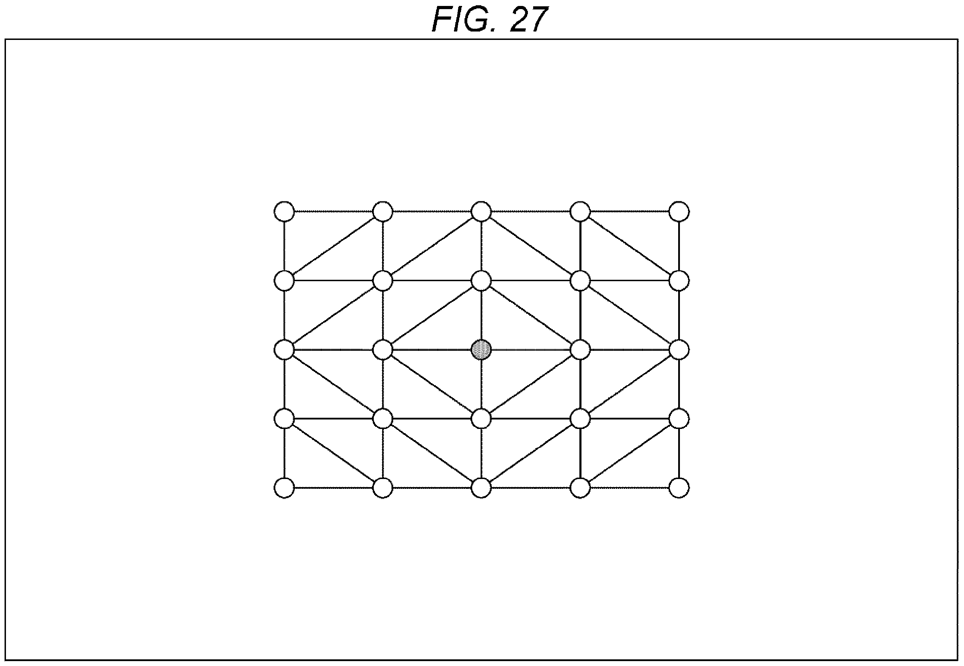

When the internal vertices are arranged, the decoder connects the internal vertices of the rectangular region in a predetermined method (pattern). The pattern of this connection is arbitrary. For example, for example, as in a table illustrated in Fig. 26, the vertices may be connected in a pattern according to a position viewed from the center (center of the UV coordinates (center of the U-axis, center of the V-axis)) of the patch image. In a case of this example, a polygon (connection) pattern is prepared for each of four regions of the upper left, upper right, lower left, and lower right of the center of the patch image. For example, in a case of Pattern 1, as in the example of Fig. 27, the connectivity is formed so as to surround the center (gray point in the figure) of the patch image. In a case of Pattern 2, the connectivity is formed so as to extend radially from the center of the patch image.

Next, the decoder sets the connectivity of the triangular region. At this time, the decoder may interpolate the vertices as necessary. A method of setting this connectivity is arbitrary.

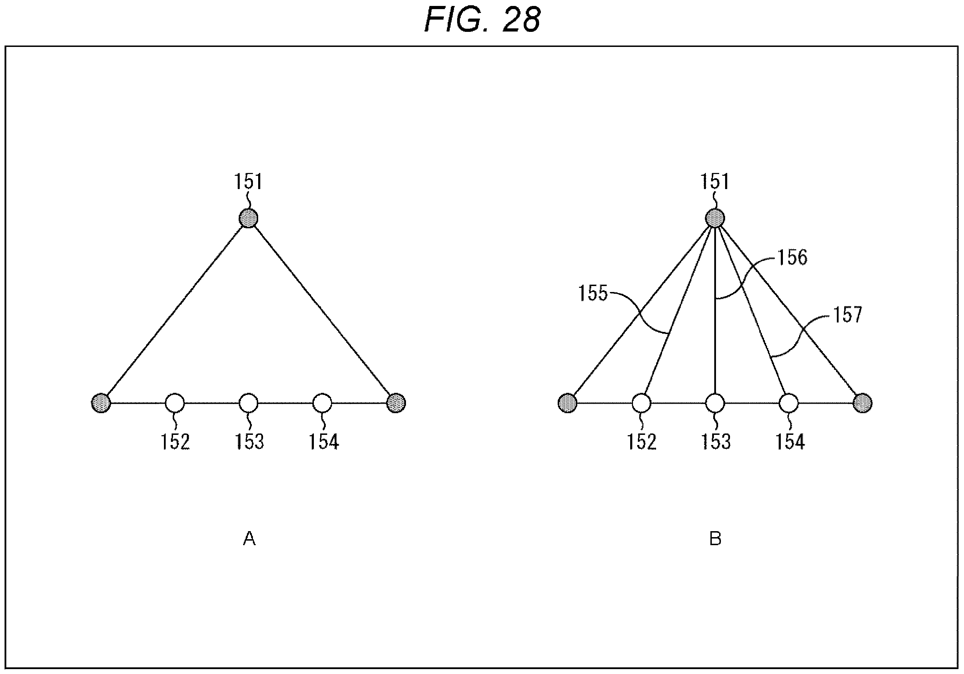

For example, it is assumed that there is a triangular region as illustrated in A of Fig. 28. The boundary of the triangular region where a vertex 152, a vertex 153, and a vertex 154 are positioned (the base of the triangular region in the figure) is a boundary in contact with the rectangular region (also referred to as a rectangular region boundary plane). In addition, a vertex (that is, vertex 151) farthest in the vertical direction from the rectangular region boundary plane of the triangular region is also referred to as a vertex of a mountain.

For such a triangular region, as illustrated in B of Fig. 28, the decoder may connect the vertices so as to connect the vertex of the mountain (vertex 151) and each vertex (vertices 152 to 154) on the rectangular region boundary plane to each other. That is, the decoder may form connections 155 to 157.

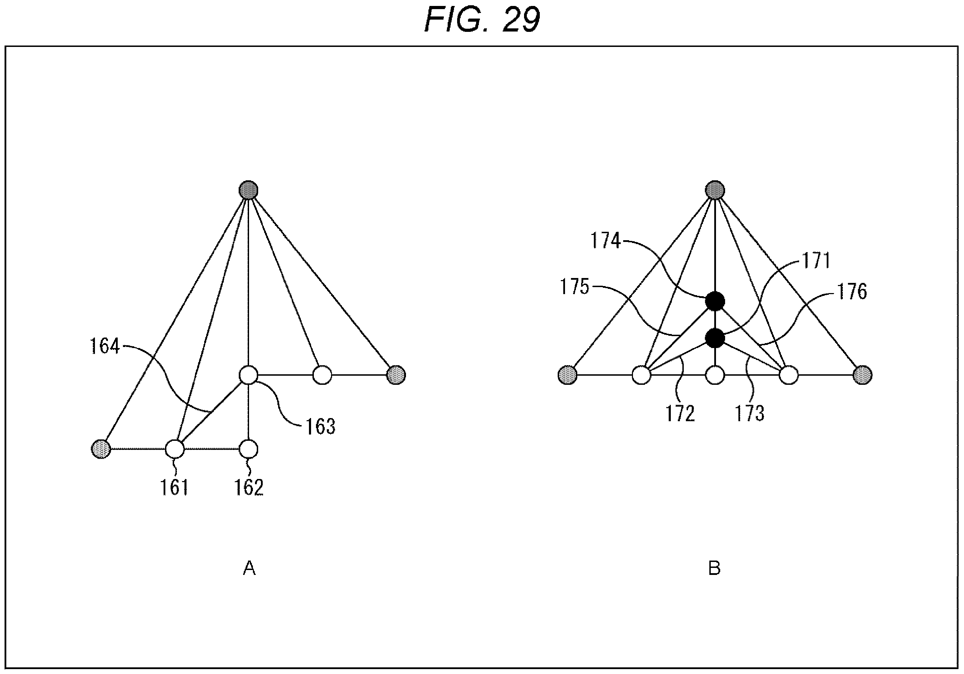

Furthermore, as illustrated in A of Fig. 29, when there is a step (portion bent at a right angle) on the rectangular region boundary plane, the decoder may add a connection so as to form a slope on the step. For example, in a case of the example of A of Fig. 29, a step is formed at vertices 161, 162, 163. For this step, the decoder forms a connection 164 connecting the vertex 161 and the vertex 163 to each other.

Moreover, as illustrated in B of Fig. 29, the decoder may add vertices (black circles in the figure) in the triangular region to form connections connecting the added vertices and the vertices on the rectangular region boundary plane. In a case of the example of B of Fig. 29, the decoder adds a vertex 171 to form connections 172, 173, and adds a vertex 174 to form connections 175, 176.

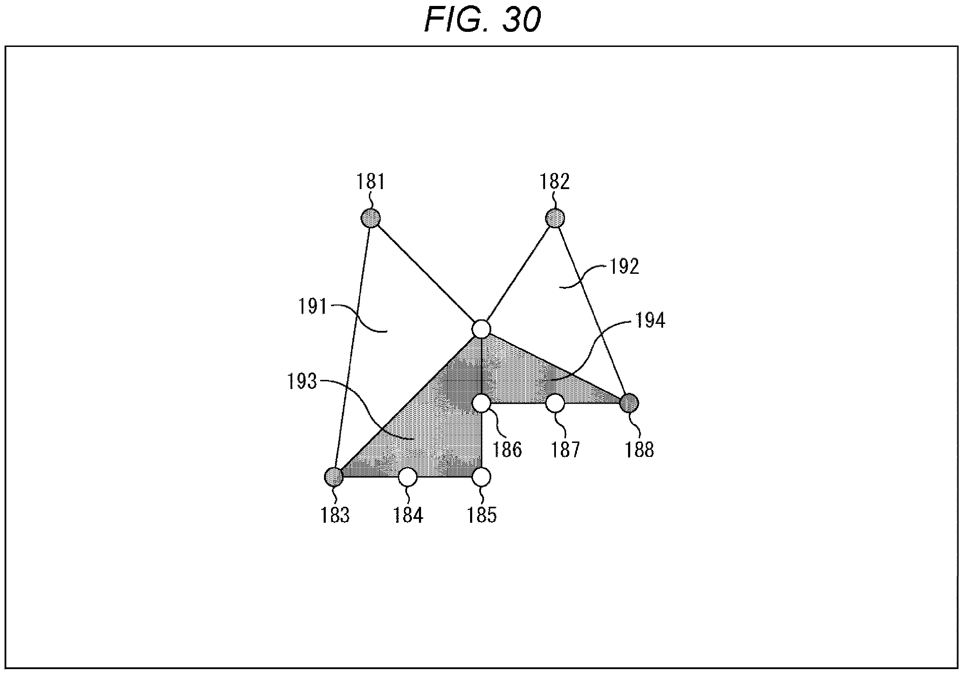

Furthermore, the decoder may add a vertex only to an internal polygon (polygon not including the vertex of the mountain) of a corner region. For example, the decoder may add a vertex and a connection only to a region indicated by gray in Fig. 30. In a case of the example illustrated in Fig. 30, vertices 181 to 188 are formed at the boundary of the triangular region, and the vertices 181, 182 form the vertices of the mountain, and the vertices 183 to 188 are positioned on the rectangular region boundary plane. Then, polygons 191 to 194 are formed by these points. In such a case, the decoder may add vertices only to the polygons 193, 194 not including the vertices of the mountain.

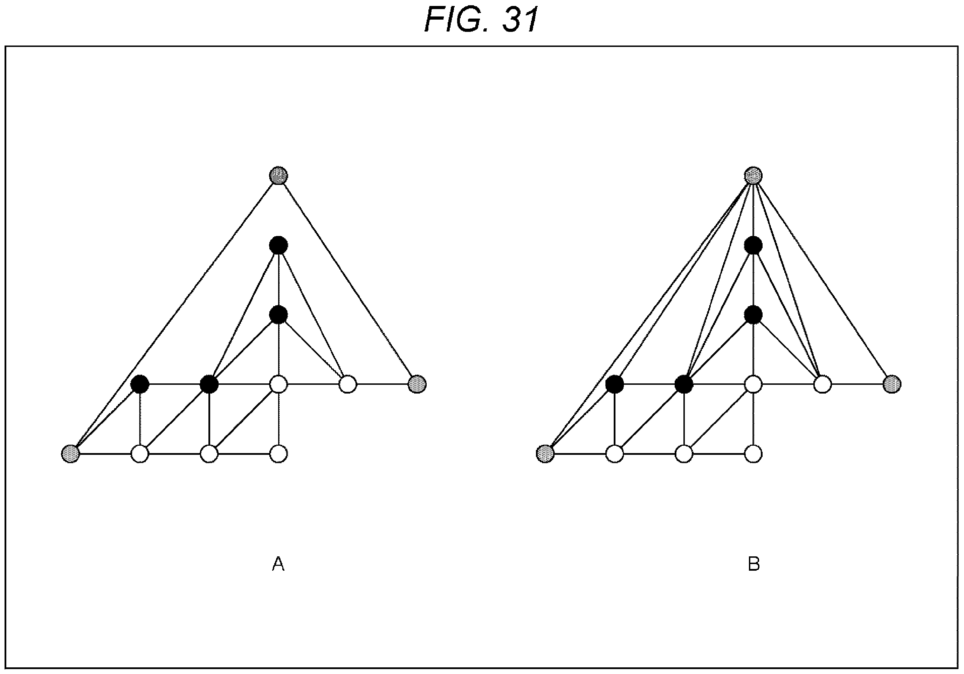

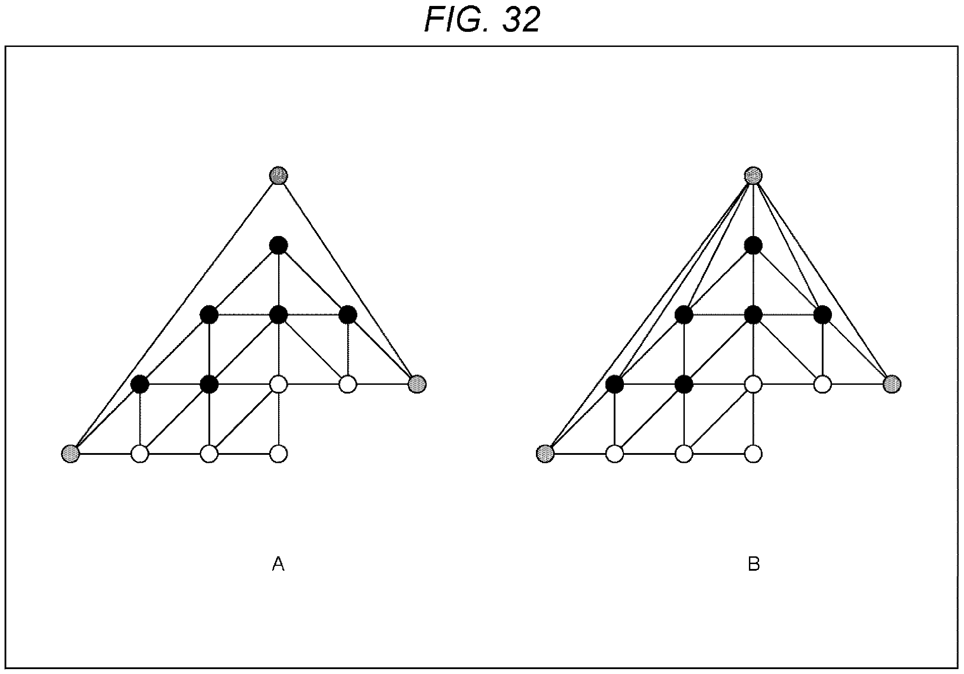

Furthermore, the decoder may connect vertices other than the vertices of the mountain to form a connection as in the example illustrated in A of Fig. 31 or A of Fig. 32. For example, a connection may be formed so as to connect the added vertex and the vertex on the rectangular region boundary plane. Moreover, as in the example illustrated in B of Fig. 31 or B of Fig. 32, a connection connecting the vertex of the mountain and another vertex may be further added.

<3. First Embodiment>

<Encoding Device>

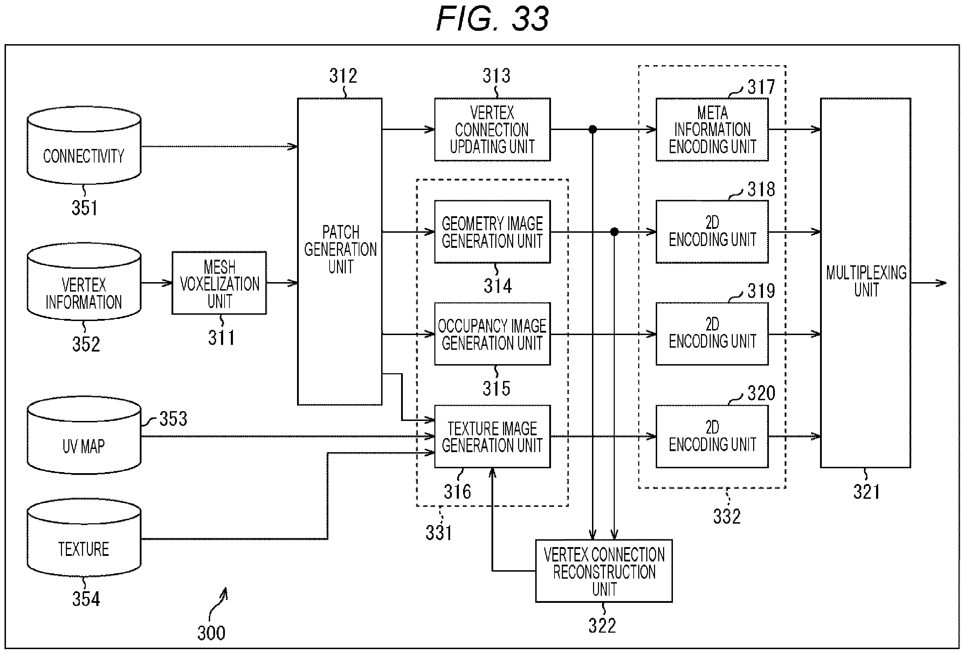

The present technology described above can be applied to any device. For example, the present technology can be applied to an encoding device 300 as illustrated in Fig. 33. Fig. 33 is a block diagram illustrating an example of a configuration of an encoding device which is an embodiment of an information processing device to which the present technology is applied. The encoding device 300 illustrated in Fig. 33 is a device that extends VPCC and encodes 3D data using Mesh as a video frame by an encoding method for two-dimensional images. At that time, the encoding device 300 performs encoding by applying a single method or a combination of a plurality of methods among the above-described various methods of the present technology.

Note that Fig. 33 illustrates a main configuration including processing units, data flows, and the like, and the processing units and data flows illustrated in Fig. 33 are not necessarily all. That is, in the encoding device 300, there may be a processing unit not illustrated as a block in Fig. 33, or there may be processing or a data flow not illustrated as an arrow or the like in Fig. 33.

As illustrated in Fig. 33, the encoding device 300 includes a mesh voxelization unit 311, a patch generation unit 312, a vertex connection updating unit 313, a geometry image generation unit 314, an occupancy image generation unit 315, a texture image generation unit 316, a meta information encoding unit 317, a 2D encoding unit 318, a 2D encoding unit 319, a 2D encoding unit 320, a multiplexing unit 321, and a vertex connection reconstruction unit 322. The geometry image generation unit 314, the occupancy image generation unit 315, and the texture image generation unit 316 may be regarded as an image generation unit 331 in the present disclosure. Furthermore, the meta information encoding unit 317, the 2D encoding unit 318, the 2D encoding unit 319, and the 2D encoding unit 320 may be regarded as an encoding unit 332 in the present disclosure.

Connectivity 351, vertex information 352, a UV map 353, and a texture 354 are supplied to the encoding device 300 as 3D data using the mesh.

The connectivity 351 is information similar to the connectivity 32 (Fig. 2), and indicates each vertex (each vertex connected to each other) forming a polygon for each polygon. The vertex information 352 is information similar to the vertex information 31 (Fig. 2) and indicates the coordinates of each vertex forming the mesh. The UV map 353 is information similar to the UV map 34 (Fig. 2) and indicates the position of each vertex on the texture image. The texture 354 is information similar to the texture image 33 (Fig. 2) and indicates the texture to be pasted on the polygon. That is, the texture 354 is information including a texture image.

The mesh voxelization unit 311 acquires the vertex information 352 supplied to the encoding device 300. The mesh voxelization unit 311 converts the coordinates of each vertex included in the acquired vertex information 352 into a voxel grid. The mesh voxelization unit 311 supplies the vertex information 352 of the voxel grid after the conversion to the patch generation unit 312.

The patch generation unit 312 acquires the connectivity 351 supplied to the encoding device 300. In addition, the patch generation unit 312 acquires the vertex information 352 of the voxel grid supplied from the mesh voxelization unit 311. The patch generation unit 312 generates a patch of geometry on the basis of the information. In addition, the patch generation unit 312 projects a patch of the generated geometry onto the projection plane to generate a patch image.

The patch generation unit 312 supplies information such as the generated patch image, the connectivity 351, and the vertex information 352 to the vertex connection updating unit 313. Furthermore, the patch generation unit 312 supplies the generated patch image to the geometry image generation unit 314. Furthermore, the patch generation unit 312 also supplies the generated patch image to the occupancy image generation unit 315. Moreover, the patch generation unit 312 supplies the generated patch image to the texture image generation unit 316.

The vertex connection updating unit 313 acquires information such as the patch image supplied from the patch generation unit 312, the connectivity 351, and the vertex information 352.

The vertex connection updating unit 313 generates the vertex connection information on the basis of these pieces of information. At this time, the vertex connection updating unit 313 generates the vertex connection information by applying the present technology described in the sections (including the sections of <Vertex Connection Information> to <Boundary Vertex Mode Application Determination>) of <2. Transmission of Vertex Connection Information>, or the like. That is, the vertex connection updating unit 313 deletes at least some of the internal vertices among the vertices of the mesh included in the geometry image, and generates the vertex connection information on the remaining vertices (including at least the boundary vertices). Therefore, the vertex connection information including the information as described above in the section of <Vertex Connection Information> is generated.

Furthermore, the vertex connection updating unit 313 may generate the vertex connection reconstruction parameter used when reconstructing the vertices and the connections between the vertices as described above in the section of <Vertex Connection Reconstruction Parameter>.

Note that the vertex connection updating unit 313 may determine whether or not to apply the boundary vertex mode as described above in the section of <Boundary Vertex Mode Application Determination>, and generate the vertex connection information as described above only when the boundary vertex mode is applied. When the boundary vertex mode is not applied, the vertex connection updating unit 313 generates the vertex connection information on the vertices of all meshes included in the geometry image.

The vertex connection updating unit 313 supplies the generated vertex connection information and the vertex connection reconstruction parameter to the meta information encoding unit 317 as meta information. Furthermore, the vertex connection updating unit 313 supplies the generated vertex connection information to the vertex connection reconstruction unit 322. Note that the vertex connection updating unit 313 may supply the generated vertex connection reconstruction parameter to the vertex connection reconstruction unit 322.

The image generation unit 331 performs processing related to generation of an image (frame image). The geometry image generation unit 314 acquires the patch image supplied from the patch generation unit 312. The geometry image generation unit 314 arranges the patch image on a two-dimensional plane to generate a geometry image. The geometry image generation unit 314 supplies the 2D encoding unit 318 with the geometry video frame. Furthermore, the geometry image generation unit 314 supplies the generated geometry image to the vertex connection reconstruction unit 322.

The occupancy image generation unit 315 acquires the patch image supplied from the patch generation unit 312. The occupancy image generation unit 315 generates an occupancy image using the patch image. The occupancy image generation unit 315 supplies the generated occupancy image to the 2D encoding unit 319.

The texture image generation unit 316 acquires the patch image supplied from the patch generation unit 312. Furthermore, the texture image generation unit 316 acquires information regarding the reconstructed vertices and connection supplied from the vertex connection reconstruction unit 322. The texture image generation unit 316 further acquires the UV map 353 and the texture 354. Since the geometry image is generated independently of the texture 354, the texture image and the geometry image may not match (shape, size, arrangement, and the like of the patch image are different from each other). Therefore, the texture image generation unit 316 updates the texture image (texture 354) to match the geometry image. That is, the texture image generation unit 316 updates the texture image such that the shape, size, arrangement, and the like of the patch image become the same as those of the geometry image. The texture image generation unit 316 performs such updating using the information regarding the reconstructed vertices and connection supplied from the vertex connection reconstruction unit 322 and the UV map 353. The texture image generation unit 316 supplies the generated texture image to the 2D encoding unit 320.

The encoding unit 332 performs processing related to encoding. The meta information encoding unit 317 acquires the meta information (including the vertex connection information and the vertex connection reconstruction parameter) supplied from the vertex connection updating unit 313. The meta information encoding unit 317 encodes the acquired meta information to generate coded data of the meta information. An encoding method applied to such encoding is arbitrary. The meta information encoding unit 317 supplies the coded data of the generated meta information to the multiplexing unit 321.

The 2D encoding unit 318 acquires the geometry image supplied from the geometry image generation unit 314. The 2D encoding unit 318 encodes the acquired geometry image by an encoding method for 2D images, and generates coded data of the geometry image. The 2D encoding unit 318 supplies the coded data of the generated geometry image to the multiplexing unit 321.

The 2D encoding unit 319 acquires the occupancy image supplied from the occupancy image generation unit 315. The 2D encoding unit 319 encodes the acquired occupancy image by an encoding method for 2D images, and generates coded data of the occupancy image. The 2D encoding unit 319 supplies the multiplexing unit 321 with the coded data of the generated occupancy image.

The 2D encoding unit 320 acquires the texture image supplied to the encoding device 300. The 2D encoding unit 320 encodes the acquired texture image by an encoding method for 2D images, and generates coded data of the texture image. The 2D encoding unit 320 supplies the coded data of the generated texture image to the multiplexing unit 321.

The multiplexing unit 321 acquires the coded data of the meta information supplied from the meta information encoding unit 317. Furthermore, the multiplexing unit 321 acquires the coded data of the geometry image supplied from the 2D encoding unit 318. Moreover, the multiplexing unit 321 acquires the coded data of the occupancy image supplied from the 2D encoding unit 319. Further, the multiplexing unit 321 acquires the coded data of the texture image supplied from the 2D encoding unit 320. The multiplexing unit 321 multiplexes the acquired information to generate one bitstream. The multiplexing unit 321 outputs the generated bitstream to the outside of the encoding device 300.

The vertex connection reconstruction unit 322 acquires the vertex connection information supplied from the vertex connection updating unit 313. When the vertex connection reconstruction parameter is supplied from the vertex connection updating unit 313, the vertex connection reconstruction unit 322 also acquires the vertex connection reconstruction parameter. Furthermore, the vertex connection reconstruction unit 322 acquires the geometry image supplied from the geometry image generation unit 314.

The vertex connection reconstruction unit 322 reconstructs vertices and connections not included in the vertex connection information using the geometry image. That is, the vertex connection reconstruction unit 322 adds vertices and connections to the geometry image. At this time, the vertex connection reconstruction unit 322 can apply the method described above in the section of <Vertex Connection Reconstruction Method 1> or the section of <Vertex Connection Reconstruction Method 2>. That is, the vertex connection reconstruction unit 322 reconstructs the vertices and the connections by a method similar to that of the decoder (for example, a vertex connection reconstruction unit 416 of a decoding device 400 to be described later). Note that the vertex connection reconstruction unit 322 may reconstruct the vertices and the connections in accordance with the vertex connection reconstruction parameter described in <Vertex Connection Reconstruction Parameter>. The vertex connection reconstruction unit 322 supplies the vertex connection information and information regarding the reconstructed vertices and connections to the texture image generation unit 316.

With such configuration, the encoding device 300 can reduce the number of vertices indicated by the vertex connection information, and can suppress an increase in the information amount of the vertex connection information. Therefore, the encoding device 300 can suppress reduction in the encoding efficiency due to encoding of the vertex connection information.

Note that these processing units (mesh voxelization unit 311 to vertex connection reconstruction unit 322) have an arbitrary configuration. For example, each processing unit may be configured by a logic circuit that implements the above-described processing. In addition, each processing unit may include a central processing unit (CPU), a read-only memory (ROM), a random-access memory (RAM), and the like, for example, and execute a program by using them to realize the above-described processing. Needless to say, each processing unit may have both the configurations, and a part of the above-described processing may be achieved by the logic circuit and another may be achieved by executing the program. The configurations of the processing units may be independent from each other, and, for example, among the processing units, some processing units may achieve a part of the above-described processing with a logic circuit, some other processing units may achieve the above-described processing by executing a program, and still some other processing units may achieve the above-described processing with both a logic circuit and execution of a program.

<Flow of Encoding Processing>

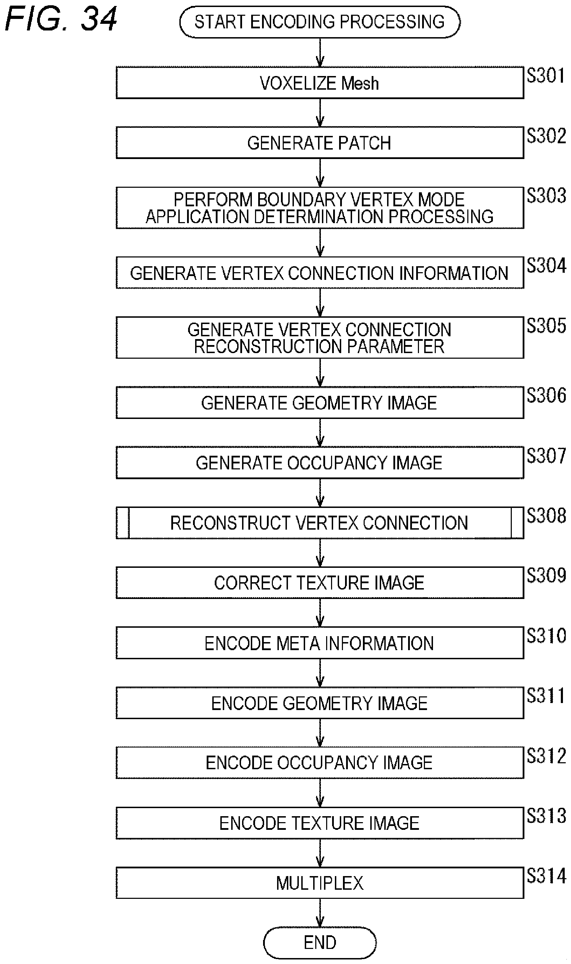

An example of the flow of an encoding processing executed by the encoding device 300 will be described with reference to a flowchart in Fig. 34.

When the encoding processing is started, in step S301, the mesh voxelization unit 311 voxelizes the coordinates of each vertex included in the vertex information 352 to voxelize the mesh.

In step S302, the patch generation unit 312 generates a patch using the vertex information 352 and the like voxelized in step S301, projects the generated patch on the projection plane, and generates a patch image.

In step S303, the vertex connection updating unit 313 performs the boundary vertex mode application determination processing by applying the present technology described in the section of <Boundary Vertex Mode Application Determination> and the like. When the boundary vertex mode is determined to be applied, the processing proceeds to step S304. Note that when the boundary vertex mode is determined not to be applied, the processing of steps S304 and S305 is omitted, and the processing proceeds to step S306.

In step S304, the vertex connection updating unit 313 generates the vertex connection information by applying the present technology described in the sections (including the sections of <Vertex Connection Information> to <Boundary Vertex Mode Application Determination>) of <2. Transmission of Vertex Connection Information>, or the like. That is, the vertex connection updating unit 313 deletes at least some of the internal vertices among the vertices of the mesh included in the geometry image, and generates the vertex connection information on the remaining vertices (including at least the boundary vertices). Therefore, the vertex connection information including the information as described above in the section of <Vertex Connection Information> is generated.

In step S305, the vertex connection updating unit 313 generates the vertex connection reconstruction parameter used when reconstructing the vertices and the connections between the vertices by applying the present technology described in the section of <Vertex Connection Reconstruction Parameter>, or the like.

In step S306, the geometry image generation unit 314 arranges the patch image generated in step S302 on a two-dimensional plane, and generates a geometry image.

In step S307, the occupancy image generation unit 315 generates an occupancy image corresponding to the geometry image generated in step S306.

In step S308, the vertex connection reconstruction unit 322 reconstructs the vertices and connections not included in the vertex connection information generated in step S304 by applying the present technology described above in the section of <Vertex Connection Reconstruction Method 1>, the section of <Vertex Connection Reconstruction Method 2>, and the like. Since this processing is similar to the processing performed in the decoder, details of this processing will be described later.

In step S309, the texture image generation unit 316 updates (corrects) the texture image such that the shape, size, arrangement, and the like of the patch image become the same as those of the geometry image.

In step S310, the meta information encoding unit 317 encodes the meta information including the vertex connection information generated in step S304 and the vertex connection reconstruction parameter generated in step S305, and generates coded data of the meta information.

In step S311, the 2D encoding unit 318 encodes the geometry image generated in step S306, and generates coded data of the geometry image.

In step S312, the 2D encoding unit 319 encodes the occupancy image generated in step S307, and generates coded data of the occupancy image.

In step S313, the 2D encoding unit 320 encodes the texture image corrected in step S309, and generates coded data of the texture image.

In step S314, the multiplexing unit 321 multiplexes the coded data of the meta information generated in step S310, the coded data of the geometry image generated in step S311, the coded data of the occupancy image generated in step S312, and the coded data of the texture image generated in step S313 to generate a bitstream. The multiplexing unit 321 outputs the generated bitstream to the outside of the encoding device 300.

When the processing of step S314 ends, the encoding processing ends.

By executing the encoding processing in this manner, the encoding device 300 can reduce the number of vertices indicated by the vertex connection information, and can suppress an increase in the information amount of the vertex connection information. Therefore, the encoding device 300 can suppress reduction in the encoding efficiency due to encoding of the vertex connection information.

<4. Second Embodiment>

<Decoding Device>

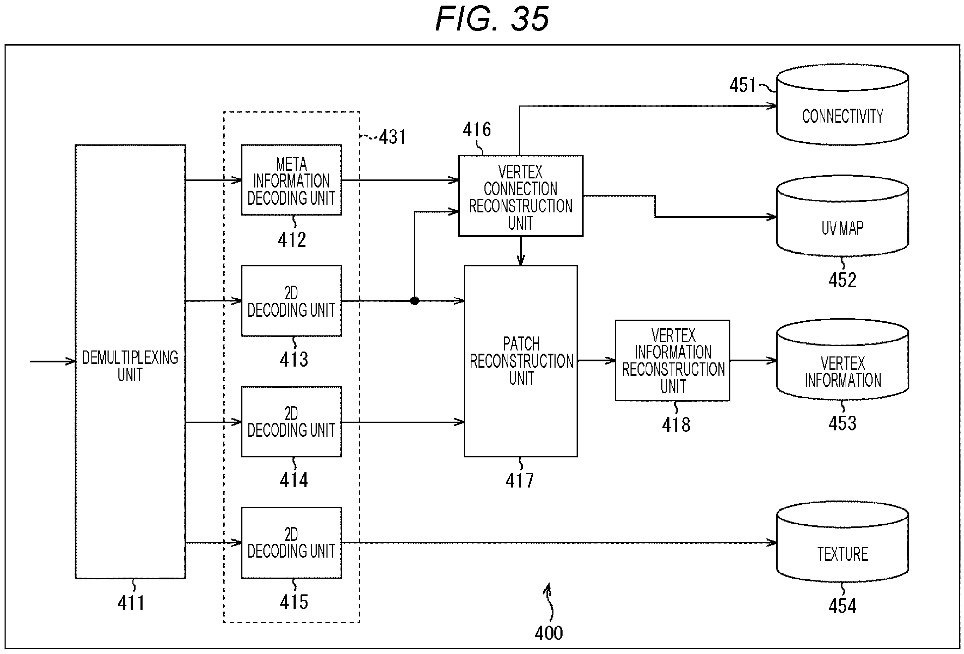

The present technology can also be applied to, for example, the decoding device 400 as illustrated in Fig. 35. Fig. 35 is a block diagram illustrating an example of a configuration of a decoding device which is an aspect of the image processing device to which the present technology is applied. The decoding device 400 illustrated in Fig. 35 is a device that extends the VPCC and decodes coded data obtained by encoding 3D data using a mesh as a video frame by an encoding method for two-dimensional images by a decoding method for two-dimensional images to generate (reconstruct) 3D data using a mesh. At that time, the decoding device 400 decodes the coded data and reconstructs the 3D data by applying a single method or a combination of a plurality of methods among the various methods of the present technology described above.

Note that Fig. 35 illustrates a main configuration including processing units, data flows, and the like, and the processing units and data flows illustrated in Fig. 35 are not necessarily all. That is, in the decoding device 400, there may be a processing unit not illustrated as a block in Fig. 35, or there may be processing or a data flow not illustrated as an arrow or the like in Fig. 35.

As illustrated in Fig. 35, the decoding device 400 includes a demultiplexing unit 411, a meta information decoding unit 412, a 2D decoding unit 413, a 2D decoding unit 414, a 2D decoding unit 415, a vertex connection reconstruction unit 416, a patch reconstruction unit 417, and a vertex information reconstruction unit 418. The meta information decoding unit 412, the 2D decoding unit 413, the 2D decoding unit 414, and the 2D decoding unit 415 may be regarded as a decoding unit 431 in the present disclosure.

The demultiplexing unit 411 acquires a bitstream input to the decoding device 400. As described above in the first embodiment, this bitstream is, for example, a bitstream generated by the encoding device 300, and 3D data using a mesh is encoded by extending the VPCC.

The demultiplexing unit 411 demultiplexes the bitstream and generates each coded data included in the bitstream. That is, the demultiplexing unit 411 extracts each coded data from the bitstream by the demultiplexing. For example, the demultiplexing unit 411 extracts the coded data of the meta information from the bitstream. Furthermore, the demultiplexing unit 411 extracts the coded data of the geometry image from the bitstream. Moreover, the demultiplexing unit 411 extracts the coded data of the occupancy image from the bitstream. Furthermore, the demultiplexing unit 411 extracts the coded data of the texture image from the bitstream.

The demultiplexing unit 411 supplies the extracted coded data to the decoding unit 431. For example, the demultiplexing unit 411 supplies the coded data of the extracted meta information to the meta information decoding unit 412. Furthermore, the demultiplexing unit 411 supplies the coded data of the extracted geometry image to the 2D decoding unit 413. Moreover, the demultiplexing unit 411 supplies the coded data of the extracted occupancy image to the 2D decoding unit 414. Furthermore, the demultiplexing unit 411 supplies the coded data of the extracted texture image to the 2D decoding unit 415.

The decoding unit 431 executes processing related to decoding. The meta information decoding unit 412 acquires the coded data of the meta information supplied from the demultiplexing unit 411. The meta information decoding unit 412 decodes the coded data of the acquired meta information to generate meta information. The meta information may include the vertex connection information and the vertex connection reconstruction parameter described above in the sections of <2. Transmission of Vertex Connection Information> (including the section of <Vertex Connection Information > and the section of <Vertex Connection Reconstruction Parameter>). Further, the meta information decoding unit 412 performs decoding by applying the decoding method corresponding to the encoding method applied when the meta information encoding unit 317 (Fig. 33) of the encoding device 300 encodes the meta information. The meta information decoding unit 412 supplies the generated meta information to the vertex connection reconstruction unit 416.

The 2D decoding unit 413 acquires the coded data of the geometry image supplied from the demultiplexing unit 411. The 2D decoding unit 413 decodes the acquired coded data of the geometry image by a decoding method for 2D images to generate a geometry image. This decoding method corresponds to the encoding method applied by the 2D encoding unit 318 (Fig. 33) of the encoding device 300 in encoding of the geometry image. The 2D decoding unit 413 supplies the generated geometry image to the vertex connection reconstruction unit 416 and the patch reconstruction unit 417.

The 2D decoding unit 414 acquires the coded data of the occupancy image supplied from the demultiplexing unit 411. The 2D decoding unit 414 decodes the obtained coded data of the occupancy image by a decoding method for 2D images to generate an occupancy image. This decoding method corresponds to the encoding method applied by the 2D encoding unit 319 (Fig. 33) of the encoding device 300 in encoding of the occupancy image. The 2D decoding unit 414 supplies the generated occupancy image to the patch reconstruction unit 417.

The 2D decoding unit 415 acquires the coded data of the texture image supplied from the demultiplexing unit 411. The 2D decoding unit 415 decodes the acquired coded data of the texture image by a decoding method for 2D images to generate a texture image (texture 454). This decoding method corresponds to the encoding method applied by the 2D encoding unit 320 (Fig. 33) of the encoding device 300 in encoding of the texture image. The 2D decoding unit 415 outputs the generated texture image (texture 454) to the outside of the decoding device 400 as (data forming) 3D data using the restored mesh.

The vertex connection reconstruction unit 416 acquires the meta information (including the vertex connection information and the vertex connection reconstruction parameter) supplied from the meta information decoding unit 412. Furthermore, the vertex connection reconstruction unit 416 acquires the geometry image supplied from the 2D decoding unit 413.

The vertex connection reconstruction unit 416 applies the present technology described above in the section of <Vertex Connection Reconstruction Method 1> and the section of <Vertex Connection Reconstruction Method 2>, and reconstructs the vertices and connections not included in the vertex connection information into the geometry image using the geometry image. That is, the vertex connection reconstruction unit 416 adds vertices and connections to the geometry image, and sets the UV coordinates of each vertex. At this time, as described in <Vertex Connection Reconstruction Parameter>, the vertex connection reconstruction unit 416 reconstructs the vertices and the connections according to the vertex connection reconstruction parameter transmitted from the encoder.

The vertex connection reconstruction unit 416 supplies the vertex connection information supplied from the encoder and the information regarding the reconstructed vertices and connections to the patch reconstruction unit 417 as information regarding the vertices and the connections. Furthermore, the vertex connection reconstruction unit 416 generates the connectivity 451 and the UV map 452 including the vertices and connections indicated in the vertex connection information supplied from the encoder and the reconstructed vertices and connections, and outputs the connectivity 451 and the UV map 452 to the outside of the decoding device 400 as (data forming) 3D data using the restored mesh.

The patch reconstruction unit 417 acquires information regarding the vertices and connections supplied from the vertex connection reconstruction unit 416. This information includes not only the vertex connection information supplied from the encoder, but also the information regarding the vertices and connections reconstructed by the vertex connection reconstruction unit 416. Furthermore, the patch reconstruction unit 417 acquires the geometry image supplied from the 2D decoding unit 413. Moreover, the patch reconstruction unit 417 acquires the occupancy image supplied from the 2D decoding unit 414. The patch reconstruction unit 417 extracts a patch image from the geometry image using the occupancy image and the information regarding the vertices and connections supplied from the vertex connection reconstruction unit 416, and reconstructs a patch corresponding to the extracted patch image. The patch reconstruction unit 417 supplies the reconstructed patch and the information regarding the vertices and the connections to the vertex information reconstruction unit 418.

The vertex information reconstruction unit 418 acquires the patch supplied from the patch reconstruction unit 417 and the information regarding the vertices and connections. The vertex information reconstruction unit 418 reconstructs the vertices included in the region of the acquired patch into a three-dimensional space (obtains the three-dimensional coordinates of each vertex), and generates vertex information 453 from the patch. The vertex information reconstruction unit 418 outputs the generated vertex information 453 to the outside of the decoding device 400 as (data constituting) 3D data using the restored mesh.

With such configuration, the decoding device 400 can reconstruct the vertices and the connection in the decoded geometry image. That is, the decoding device 400 can suppress reduction in the number of vertices of the mesh due to encoding and decoding. Therefore, the decoding device 400 can suppress reduction in the quality of the mesh due to the encoder reducing the number of vertices in the vertex connection information. Therefore, the number of vertices in the vertex connection information can be reduced in practice. In other words, the decoding device 400 can suppress reduction in encoding efficiency due to encoding of the vertex connection information.

Note that these processing units (demultiplexing unit 411 to vertex information reconstruction unit 418) have an arbitrary configuration. For example, each processing unit may be configured by a logic circuit that implements the above-described processing. Furthermore, each processing unit may have, for example, a CPU, a ROM, a RAM, and the like, and execute a program by using the CPU, the ROM, the RAM, and the like to achieve the above-described processing. Needless to say, each processing unit may have both the configurations, and a part of the above-described processing may be achieved by the logic circuit and another may be achieved by executing the program. The configurations of the processing units may be independent from each other, and, for example, among the processing units, some processing units may achieve a part of the above-described processing with a logic circuit, some other processing units may achieve the above-described processing by executing a program, and still some other processing units may achieve the above-described processing with both a logic circuit and execution of a program.

<Flow of Decoding Processing>

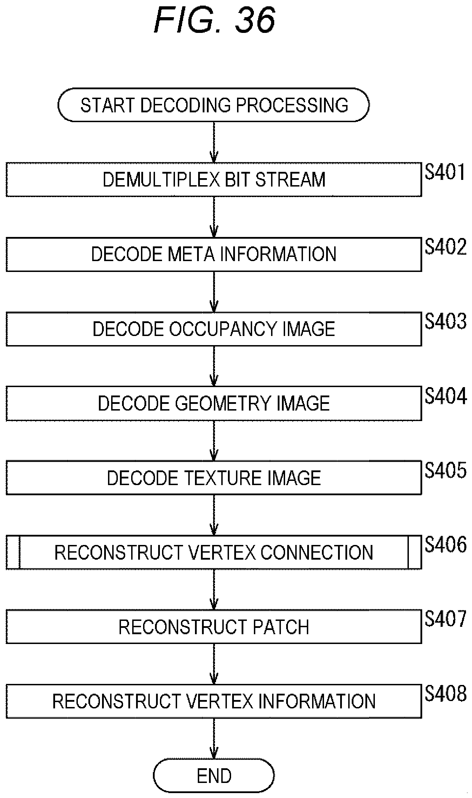

An example of the flow of decoding processing executed by this decoding device 400 will be described with reference to a flowchart of Fig. 36.

When the decoding processing is started, the demultiplexing unit 411 demultiplexes the bitstream input to the decoding device 400 in step S401. By this demultiplexing, the demultiplexing unit 411 extracts the coded data of the meta information from the bitstream. Furthermore, the demultiplexing unit 411 extracts the coded data of the geometry image from the bitstream. Moreover, the demultiplexing unit 411 extracts the coded data of the occupancy image from the bitstream. Furthermore, the demultiplexing unit 411 extracts the coded data of the texture image from the bitstream.

In step S402, the meta information decoding unit 412 decodes the coded data of the meta information extracted from the bitstream in step S401, and generates (restores) the meta information. The meta information may include the vertex connection information and the vertex connection reconstruction parameter described above in the sections of <2. Transmission of Vertex Connection Information> (including the section of <Vertex Connection Information > and the section of <Vertex Connection Reconstruction Parameter>).

In step S403, the 2D decoding unit 414 decodes the coded data of the occupancy image extracted from the bitstream in step S401, and generates (restores) the occupancy image.

In step S404, the 2D decoding unit 413 decodes the coded data of the geometry image extracted from the bitstream in step S401, and generates (restores) the geometry image.

In step S405, the 2D decoding unit 415 decodes the coded data of the texture image extracted from the bitstream in step S401, and generates (restores) the texture image (texture 454).

In step S406, the vertex connection reconstruction unit 416 reconstructs (adds) the vertices and connections not included in the vertex connection information generated (restored) in step S402 for the geometry image generated (restored) in step S404, and sets the UV coordinates of each vertex. At this time, as described in <Vertex Connection Reconstruction Parameter>, the vertex connection reconstruction unit 416 reconstructs the vertices and the connections according to the vertex connection reconstruction parameter.

In step S407, the patch reconstruction unit 417 extracts a patch image from the geometry image generated (restored) in step S404 by using the vertex connection information generated (restored) in step S402, the occupancy image generated (restored) in step S403, and the information regarding the vertices and connections reconstructed in step S406, and reconstructs a patch corresponding to the patch image into a three-dimensional space.

In step S408, the vertex information reconstruction unit 418 reconstructs the vertices included in the patch into a three-dimensional space by using the patch reconstructed in step S407, the vertex connection information generated (restored) in step S402, and the information regarding the vertices and connections reconstructed in step S406, and generates the vertex information 453.

When the processing of step S408 ends, the decoding processing ends.

<Flow 1 of Reconstruction Processing>

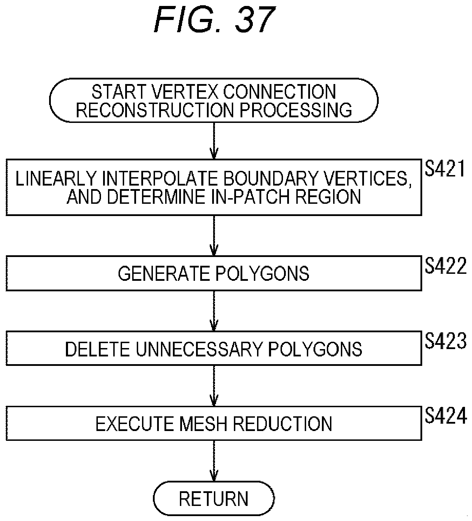

Next, an example of the flow of vertex connection reconstruction processing executed in step S406 of Fig. 36 will be described with reference to a flowchart of Fig. 37. This flowchart illustrates an example of the flow of processing when the method described above in <Vertex Connection Reconstruction Method 1> is applied.

When the vertex connection reconstruction processing is started, in step S421, the vertex connection reconstruction unit 416 linearly interpolates boundary vertices for the vertices indicated in the vertex connection information in the geometry image, and determines an in-patch region, as described with reference to, for example, Figs. 11 and 12.

In step S422, the vertex connection reconstruction unit 416 generates polygons in the geometry image, for example, as described with reference to Fig. 13.

In step S423, the vertex connection reconstruction unit 416 deletes unnecessary polygons outside the patch region, for example, as described with reference to Fig. 14.

In step S424, for example, as described with reference to Fig. 15, the vertex connection reconstruction unit 416 reduces the mesh in the patch region and merges the polygons. At this time, for example, as described with reference to Fig. 16, the vertex connection reconstruction unit 416 merges the polygons so as not to delete the internal vertices indicated in the vertex connection information.

In this manner, the vertices (boundary vertices and internal vertices) and the connections between the vertices are reconstructed (added). When step S424 ends, the processing returns to Fig. 36.

<Flow 2 of Reconstruction Processing>

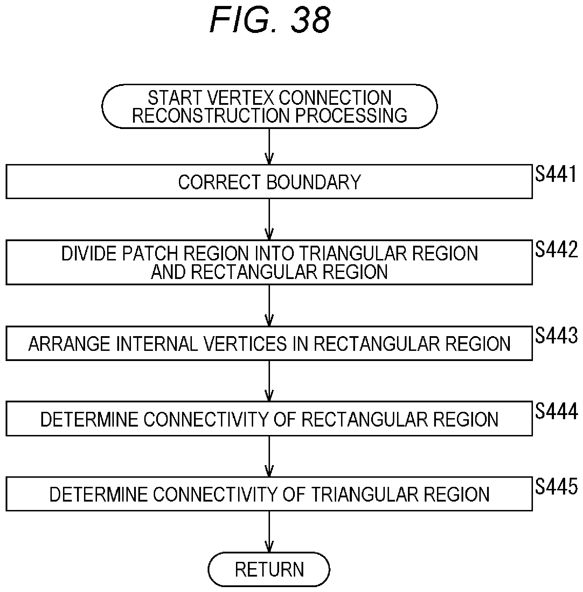

Next, another example of the flow of vertex connection reconstruction processing executed in step S406 of Fig. 36 will be described with reference to a flowchart of Fig. 38. This flowchart illustrates an example of the flow of processing when the method described above in <Vertex Connection Reconstruction Method 2> is applied.

When the vertex connection reconstruction processing is started, in step S441, the vertex connection reconstruction unit 416 corrects the boundary of the patch in the geometry image, for example, as described with reference to Figs. 20 to 23.

In step S442, the vertex connection reconstruction unit 416 divides the patch region into the triangular region and the rectangular region, for example, as described with reference to Figs. 17 to 19.

In step S443, the vertex connection reconstruction unit 416 arranges the internal vertices in the rectangular region, for example, as described with reference to Figs. 24 and 25.

In step S444, the vertex connection reconstruction unit 416 determines the connectivity of the rectangular region, for example, as described with reference to Figs. 26 and 27.

In step S445, the vertex connection reconstruction unit 416 determines the connectivity of the triangular region, for example, as described with reference to Figs. 28 to 32. At that time, the vertex connection reconstruction unit 416 may add vertices as necessary.

In this manner, the vertices (boundary vertices and internal vertices) and the connections between the vertices are reconstructed (added). When step S445 ends, the processing returns to Fig. 36.

By executing each processing as described above, the decoding device 400 can reconstruct the vertices and the connections in the decoded geometry image. That is, the decoding device 400 can suppress reduction in the number of vertices of the mesh due to encoding and decoding. Therefore, the decoding device 400 can suppress reduction in the quality of the mesh due to the encoder reducing the number of vertices in the vertex connection information. Therefore, the number of vertices in the vertex connection information can be reduced in practice. In other words, the decoding device 400 can suppress reduction in encoding efficiency due to encoding of the vertex connection information.

<5. Application Example>

<Addition of Internal Vertex>

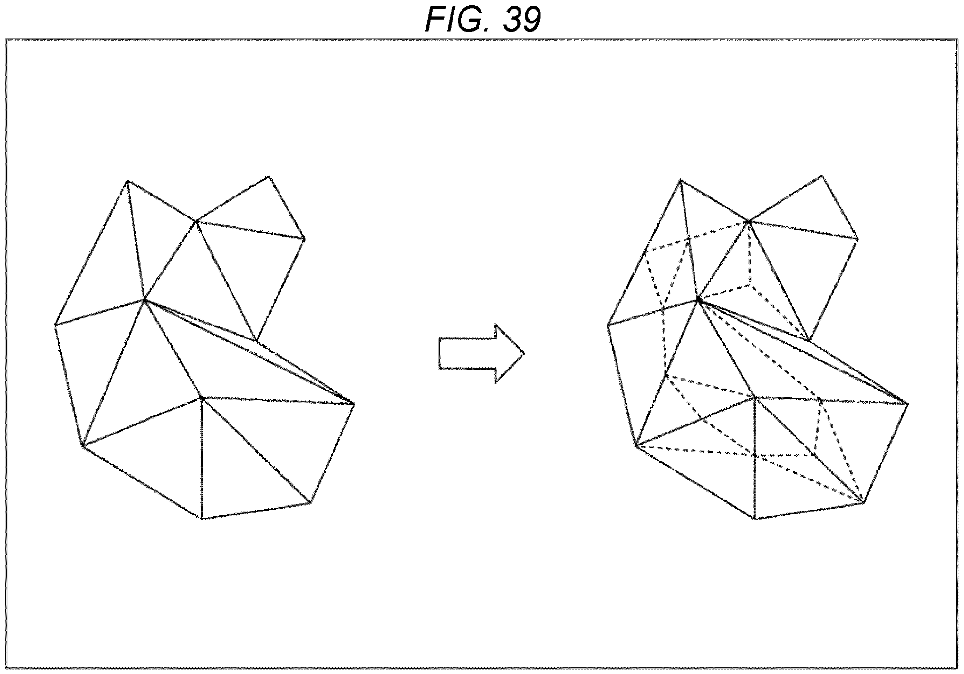

A method (reconstruction processing) of adding the vertices and connections not included in the vertex connection information in the decoding device is arbitrary, and may be a method other than the methods described in <Vertex Connection Reconstruction Method 1> and <Vertex Connection Reconstruction Method 2>. For example, in the decoding device 400 of Fig. 35, the vertex connection reconstruction unit 416 may subdivide the polygons (triangles) indicated by the vertex connection information. For example, the vertex connection reconstruction unit 416 may add vertices and connections by subdividing polygons, which are indicated by dotted lines on the left side of Fig. 39, with the vertices and connections included in the vertex connection information as indicated by dotted lines on the right side of Fig. 39.

This subdivision method is arbitrary. For example, an existing Mesh division method such as a method described in Hartmut Prautzsch, Qi Chen, "Analyzing Midpoint Subdivision," arXiv:0911.5157v3[cs.GR] 27 Apr 2011 may be applied. Furthermore, as described above in <Vertex Connection Reconstruction Parameter>, a method of adding the vertex to the extreme value (local maximum value or local minimum value) of the depth value in the peripheral region of the geometry image and performing subdivision using such a vertex may be applied.

<Vertex Connection Information>

Furthermore, the vertex connection information may include the boundary vertex list which is the list of vertices (also referred to as boundary vertices) of the patch on the boundary of the patch. The boundary vertex list includes the identification information on the boundary vertices and the position information on the boundary vertices in the geometry image, and the position information includes a difference in coordinates from another adjacent boundary vertex.

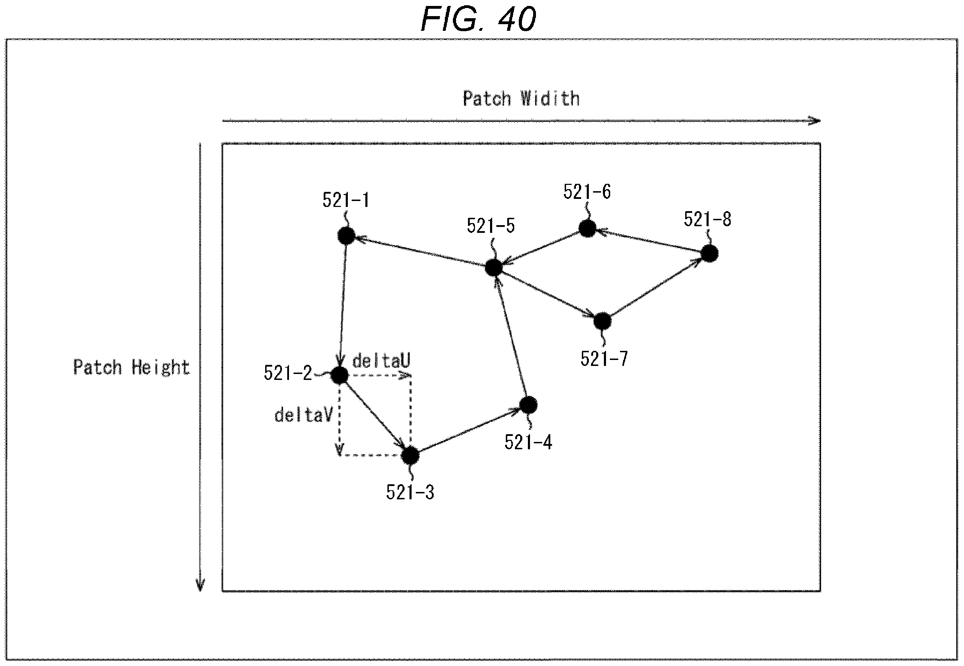

For example, as illustrated in Fig. 40, it is assumed that position information on a boundary vertex 521-1 to a boundary vertex 521-8 is indicated in the vertex connection information, the boundary vertex 521-1, the boundary vertex 521-2, the boundary vertex 521-3, the boundary vertex 521-4, and the boundary vertex 521-5 are connected in this order to form a loop, and the boundary vertex 521-6, the boundary vertex 521-5, the boundary vertex 521-7, and the boundary vertex 521-8 are connected in this order to form a loop. Furthermore, the boundary vertex 521-1 and the boundary vertex 521-6 are set as start points of the respective loops. The boundary vertex 521-1 to the boundary vertex 521-8 will be referred to as boundary vertices 521 when it is not necessary to distinguish the boundary vertices from each other for explanation. The vertex connection information indicates the position information (coordinates (U, V) on geometry image) of each boundary vertex 521. Note that for the boundary vertex 521-1 and the boundary vertex 521-6, the respective coordinates (U, V) are indicated, whereas for the other boundary vertices 521, a difference in coordinates (deltaU, deltaV) from the previous boundary vertex 521 in the loop is indicated. For example, the position information on the boundary vertex 521-2 is indicated as a difference between the coordinates of the boundary vertex 521-2 and the coordinates of the boundary vertex 521-1. Furthermore, the position information on the boundary vertex 521-3 is indicated as a difference between the coordinates of the boundary vertex 521-3 and the coordinates of the boundary vertex 521-2. This is similarly true to the other boundary vertices.

Note that the bit length of the coordinates of the first vertex of the loop is set according to the patch width (PatchWidth) and the patch height (PatchHeight). The bit length of the coordinates of the second and subsequent vertices of the loop is set according to the maximum value of the difference (maxDeltaU, maxDeltaV). With this configuration, it is possible to suppress an increase in the data amount of the vertex connection information as compared to a case where the position information on each boundary vertex is indicated by the coordinates (U, V) thereof.

Then, in the decoding device 400 of Fig. 35, the vertex connection reconstruction unit 416 may derive the coordinates of the boundary vertex by adding the coordinate difference from another adjacent boundary vertex in the vertex connection information. For example, the vertex connection reconstruction unit 416 can derive the coordinates (U, V) of the boundary vertex 521-2 by adding the position information (deltaU, deltaV) on the boundary vertex 521-2 to the position information (U, V) on the boundary vertex 521-1. Similarly, the vertex connection reconstruction unit 416 can derive the coordinates (U, V) of the boundary vertex 521-3 by adding the position information (deltaU, deltaV) on the boundary vertex 521-3 to the position information (U, V) on the boundary vertex 521-2. This is similarly true to other points. With this configuration, the vertex connection reconstruction unit 416 can obtain the position information (U, V) on each boundary vertex on the basis of the vertex connection information described above.

<Generation of Occupancy Image Based on Vertex Connection Information>

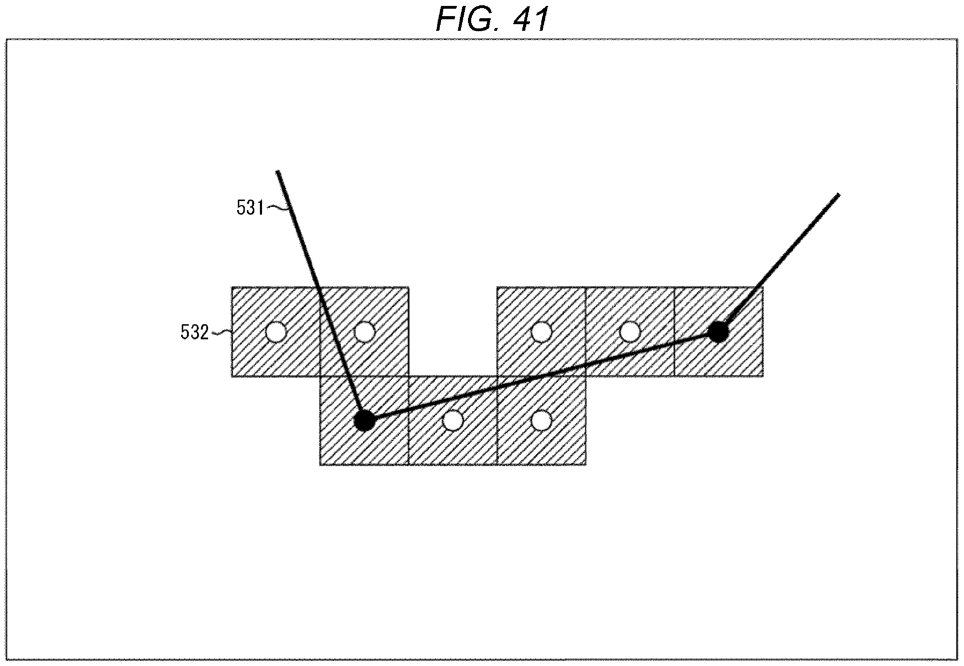

Instead of transmitting the occupancy image from the encoding device to the decoding device, the decoding device may generate the occupancy image on the basis of the vertex connection information. For example, it is assumed that in the vertex connection information, a patch boundary as indicated by a solid line 531 in Fig. 41 is indicated by boundary vertices and connections. In this case, an occupancy image in which all pixel values are "0" may be generated, and in the occupancy image, for example, pixels 532 overlapping with the solid line 531 may be set as pixels corresponding to the patch boundary and the pixel value thereof may be set to "1." Then, pixels corresponding to the inside of the patch may be obtained on the basis of the pixels corresponding to the patch boundary set in this manner, and the pixel value thereof may be set to "1."

Furthermore, in addition to the vertex connection information, the decoding device may generate an occupancy image on the basis of information indicating which of the left and right sides of the connection between the boundary vertices indicated by the vertex connection information is the region inside the patch. For example, flag information indicating whether the inside of the patch is on the right side or the left side of the patch boundary when facing a loop advance direction may be transmitted from the encoding device to the decoding device, and the decoding device may generate the occupancy image on the basis of the flag information.

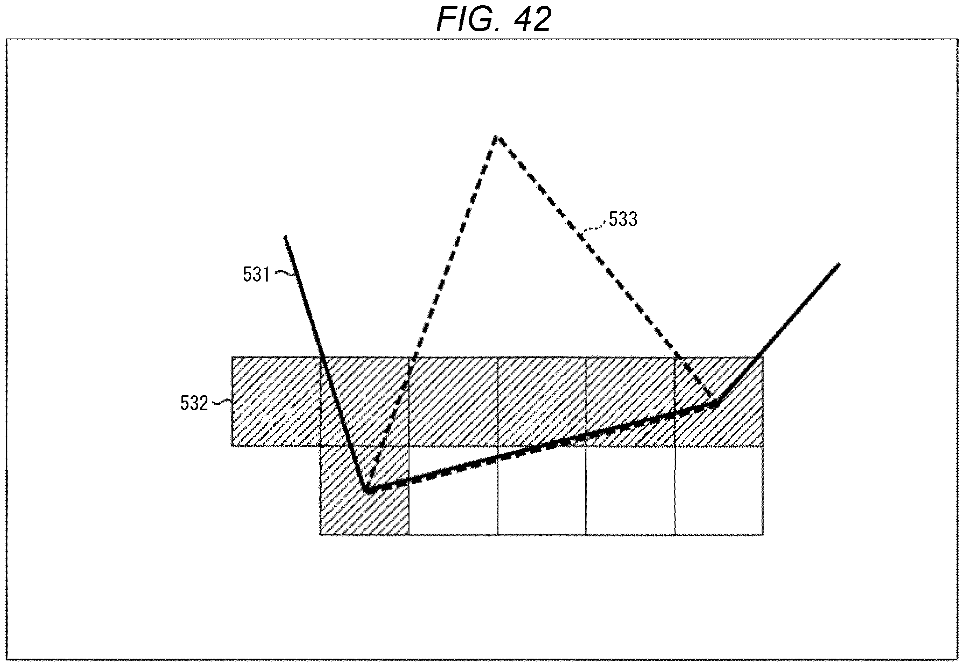

For example, it is assumed that the flag information indicates that a polygon 533 is formed on the upper side of the patch boundary (solid line 531) in the figure as illustrated in Fig. 42 (that is, the upper side in the figure is the inside of the patch). In this case, the decoding device may set the pixels 532 indicated by a diagonal line pattern in Fig. 42 as the pixels corresponding to the patch boundary (solid line 531) and set the pixel values thereof to "1" in the occupancy image.

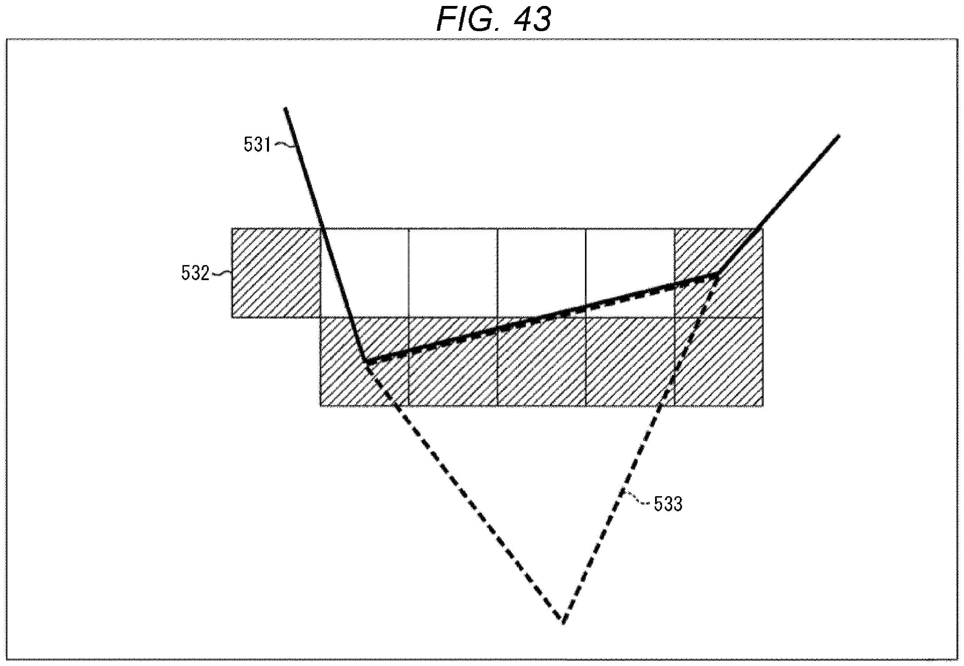

Furthermore, for example, it is assumed that the flag information indicates that the polygon 533 is formed on the lower side of the patch boundary (solid line 531) in the figure as illustrated in Fig. 43 (that is, the lower side in the figure is the inside of the patch). In this case, the decoding device may set the pixels 532 indicated by a diagonal line pattern in Fig. 43 as the pixels corresponding to the patch boundary (solid line 531) and set the pixel values thereof to "1" in the occupancy image.

As in the example of Fig. 42 and the example of Fig. 43, the positions of the pixels corresponding to the same patch boundary may be made different according to the flag information (information indicating which of the left and right sides of the connection between the boundary vertices indicated in the vertex connection information is the region inside the patch). With this configuration, the decoding device can generate the occupancy image more accurately corresponding to the shape of the patch boundary.

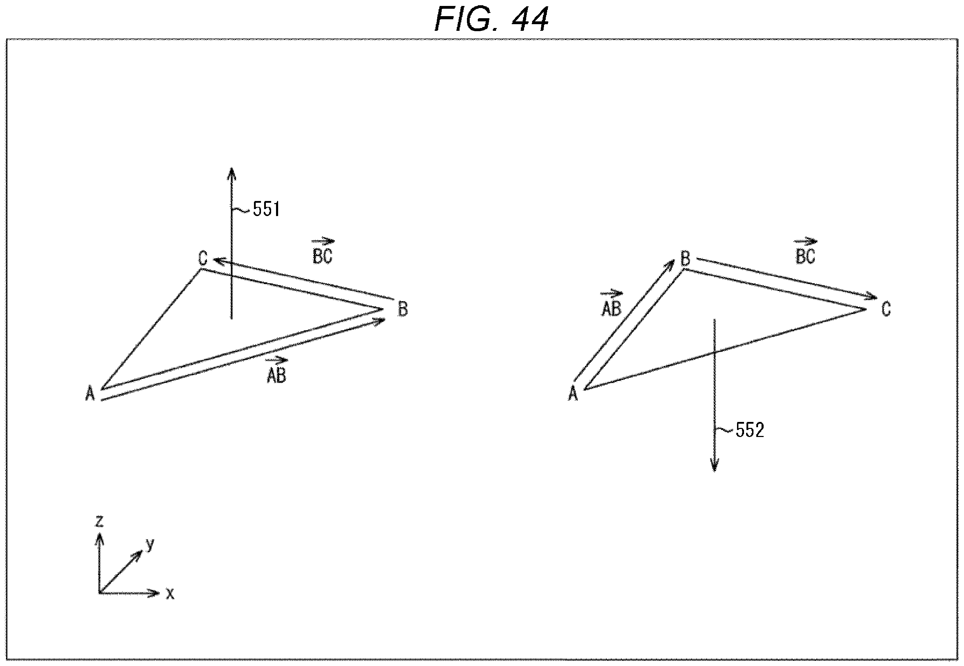

Furthermore, in addition to the vertex connection information, the decoding device may generate an occupancy image on the basis of information indicating the front or back of the polygon indicated in the vertex connection information. There are two advance directions (rotation directions) of the loop of the boundary vertices: clockwise and counterclockwise directions. For example, as illustrated in Fig. 44, in a polygon having vertices A, B, C, the outer product vector of a vector AB and a vector BC (vector orthogonal to a side AB and a side BC) is a vector 551 as illustrated on the left side of Fig. 44 in the counterclockwise direction, and is a vector 552 as illustrated on the right side of Fig. 44 in the clockwise direction. That is, the direction of the outer product vector is reversed depending on the rotation direction. That is, when the rotation direction is reversed, the front and back of the polygon are reversed. In other words, the rotation direction depends on whether the polygon shows the front or the back. Furthermore, the rotation direction also depends on a graphics application program interface (API) to be used. For example, in a case of OPenGL (registered trademark) in the right-handed coordinate system, the polygon shows the front in the counterclockwise direction as viewed from the point of view. Furthermore, in a case of DirectX (registered trademark) in the left-handed coordinate system, the polygon shows the front in the clockwise direction as viewed from the point of view. Therefore, flag information indicating the front or back side of the polygon indicated by the vertex connection information may be transmitted from the encoding device to the decoding device, and the decoding device may identify the loop advance direction (rotation direction) on the basis of the flag information when generating the occupancy image.

Furthermore, it is not always the case that the occupancy image generated on the basis of the vertex connection information matches the occupancy image corresponding to the geometry image. That is, the patch shape estimated on the basis of the vertex connection information may have an error with respect to the patch shape in the geometry image. Therefore, Omap correction information for correcting the occupancy image generated on the basis of the vertex connection information may be transmitted from the encoding device to the decoding device. Then, the decoding device may use the Omap correction information to correct the ophthalmic image generated on the basis of the vertex connection information. With this configuration, it is possible to reduce the error from the occupancy image corresponding to the geometry image.

The contents of the Omap correction information are arbitrary. For example, the Omap correction information may include a difference between the occupancy image generated on the basis of the vertex connection information and the occupancy image corresponding to the geometry image. For example, the Omap correction information may include the list of pixels having different pixel values as the difference.

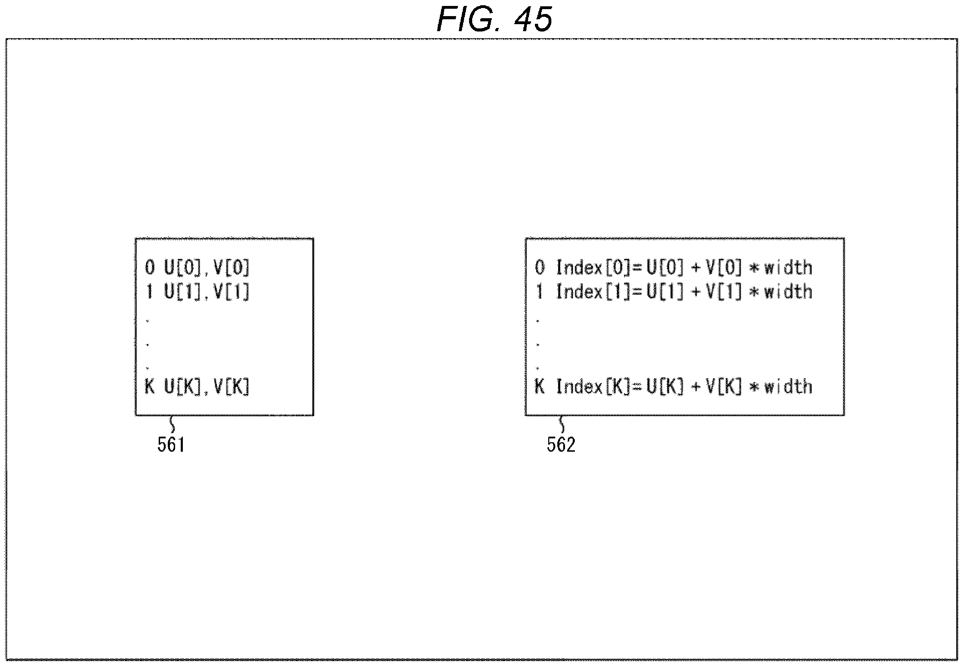

For example, as in Omap correction information 561 illustrated in Fig. 45, pixels (also referred to as correction pixels) having different pixel values between the occupancy image generated on the basis of the vertex connection information and the occupancy image corresponding to the geometry image may be indicated by the position information (UV coordinates). In the Omap correction information 561, U[K] indicates the U-coordinate of the Kth correction pixel, and V[K] indicates the V-coordinate of such a correction pixel.

Furthermore, as in Omap correction information 562 illustrated in Fig. 45, the correction pixel may be indicated by a predetermined index. In a case of the Omap correction information 562, Index[K] indicates the index value of the Kth correction pixel. Index[K] is calculated by the following equation using the coordinates (U[K] and V[K]). Of course, the index value may be any value as long as each pixel can be identified, and is not limited to this example.

$$\texttt{Index[K] = U[K] + V[K] * width}$$

<Encoding Device>

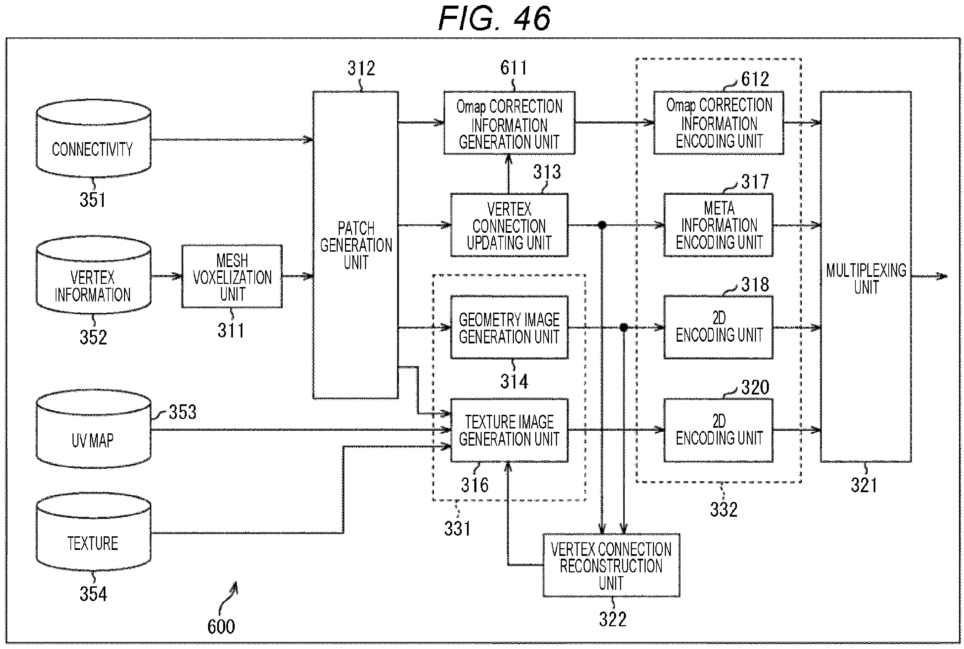

Fig. 46 illustrates a main configuration example of the encoding device when the Omap correction information is transmitted as described above. An encoding device 600 illustrated in Fig. 46 is a device similar to the encoding device 300 of Fig. 33. However, the encoding device 600 transmits the Omap correction information instead of transmitting the occupancy image corresponding to the geometry image.

As illustrated in Fig. 46, the encoding device 600 has a configuration other than the occupancy image generation unit 315 and the 2D encoding unit 319 of the encoding device 300 of Fig. 33. Furthermore, the encoding device 600 includes an Omap correction information generation unit 611 and an Omap correction information encoding unit 612. In a case of the encoding device 600, the image generation unit 331 includes the geometry image generation unit 314 and the texture image generation unit 316. Furthermore, the encoding unit 332 includes the meta information encoding unit 317, the 2D encoding unit 318, the 2D encoding unit 320, and the Omap correction information encoding unit 612.

The patch generation unit 312 supplies the generated patch image to the Omap correction information generation unit 611. The Omap correction information generation unit 611 acquires the patch image, and generates an occupancy image (also referred to as a second occupancy image) corresponding to the geometry image using the patch image. Furthermore, the vertex connection updating unit 313 supplies the generated vertex connection information to the Omap correction information generation unit 611. The Omap correction information generation unit 611 acquires the vertex connection information, and generates an occupancy image (also referred to as a first occupancy image) on the basis of the vertex connection information.

The Omap correction information generation unit 611 generates Omap correction information for correcting the first occupancy image by using the generated first and second occupancy images. For example, the Omap correction information generation unit 611 may derive a difference between the generated first and second occupancy images, and generate the Omap correction information including the difference. For example, the Omap correction information generation unit 611 may generate, as the difference, Omap correction information including the list of position information on the correction pixels. The position information may be UV coordinates or an index value.

The Omap correction information generation unit 611 supplies the generated Omap correction information to the Omap correction information encoding unit 612. The Omap correction information encoding unit 612 acquires and encodes the Omap correction information. This encoding method is arbitrary. The Omap correction information encoding unit 612 supplies the coded data of the generated Omap correction information to the multiplexing unit 321. The multiplexing unit 321 multiplexes the coded data of the Omap correction information with other pieces of coded data to generate one bit stream. The multiplexing unit 321 outputs the generated bitstream to the outside of the encoding device 600. This bit stream is transmitted to, for example, the decoding device. That is, the Omap correction information is transmitted to the decoding device. A method of transmitting this bit stream (Omap correction information) is arbitrary. For example, this bit stream may be transmitted to the decoding device via an arbitrary transmission path. Furthermore, the bit stream may be recorded in an arbitrary recording medium and transmitted to the decoding device via the recording medium.

Note that the meta information encoded by the meta information encoding unit 317 may include the information indicating which of the left and right sides of the connection between the boundary vertices indicated by the vertex connection information is the region inside the patch, the information indicating the front or back of the polygons indicated by the vertex connection information, and the like.

<Flow of Encoding Processing>

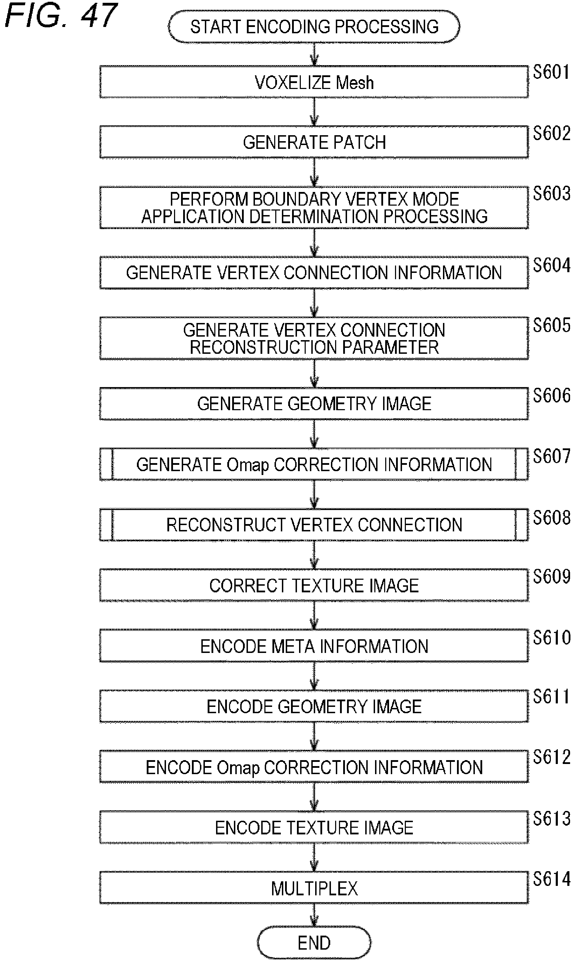

An example of the flow of an encoding processing executed by the encoding device 600 will be described with reference to a flowchart in Fig. 47. When the encoding processing is started, the processing of steps S601 to S606 is executed similarly to the processing of steps S301 to S306 in Fig. 34.

In step S607, the Omap correction information generation unit 611 executes Omap correction information generation processing and generates the Omap correction information. When the processing of step S607 ends, the processing proceeds to step S608. The processing of steps S608 to S611 is executed similarly to the processing of steps S308 to S311 in Fig. 34.

In step S612, the Omap correction information encoding unit 612 encodes the Omap correction information generated in step S607. When the processing of step S612 ends, the processing proceeds to step S613. The processing of step S613 is executed similarly to the processing of step S313 in Fig. 34.

In step S614, the multiplexing unit 321 multiplexes the coded data of the meta information generated in step S610, the coded data of the geometry image generated in step S611, the coded data of the Omap correction information generated in step S612, and the coded data of the texture image generated in step S613 to generate a bitstream. The multiplexing unit 321 outputs the generated bitstream to the outside of the encoding device 600. When the processing of step S614 ends, the encoding processing ends.

<Flow of Omap Correction Information Generation Processing>

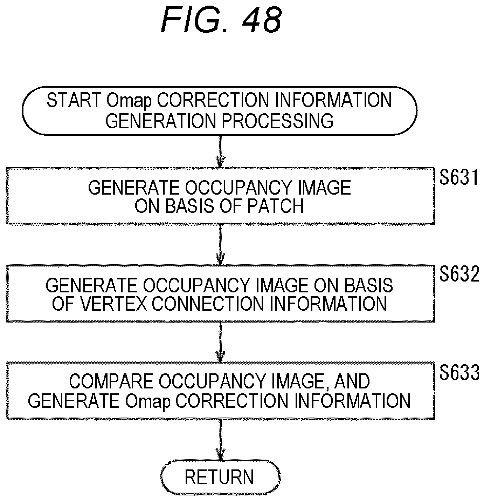

Next, an example of the flow of the Omap correction information generation processing executed in step S607 of the encoding processing will be described with reference to a flowchart of Fig. 48. When the Omap correction information generation processing is started, the Omap correction information generation unit 611 generates, in step S631, the occupancy image (second occupancy image) corresponding to the geometry image on the basis of the patch image.

In step S632, the Omap correction information generation unit 611 generates the occupancy image (first occupancy image) on the basis of the vertex connection information.

In step S633, the Omap correction information generation unit 611 compares the first occupancy image with the second occupancy image to generate the Omap correction information. When the Omap correction information is generated, the Omap correction information generation processing ends, and the processing returns to the encoding processing of Fig. 47.

<Decoding Device>

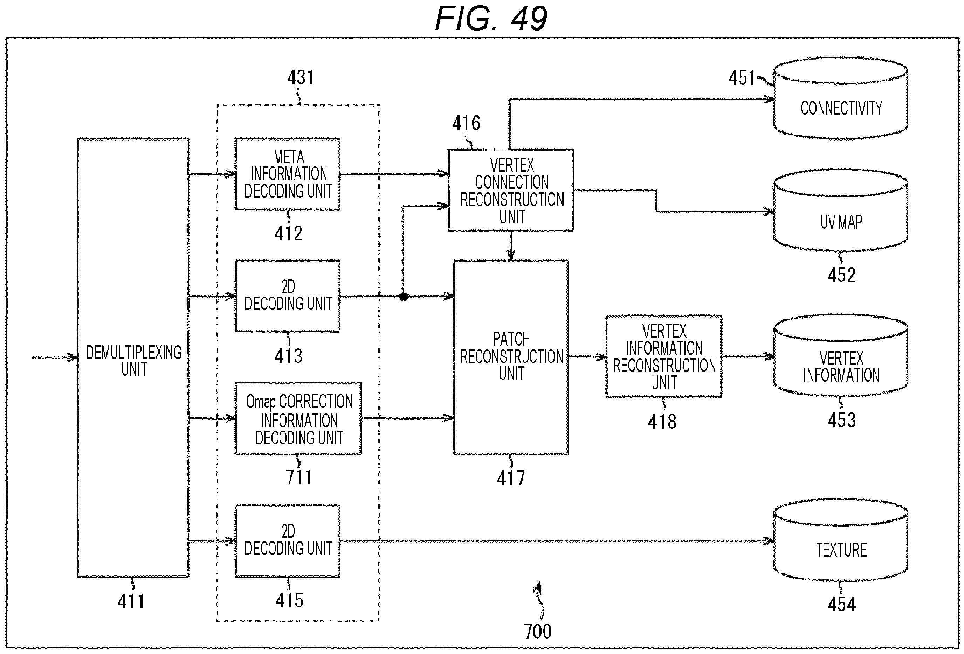

Furthermore, Fig. 49 illustrates a main configuration example of the decoding device when the Omap correction information is transmitted as described above. A decoding device 700 illustrated in Fig. 49 is a device similar to the decoding device 400 of Fig. 35. Note that instead of acquiring the occupancy image corresponding to the geometry image, the decoding device 700 generates the occupancy image on the basis of the vertex connection information. Furthermore, the decoding device 700 acquires the Omap correction information to be transmitted, and corrects the generated occupancy image using the Omap correction information. Note that the decoding device 700 corresponds to the encoding device 600 (Fig. 46) and can decode the bit stream generated by the encoding device 600 to reconstruct 3D data.

As illustrated in Fig. 49, the decoding device 700 has a configuration other than the 2D decoding unit 414 of the decoding device 400 in Fig. 35. Furthermore, the decoding device 700 includes an Omap correction information decoding unit 711. In a case of the encoding device 600, the decoding unit 431 includes the meta information decoding unit 412, the 2D decoding unit 413, the 2D decoding unit 415, and the Omap correction information decoding unit 711.

The demultiplexing unit 411 extracts the coded data of the Omap correction information from the bit stream, and supplies the extracted coded data to the Omap correction information decoding unit 711. The Omap correction information decoding unit 711 acquires the coded data of the Omap correction information. The Omap correction information decoding unit 711 decodes the coded data to generate the Omap correction information. This decoding method corresponds to the encoding method applied when the Omap correction information encoding unit 612 (Fig. 46) of the encoding device 600 encodes the Omap correction information. The Omap correction information decoding unit 711 supplies the generated Omap correction information to the patch reconstruction unit 417.

The vertex connection reconstruction unit 416 supplies the vertex connection information to the patch reconstruction unit 417. Note that the meta information may include the information indicating which of the left and right sides of the connection between the boundary vertices indicated by the vertex connection information is the region inside the patch, the information indicating the front or back of the polygons indicated by the vertex connection information, and the like. In this case, the vertex connection reconstruction unit 416 may supply these pieces of information to the patch reconstruction unit 417.

The patch reconstruction unit 417 acquires the vertex connection information, and generates the occupancy image on the basis of the acquired vertex connection information. Note that the patch reconstruction unit 417 may acquire the information, which is supplied from the vertex connection reconstruction unit 416, indicating which of the left and right sides of the connection between the boundary vertices indicated by the vertex connection information is the region inside the patch, and use the information at the time of generating the occupancy image. Furthermore, the patch reconstruction unit 417 may acquire the information, which is supplied from the vertex connection reconstruction unit 416, indicating the front or back of the polygons indicated by the vertex connection information, and use the information at the time of generating the occupancy image.

Furthermore, the patch reconstruction unit 417 may acquire the Omap correction information, which is supplied from the Omap correction information decoding unit 711, for correcting the occupancy image, and on the basis of the Omap correction information, correct the occupancy image generated on the basis of the vertex connection information. For example, the patch reconstruction unit 417 may change the pixel value of the correction pixel indicated by the Omap correction information in the occupancy image generated on the basis of the vertex connection information from "0" to "1" or from "1" to "0."

The patch reconstruction unit 417 extracts a patch image from the geometry image using the occupancy image generated as described above, and reconstructs a patch corresponding to the extracted patch image. The patch reconstruction unit 417 supplies the reconstructed patch and the information regarding the vertices and the connections to the vertex information reconstruction unit 418.

<Flow of Decoding Processing>

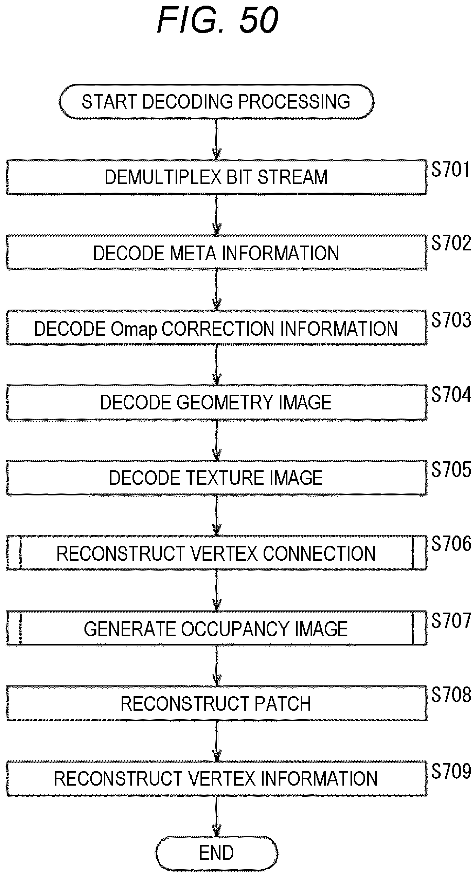

An example of the flow of decoding processing executed by this decoding device 700 will be described with reference to a flowchart of Fig. 50. When the decoding processing is started, the demultiplexing unit 411 demultiplexes the bitstream input to the decoding device 700 in step S701. By this demultiplexing, the demultiplexing unit 411 extracts the coded data of the meta information from the bitstream. Furthermore, the demultiplexing unit 411 extracts the coded data of the geometry image from the bitstream. Moreover, the demultiplexing unit 411 extracts the coded data of the Omap correction information from the bitstream. Furthermore, the demultiplexing unit 411 extracts the coded data of the texture image from the bitstream. In step S702, the meta information decoding unit 412 decodes the coded data of the meta information extracted from the bitstream in step S701, and generates (restores) the meta information.

In step S703, the Omap correction information decoding unit 711 decodes the coded data of the Omap correction information extracted from the bitstream in step S701, and generates (restores) the Omap correction information. Then, the processing of steps S704 to S706 is executed similarly to the processing of steps S404 to S406 in Fig. 36.

In step S707, the patch reconstruction unit 417 executes occupancy image generation processing, and generates an occupancy image on the basis of the vertex connection information. Then, the processing of steps S708 and S709 is executed similarly to the processing of step S407 and S408 in Fig. 36. When the processing of step S709 ends, the decoding processing ends.

<Flow of Occupancy Image Generation Processing>

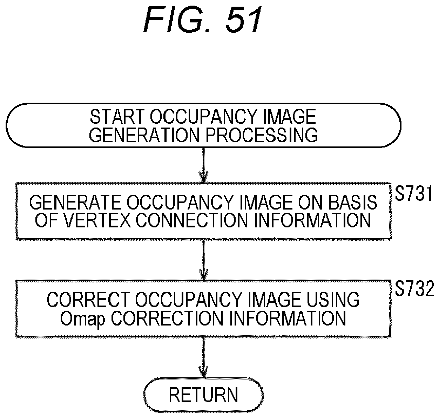

An example of the flow of the occupancy image generation processing executed in step S707 in Fig. 50 will be described with reference to a flowchart in Fig. 51. When the occupancy image generation processing is started, the patch reconstruction unit 417 generates an occupancy image on the basis of the vertex connection information in step S731. In step S732, the patch reconstruction unit 417 corrects the generated occupancy image on the basis of the Omap correction information. When the processing of step S732 ends, the occupancy image generation processing ends, and the processing returns to the decoding processing in Fig. 50.

As described above, the decoding device generates the occupancy image on the basis of the vertex connection information so that transmission of the occupancy image can be omitted. Therefore, reduction in 3D data encoding efficiency can be suppressed.

<Generation of Patch>

As described above, when the occupancy image is generated on the basis of the vertex connection information as described above, a method of generating the patch (portion corresponding to the patch image of the geometry image) in the occupancy image is arbitrary. For example, the patch reconstruction unit 417 may arrange an internal region, which indicates the inside of the patch, inside the boundary of the patch indicated by the boundary vertices and the connections in the vertex connection information, deform the internal region by moving each vertex of the internal region to a neighboring boundary vertex, and further correct the internal region on the basis of the vertex connection information.

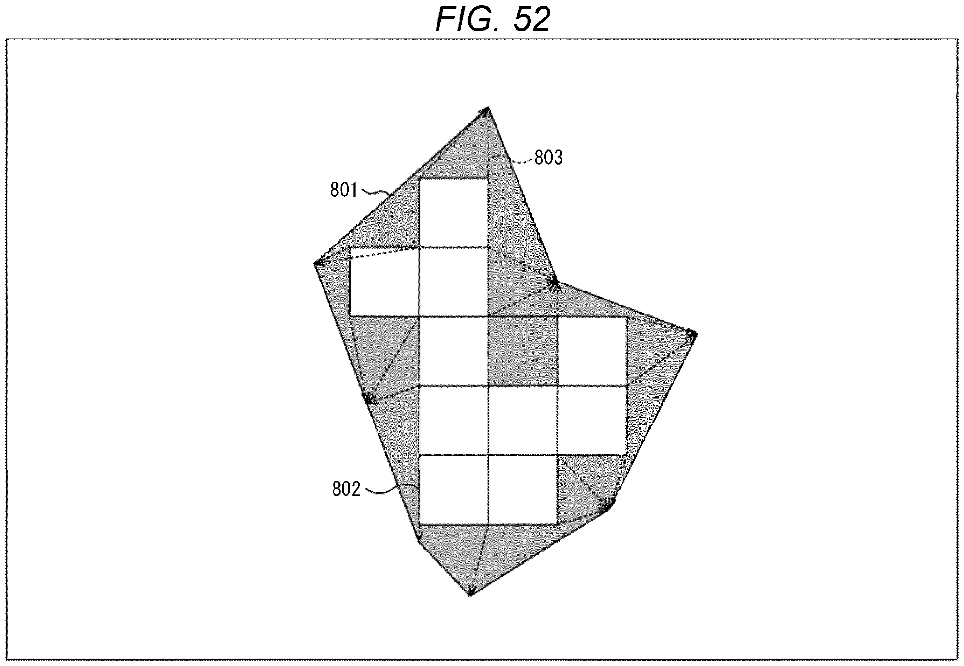

For example, as illustrated in Fig. 52, an internal region 802 is arranged inside a patch boundary 801 indicated by the vertex connection information. The internal region 802 includes a rectangular region. Then, as indicated by a dotted arrow 803, each vertex of the internal region 802 is moved to a neighboring boundary vertex. Accordingly, the internal region 802 is deformed. In a case of the example of Fig. 52, since the vertices of the internal region 802 are moved to all the boundary vertices, the outer shape of the internal region 802 coincides with the patch boundary 801. By setting the pixel value of the internal region to "1," it is possible to form a region (that is, generate a patch) corresponding to the patch of the geometry indicated by the vertex connection information in the occupancy image.

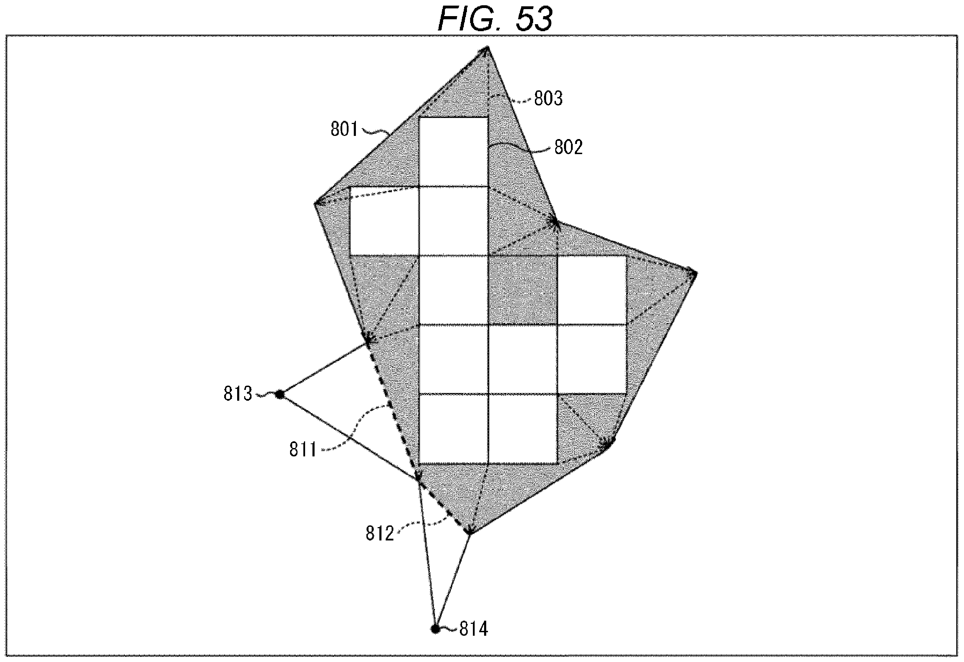

Note that it is not always possible to match the outer shape of the internal region 802 with the patch boundary 801 by such a method. For example, in a case of Fig. 53, the vertices of the internal region 802 are not moved to a boundary vertex 813 and a boundary vertex 814. Therefore, the outer shape of the internal region 802 is as indicated by a dotted line 811 and a dotted line 812, and the boundary vertex 813 and the boundary vertex 814 are not included in the patch. As an example where the boundary vertices are not included in the patch as described above, there may be a case where a single boundary vertex is not included in the patch as illustrated in Fig. 53 among arrangement of the boundary vertices, and a case where a plurality of consecutive boundary vertices (for example, two vertices) is not included in the patch.

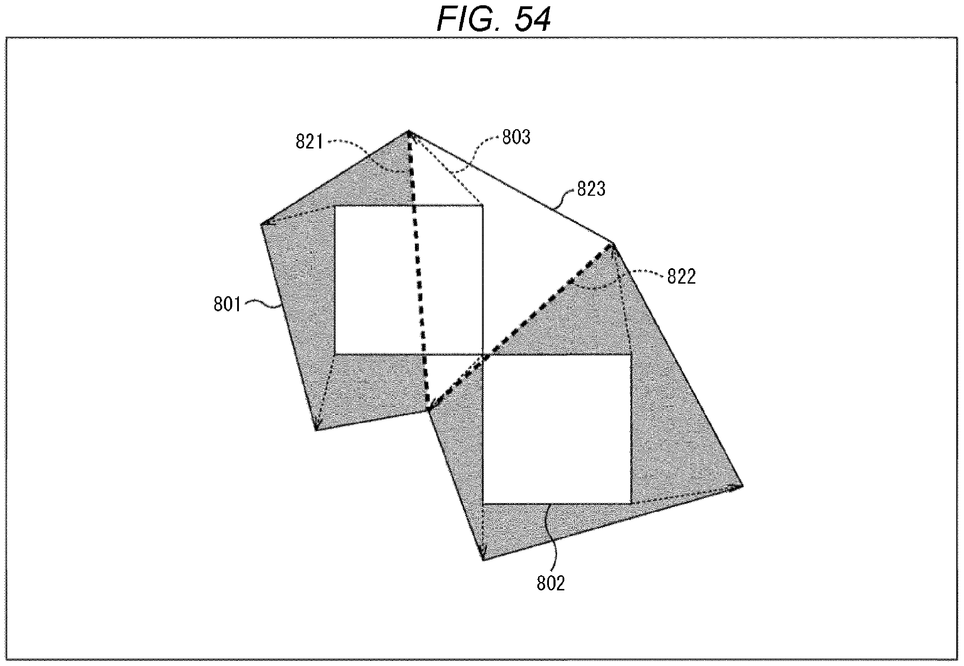

Furthermore, in a case of Fig. 54, the outer shape of the internal region 802 is as indicated by a dotted line 821 and a dotted line 822, and a side boundary 823 is not included in the patch.

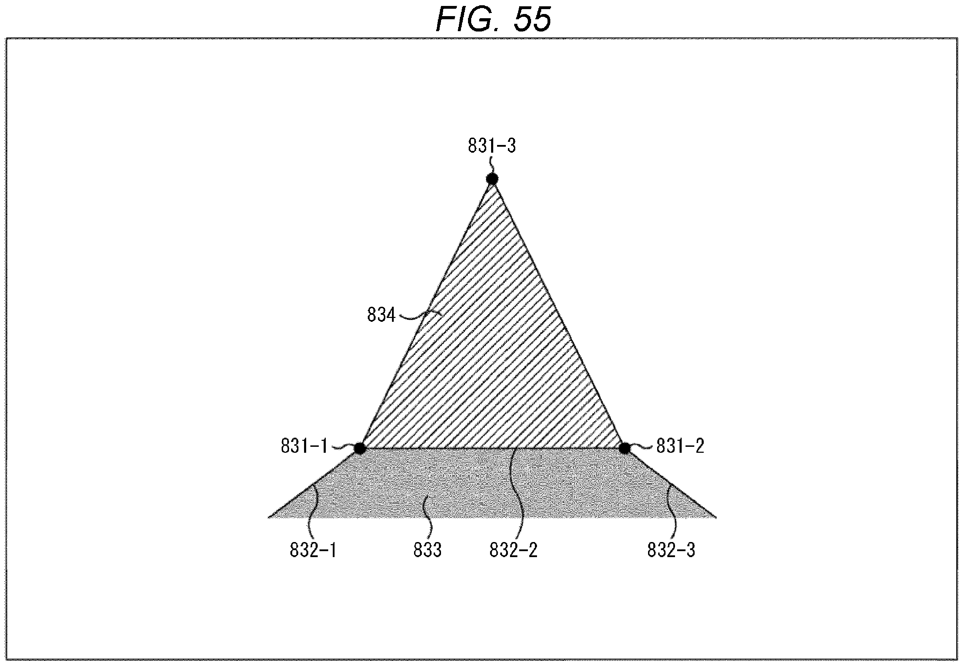

As described above, when the boundary vertex and the side boundary are not included in the patch (internal region 802), the patch reconstruction unit 417 may further correct the shape of the patch (internal region) on the basis of the vertex connection information. This correction method is arbitrary. For example, when the boundary vertex is not included in the patch, a polygon including the boundary vertex may be added to the patch. For example, as illustrated in Fig. 55, it is assumed that a boundary vertex 831-1, a boundary vertex 831-2, and connections 832-1 to 832-3 are set as boundaries, a lower region 833 (region indicated by gray) of the boundaries in the figure is an internal region of a patch, and the boundary vertex 831-3 is not included in the patch. When the single boundary vertex is not included in the patch as described above, the patch reconstruction unit 417 may add a region 834 (polygon) surrounded by the connections connecting the boundary vertex 831-1 to the boundary vertex 831-3 to the patch. In this manner, the outer shape of the patch is corrected so as to include the boundary vertex 831-3. Therefore, the occupancy image corresponding to the vertex connection information is obtained.

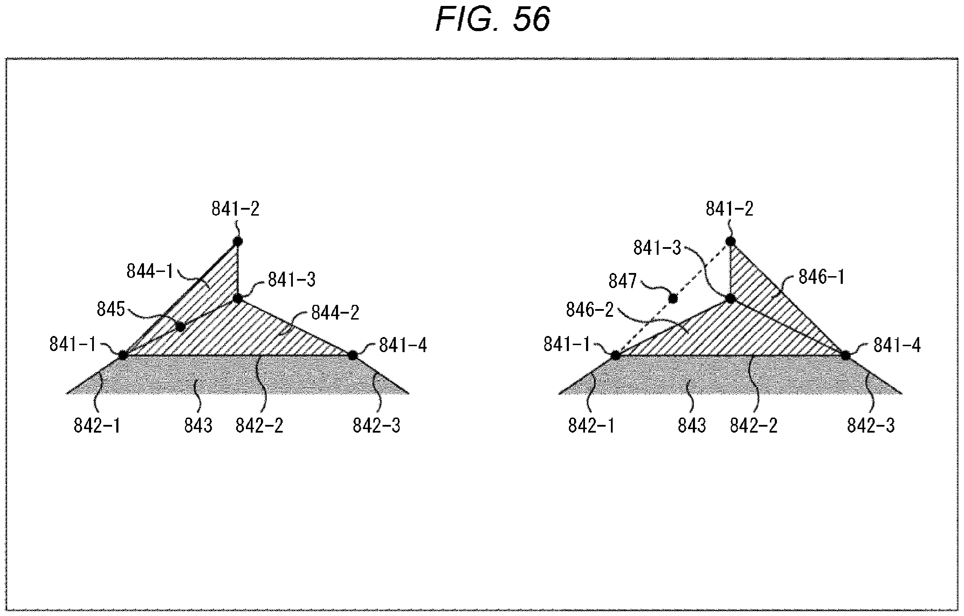

For example, as illustrated in Fig. 56, it is assumed that a boundary vertex 841-1, a boundary vertex 841-4, and connections 842-1 to 842-3 are set as boundaries, a lower region 843 (region indicated by gray) of the boundaries in the figure is an internal region of a patch, and the boundary vertex 841-2 and the boundary vertex 841-3 are not included in the patch. When the plurality of consecutive boundary vertices is not included in the patch as described above, a polygon including these boundary vertices may be added to the patch.

Note that in this case, there may be two ways to add the vertices to the patch. For example, a case is conceivable, in which as illustrated on the left side of Fig. 56, a region 844-1 (polygon) surrounded by connections connecting boundary vertices 841-1 to 841-3 and a region 844-2 (polygon) surrounded by connections connecting the boundary vertex 841-1, the boundary vertex 841-3, and a boundary vertex 841-4 are added to the patch. Furthermore, a case is conceivable, in which as illustrated on the right side of Fig. 56, a region 846-1 (polygon) surrounded by connections connecting a boundary vertex 841-2, a boundary vertex 841-3, and a boundary vertex 841-4 and a region 846-2 (polygon) surrounded by connections connecting a boundary vertex 841-1, the boundary vertex 841-3, and the boundary vertex 841-4 are added to the patch. In such a case, either one of these cases is selected and applied.

This selecting method is arbitrary. For example, the above-described selection may be made on the basis of whether or not a midpoint between the boundary vertex 841-1 included in the patch and the boundary vertex not connected to the boundary vertex 841-1 among the boundary vertices not included in the patch is included in the corrected patch. For example, in a case illustrated on the left side of Fig. 56, a midpoint 845 between the boundary vertex 841-1 and the boundary vertex 841-3 is included in the corrected patch. On the other hand, in a case illustrated on the right side of Fig. 56, a midpoint 847 between the boundary vertex 841-1 and the boundary vertex 841-2 is not included in the corrected patch. Any case may be selected according to whether or not the midpoint is included in the patch indicated by the boundary vertices and connections included in the vertex connection information.

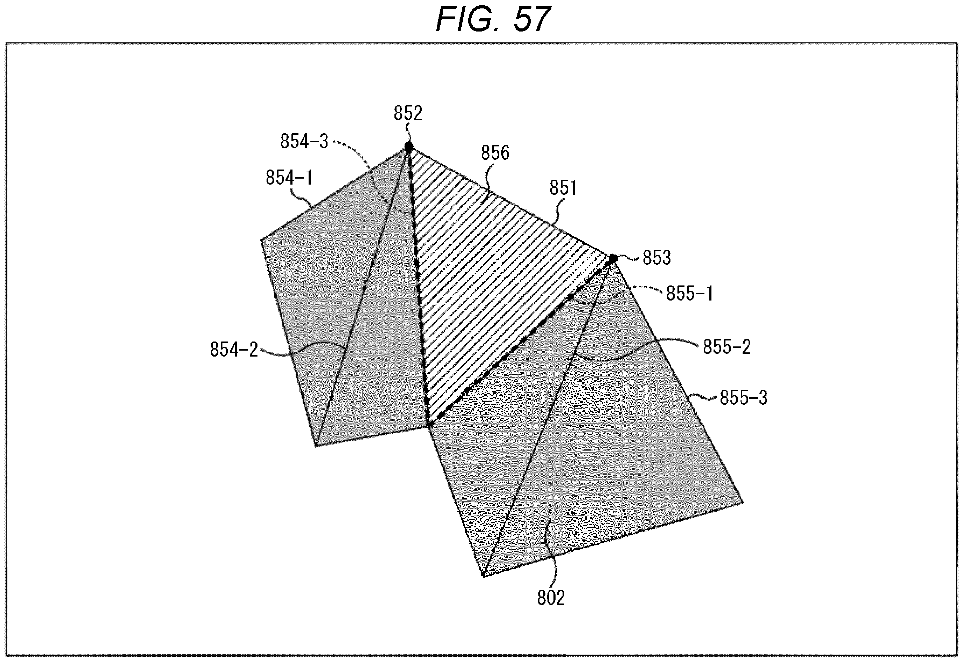

For example, it is assumed that a region indicated by gray in Fig. 57 is an internal region of a patch and a side boundary (connection 851) is not included in the patch. When the side boundary is not included in the patch as described above, a polygon including such a side boundary may be added to the patch. First, connections having boundary vertices (boundary vertex 852 and boundary vertex 853) at both ends of the connection 851 as vertices on one side are obtained. The connections having the boundary vertex 852 as the vertex on one side are connections 854-1 to 854-3. The connections having the boundary vertex 853 as the vertex on one side are connections 855-1 to 855-3. Then, among these connections, connections having the same vertex on the other side are obtained. The connection 854-3 and the connection 855-1 are connected to the same vertex. Thus, a region 856 (polygon) surrounded by the connection 851, the connection 854-3, and the connection 855-1 is added to the patch.

<6. Supplementary Note>

In the above description, a case where 3D data using a mesh is encoded by extending the standard called VPCC has been described, but Visual Volumetric Video-based Coding (V3C) or metadata immersive video (MIV) may be applied instead of VPCC. V3C and MIV are standards using substantially similar encoding technique as VPCC, and can be extended similarly to the case of VPCC to encode 3D data using a mesh. Therefore, the above-described present technology can also be applied to a case where V3C or MIV is applied to encoding of 3D data using a mesh.

<3D Data>

Although the case where the present technology is applied to mesh encoding/decoding has been described above, the present technology is not limited to these examples, and can be applied to encoding/decoding of 3D data of an arbitrary standard. That is, as long as there is no contradiction with the present technology described above, specifications of various processes such as an encoding/decoding method and various types of data such as 3D data and metadata are arbitrary. Furthermore, in so far as there is no conflict with the present technology, part of the above-described processing or specifications may be omitted.

<Computer>

The above-described series of processing can be executed by hardware or software. When the series of processing is executed by software, a program constituting the software is installed in a computer. Here, the computer includes a computer incorporated in dedicated hardware, a general-purpose personal computer capable of executing various functions by installing various programs, and the like, for example.

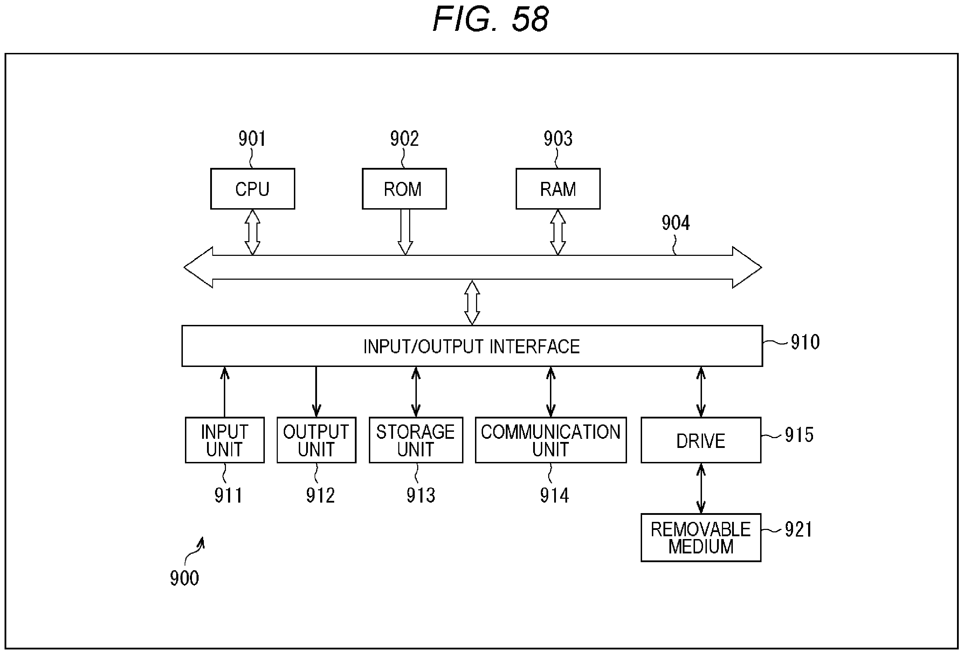

Fig. 58 is a block diagram illustrating a configuration example of hardware of the computer that executes the above-described series of processing by a program.

In a computer 900 illustrated in Fig. 58, a central processing unit (CPU) 901, a read only memory (ROM) 902, and a random access memory (RAM) 903 are mutually connected via a bus 904.

Furthermore, an input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disk, a magneto-optical disk, or a semiconductor memory.

In the computer configured as described above, the series of processing described above are performed, for example, by the CPU 901 loading a program stored in the storage unit 913 into the RAM 903 via the input/output interface 910 and the bus 904, and executing the program. Furthermore, the RAM 903 also appropriately stores data and the like necessary for the CPU 901 to execute various types of processing.

The program executed by the computer can be applied by being recorded on, for example, the removable medium 921 as a package medium or the like. In this case, the program can be installed in the storage unit 913 via the input/output interface 910 by attaching the removable medium 921 to the drive 915.

Furthermore, this program can also be provided via a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

<Applicable Target of Present Technology>

The present technology may be applied to an arbitrary configuration. For example, the present technology can be applied to various electronic devices.

Furthermore, for example, the present technology can also be implemented as a partial configuration of a device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to any terminal such as a computer, an audio visual (AV) device, a portable information processing terminal, or an Internet of Things (IoT) device.

Note that in the present specification, a system means a set of a plurality of components (devices, modules (parts), and the like), and it does not matter whether or not all the components are in the same housing. Therefore, both of a plurality of devices stored in different housings and connected via a network, and one device in which a plurality of modules is stored in one housing are systems.

<Field and Use to Which Present Technology Is Applicable>

The system, device, processing unit and the like to which the present technology is applied can be used in arbitrary fields such as traffic, medical care, crime prevention, agriculture, livestock industry, mining, beauty care, factory, household appliance, weather, and natural surveillance, for example. Furthermore, any application thereof may be used.

<Others>

Note that in the present specification, the "flag" is information for identifying a plurality of states, and includes not only information used for identifying two states of true (1) and false (0) but also information capable of identifying three or more states. Therefore, the value that may be taken by the "flag" may be, for example, a binary of 1/0 or a ternary or more. That is, the number of bits constituting this "flag" is arbitrary, and may be one bit or a plurality of bits. Furthermore, identification information (including the flag) is assumed to include not only identification information thereof in a bitstream but also difference information of the identification information with respect to a certain reference information in the bitstream, and thus, in the present specification, the "flag" and "identification information" include not only the information thereof but also the difference information with respect to the reference information.

Furthermore, various kinds of information (such as metadata) related to coded data (a bitstream) may be transmitted or recorded in any form as long as it is associated with the coded data. Here, the term "associating" means, when processing one data, allowing other data to be used (to be linked), for example. That is, the data associated with each other may be collected as one data or may be made individual data. For example, information associated with the coded data (image) may be transmitted on a transmission path different from that of the coded data (image). Furthermore, for example, the information associated with the coded data (image) may be recorded in a recording medium different from that of the coded data (image) (or another recording area of the same recording medium). Note that this "association" may be not the entire data but a part of data. For example, an image and information corresponding to the image may be associated with each other in any unit such as a plurality of frames, one frame, or a part within a frame.

Note that in the present specification, terms such as "synthesize", "multiplex", "add", "integrate", "include", "store", "put in", "introduce", "insert", and the like mean, for example, to combine a plurality of objects into one, such as to combine coded data and metadata into one data, and mean one method of "associating" described above.

Furthermore, the embodiments of the present technology are not limited to the above-described embodiments, and various modifications are possible without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, a configuration other than the above-described configurations may be added to the configuration of each device (or each processing unit). Moreover, when the configuration and operation of the entire system are substantially the same, a part of the configuration of a certain device (or processing unit) may be included in the configuration of another device (or another processing unit).

Furthermore, for example, the above-described program may be executed in any device. In this case, the device is only required to have a necessary function (functional block or the like) and obtain necessary information.

Furthermore, for example, each step of one flowchart may be executed by one device, or may be shared and executed by a plurality of devices. Furthermore, when a plurality of processing is included in one step, the plurality of processing may be executed by one device, or may be shared and executed by a plurality of devices. In other words, a plurality of processes included in one step can also be executed as processes of a plurality of steps. On the contrary, processing described as a plurality of steps can be collectively executed as one step.

Furthermore, for example, in a program executed by the computer, processing of steps describing the program may be executed in a time-series order in the order described in the present specification, or may be executed in parallel or individually at a required timing such as when a call is made. That is, as long as there is no contradiction, the processing of each step may be executed in an order different from the above-described order. Moreover, this processing of steps describing program may be executed in parallel with processing of another program, or may be executed in combination with processing of another program.

Furthermore, for example, a plurality of technologies related to the present technology can be implemented independently as a single entity as long as there is no contradiction. A plurality of arbitrary present technologies can be implemented in combination. For example, part or all of the present technologies described in any of the embodiments can be implemented in combination with part or all of the present technologies described in other embodiments. Furthermore, part or all of the present technologies described above may be implemented in combination with another technology not described above.

Note that the present technology can also have the following configuration.

(1) An information processing device including

    a vertex connection information generation unit that deletes at least some of internal vertices which are vertices of a mesh representing an object having a three-dimensional structure and positioned other than the boundary of a patch of a geometry and generates vertex connection information indicating the vertices of the mesh and a connection between the vertices, and
    an encoding unit that encodes the vertex connection information.

(2) The information processing device according to (1), in which
the vertex connection information includes a boundary vertex list which is the list of boundary vertices which are vertices positioned at the boundary of the patch.
(3) The information processing device according to (2), in which
the boundary vertex list includes an inclusive list in which a region surrounded by the boundary vertices forming the list and a connection between the boundary vertices is included in the patch.
(4) The information processing device according to (3), in which
the boundary vertex list includes an exclusive list in which the region surrounded by the boundary vertices forming the list and the connection between the boundary vertices is not included in the patch.
(5) The information processing device according to any one of (2) to (4), in which
the boundary vertex list includes identification information on the boundary vertices and position information on the boundary vertices in a geometry image which is a two-dimensional plane on which the patch is arranged.

(6) The information processing device according to any one of (2) to (5), in which
the boundary vertex list indicates the connection between the boundary vertices in the arrangement order of the boundary vertices.

(7) The information processing device according to any one of (2) to (6), in which
the vertex connection information further includes an internal vertex list which is the list of the internal vertices.

(8) The information processing device according to (7), in which
the internal vertex list includes identification information on the internal vertices and position information on the internal vertices in the geometry image which is the two-dimensional plane on which the patch is arranged.

(9) The information processing device according to any one of (2) to (8), in which
the vertex connection information further includes pair information indicating the correspondence of the boundary vertices between the patches.

(10) The information processing device according to any one of (1) to (9), in which
the vertex connection information generation unit further generates a parameter to be used when the vertices and the connection are reconstructed.

(11) The information processing device according to (10), in which
the vertex connection information generation unit generates, as the parameter, flag information indicating whether or not at least some of the internal vertices of the mesh have been deleted.

(12) The information processing device according to (10) or (11), in which
the vertex connection information generation unit generates, as the parameter, information regarding the density of the vertices upon reconstruction.

(13) The information processing device according to any one of (10) to (12), in which
the vertex connection information generation unit generates, as the parameter, flag information indicating whether to correct the positions of the vertices to be reconstructed.

(14) The information processing device according to any one of (10) to (13), in which
the vertex connection information generation unit generates, as the parameter, information regarding a feature of a geometry targeted for correction of the vertices to be reconstructed.

(15) The information processing device according to any one of (10) to (14), in which
the vertex connection information generation unit generates, as the parameter, information regarding a target search range of correction of the vertices to be reconstructed.

(16) The information processing device according to any one of (10) to (15), in which
the vertex connection information generation unit generates, as the parameter, information regarding the minimum interval after correction of the vertices to be reconstructed.

(17) The information processing device according to any one of (10) to (16), in which
the vertex connection information generation unit generates, as the parameter, information regarding the way to connect the vertices to be reconstructed.

(18) The information processing device according to any one of (10) to (17), in which
the vertex connection information generation unit generates, as the parameter, information regarding a method of merging polygons formed by the vertices to be reconstructed.

(19) The information processing device according to any one of (1) to (18), in which
the vertex connection information generation unit determines whether to delete the internal vertices of the mesh, and in a case of determining to delete the internal vertices, deletes at least some of the internal vertices of the mesh and generates the vertex connection information.

(20) The information processing device according to (19), in which
the vertex connection information generation unit determines whether to delete the internal vertices of the mesh on the basis of a comparison result between the number of internal vertices and the number of boundary vertices which are the vertices positioned at the boundary of the patch.

(21) The information processing device according to (19), in which
the vertex connection information generation unit determines whether to delete the internal vertices of the mesh on the basis of the magnitude of distortion caused by deleting at least some of the internal vertices of the mesh and reconstructing the internal vertices.

(22) The information processing device according to any one of (1) to (21), in which

the vertex connection information includes a boundary vertex list which is the list of boundary vertices which are vertices positioned at the boundary of the patch,
the boundary vertex list includes identification information on the boundary vertices and position information on the boundary vertices in a geometry image which is a two-dimensional plane on which the patch is arranged, and
the position information includes a difference in coordinates from other adjacent boundary vertices.

(23) The information processing device according to any one of (1) to (22), which further includes

an Omap correction information generation unit that generates Omap correction information for correcting an occupancy image generated on the basis of the vertex connection information, and
the encoding unit further encodes the Omap correction information.

(24) An information processing method including

deleting at least some of internal vertices which are vertices of a mesh representing an object having a three-dimensional structure and positioned other than the boundary of a patch of a geometry, and generating vertex connection information indicating the vertices of the mesh and a connection between the vertices, and encoding the vertex connection information.

(31) An information processing device including

a decoding unit that decodes coded data of vertex connection information indicating boundary vertices which are vertices of a mesh representing an object having a three-dimensional structure and positioned at least at the boundary of a patch of a geometry and a connection between the boundary vertices, and
a vertex connection reconstruction unit that reconstructs the vertices positioned in the patch and the connection between the vertices using the vertex connection information obtained by decoding the coded data by the decoding unit and a geometry image in which the patch is arranged on a two-dimensional plane.

(32) The information processing device according to (31), in which
the vertex connection reconstruction unit linearly interpolates the boundary vertices, determines a patch region which is a region included in the patch, generates polygons, merges unnecessary polygons outside the patch region, and merges polygons in the patch region on the basis of the geometry, thereby reconstructing the vertices positioned in the patch and the connection.
(33) The information processing device according to (32), in which
the vertex connection reconstruction unit further deletes the boundary vertices subjected to linear interpolation.
(34) The information processing device according to (31), in which
the vertex connection reconstruction unit divides the patch into a triangular region and a rectangular region, arranges the vertices in the rectangular region, determines a connection between the vertices in the rectangular region, and determines a connection between the vertices in the triangular region, thereby reconstructing the vertices positioned in the patch and the connection.
(35) The information processing device according to any one of (31) to (34), in which
the vertex connection reconstruction unit generates connectivity and UV map of the mesh including the reconstructed vertices and connection.
(36) The information processing device according to (31), which further includes
a patch reconstruction unit that reconstructs the patch from the geometry image
(37) The information processing device according to (36), which further includes
a vertex information reconstruction unit that reconstructs vertex information on the mesh on the basis of the patch reconstructed by the patch reconstruction unit.
(38) The information processing device according to (31), in which
the vertex connection reconstruction unit subdivides a polygon indicated by the vertex connection information.
(39) The information processing device according to (31), in which

the vertex connection information includes a boundary vertex list which is the list of boundary vertices which are vertices positioned at the boundary of the patch,
the boundary vertex list includes identification information on the boundary vertices and position information on the boundary vertices in the geometry image,
the position information includes a difference in coordinates from another adjacent boundary vertex, and
the vertex connection reconstruction unit derives the coordinates of the boundary vertex by adding the coordinates of the another adjacent boundary vertex to the difference.

(40) The information processing device according to (31), which further includes
a patch reconstruction unit that generates an occupancy image on the basis of the vertex connection information and reconstructs the patch from the geometry image using the occupancy image.
(41) The information processing device according to (40), in which

the patch reconstruction unit further generates the occupancy image on the basis of information indicating which of the left and right sides of the connection between the boundary vertices indicated by the vertex connection information is a region inside the patch.

(42) The information processing device according to (40), in which

the patch reconstruction unit further generates the occupancy image on the basis of information indicating the front or back of a polygon indicated by the vertex connection information.

(43) The information processing device according to (40), in which

the decoding unit further decodes coded data of Omap correction information for correcting the occupancy image, the patch reconstruction unit corrects the occupancy image on the basis of the Omap correction information, and the Omap correction information indicates a difference between a first occupancy image generated on the basis of the vertex connection information and a second occupancy image corresponding to the geometry image.

(44) The information processing device according to (40), in which

the patch reconstruction unit arranges an internal region, which indicates the inside of the patch, inside the boundary of the patch indicated by the boundary vertices and the connection between the boundary vertices in the vertex connection information, deforms the internal region by moving each vertex of the internal region to a neighboring boundary vertex, and further corrects the internal region on the basis of the vertex connection information.

(45) An information processing method including

decoding coded data of vertex connection information indicating boundary vertices which are vertices of a mesh representing an object having a three-dimensional structure and positioned at least at the boundary of a patch of a geometry and a connection between the boundary vertices, and

reconstructing the vertices positioned in the patch and the connection between the vertices using the vertex connection information obtained by decoding the coded data and a geometry image in which the patch is arranged on a two-dimensional plane.

REFERENCE SIGNS LIST

| | |
|---|---|
| 300 | Encoding device |
| 311 | Mesh voxelization unit |
| 312 | Patch generation unit |
| 313 | Vertex connection updating unit |
| 314 | Geometry image generation unit |
| 315 | Occupancy image generation unit |
| 316 | Texture image generation unit |
| 317 | Meta information encoding unit |
| 318 to 320 | 2D encoding unit |
| 321 | Multiplexing unit |
| 322 | Vertex connection reconstruction unit |
| 331 | Image generation unit |
| 332 | Encoding unit |
| 400 | Decoding device |
| 411 | Demultiplexing unit |
| 412 | Meta information decoding unit |
| 413 to 415 | 2D decoding unit |
| 416 | Vertex connection reconstruction unit |
| 417 | Patch reconstruction unit |
| 418 | Vertex information reconstruction unit |
| 600 | Encoding device |
| 611 | Omap correction information generation unit |
| 612 | Omap correction information encoding unit |
| 700 | Decoding device |
| 711 | Omap correction information decoding unit |
| 900 | Computer |

**Claims**

1.  An information processing device comprising:

    a vertex connection information generation unit that deletes at least some of internal vertices which are vertices of a mesh representing an object having a three-dimensional structure and positioned other than a boundary of a patch of a geometry and generates vertex connection information indicating the vertices of the mesh and a connection between the vertices; and
    an encoding unit that encodes the vertex connection information.

2.  The information processing device according to claim 1, wherein
    the vertex connection information includes a boundary vertex list which is a list of boundary vertices which are vertices positioned at the boundary of the patch.

3.  The information processing device according to claim 2, wherein
    the boundary vertex list includes an inclusive list in which a region surrounded by the boundary vertices forming the list and a connection between the boundary vertices is included in the patch.

4.  The information processing device according to claim 3, wherein
    the boundary vertex list includes an exclusive list in which the region surrounded by the boundary vertices forming the list and the connection between the boundary vertices is not included in the patch.

5.  The information processing device according to claim 2, wherein
    the boundary vertex list includes identification information on the boundary vertices and position information on the boundary vertices in a geometry image which is a two-dimensional plane on which the patch is arranged.

6.  The information processing device according to claim 2, wherein
    the boundary vertex list indicates the connection between the boundary vertices in an arrangement order of the boundary vertices.

7.  The information processing device according to claim 2, wherein
    the vertex connection information further includes an internal vertex list which is a list of the internal vertices.

8.  The information processing device according to claim 2, wherein
    the vertex connection information further includes pair information indicating a correspondence of the boundary vertices between the patches.

9.  The information processing device according to claim 1, wherein
    the vertex connection information generation unit further generates a parameter to be used when the vertices and the connection are reconstructed.

10. The information processing device according to claim 9, wherein
    the vertex connection information generation unit generates, as the parameter, flag information indicating whether or not at least some of the internal vertices of the mesh have been deleted.

11. The information processing device according to claim 9, wherein
    the vertex connection information generation unit generates, as the parameter, information regarding a density of the vertices upon reconstruction.

12. The information processing device according to claim 9, wherein
    the vertex connection information generation unit generates, as the parameter, flag information indicating whether to correct positions of the vertices to be reconstructed.

13. The information processing device according to claim 9, wherein
    the vertex connection information generation unit generates, as the parameter, information regarding a feature of a geometry targeted for correction of the vertices to be reconstructed.

14. The information processing device according to claim 9, wherein

the vertex connection information generation unit generates, as the parameter, information regarding a target search range of correction of the vertices to be reconstructed.

15. The information processing device according to claim 1, wherein
the vertex connection information generation unit determines whether to delete the internal vertices of the mesh, and in a case of determining to delete the internal vertices, deletes at least some of the internal vertices of the mesh and generates the vertex connection information.

16. An information processing method comprising:

deleting at least some of internal vertices which are vertices of a mesh representing an object having a three-dimensional structure and positioned other than a boundary of a patch of a geometry, and generating vertex connection information indicating the vertices of the mesh and a connection between the vertices; and encoding the vertex connection information.

17. An information processing device comprising:

a decoding unit that decodes coded data of vertex connection information indicating boundary vertices which are vertices of a mesh representing an object having a three-dimensional structure and positioned at least at a boundary of a patch of a geometry and a connection between the boundary vertices; and a vertex connection reconstruction unit that reconstructs the vertices positioned in the patch and the connection between the vertices using the vertex connection information obtained by decoding the coded data by the decoding unit and a geometry image in which the patch is arranged on a two-dimensional plane.

18. The information processing device according to claim 17, wherein
the vertex connection reconstruction unit linearly interpolates the boundary vertices, determines a patch region which is a region included in the patch, generates polygons, merges unnecessary polygons outside the patch region, and merges polygons in the patch region on a basis of the geometry, thereby reconstructing the vertices positioned in the patch and the connection.

19. The information processing device according to claim 17, wherein
the vertex connection reconstruction unit divides the patch into a triangular region and a rectangular region, arranges the vertices in the rectangular region, determines a connection between the vertices in the rectangular region, and determines a connection between the vertices in the triangular region, thereby reconstructing the vertices positioned in the patch and the connection.

20. An information processing method comprising:

decoding coded data of vertex connection information indicating boundary vertices which are vertices of a mesh representing an object having a three-dimensional structure and positioned at least at a boundary of a patch of a geometry and a connection between the boundary vertices; and reconstructing the vertices positioned in the patch and the connection between the vertices using the vertex connection information obtained by decoding the coded data and a geometry image in which the patch is arranged on a two-dimensional plane.

*FIG. 1*

EP 4 369 714 A1

## FIG. 2

Mesh

Texture

V1 (X1, Y1, Z1)
V2 (X2, Y2, Z2)
V3 (X3, Y3, Z3)
V4 (X4, Y4, Z4)
⋮

31

V1, V2, V3
V1, V3, V4
V4, V3, V5
⋮

32

33

V1→uv (0, 0)
V2→uv (0. 2, 0. 4)
V3→uv (0. 3, 0. 5)
V4→uv (0. 4, 0. 6)
⋮

34

# FIG. 3

| 1 | DELETE INTERNAL VERTICES IN VERTEX INFORMATION |
|---|---|

| | 1-1 | VERTEX CONNECTION INFORMATION |
|---|---|---|

| | | BOUNDARY VERTEX LIST |
|---|---|---|
| | | INTERNAL VERTEX LIST |
| | | PAIR INFORMATION |

| | | 1-1-1 | BOUNDARY VERTEX LIST CONTENTS |
|---|---|---|---|

| | | | ID AND UV COORDINATES OF EACH BOUNDARY VERTEX |
|---|---|---|---|
| | | | INDICATE CONNECTIVITY IN LIST ORDER |

| | | 1-1-2 | BOUNDARY VERTEX LIST CONFIGURATION |
|---|---|---|---|

| | | | INCLUSIVE LIST |
|---|---|---|---|
| | | | EXCLUSIVE LIST |

| | 1-2 | VERTEX GENERATION PARAMETER |
|---|---|---|

| | | boundary_vertex_only_flag |
|---|---|---|
| | | density |
| | | refinement_enable_flag |
| | | refinement_type |
| | | refinement_range |
| | | refinement_minimum_interval |
| | | connectivity_type |
| | | POLYGON MERGING METHOD SPECIFYING INFORMATION |

| | 1-3 | DETERMINE WHETHER TO APPLY BOUNDARY VERTEX MODE |
|---|---|---|

| | | DETERMINE ON BASIS OF RESULT OF COMPARISON BETWEEN NUMBER OF INTERNAL VERTICES AND NUMBER OF BOUNDARY VERTICES |
|---|---|---|
| | | GENERATE INTERNAL VERTICES AND DETERMINE DISTORTION THEREOF ACCORDING TO THRESHOLD |

# FIG. 4

| 1－4 | RECONSTRUCTION METHOD 1 |
|---|---|
| | LINEARLY INTERPOLATE BOUNDARY VERTICES, DETERMINE PATCH REGION, GENERATE POLYGONS, MERGE UNNECESSARY POLYGONS OUTSIDE PATCH REGION, AND MERGE POLYGONS IN PATCH REGION USING DEPTH VALUE |
| | WHEN PAIR INFORMATION IS APPLIED, ALSO DELETE LINEARLY-INTERPOLATED BOUNDARY VERTICES |
| 1－5 | RECONSTRUCTION METHOD 2 |
| | CORRECT BOUNDARY AS NECESSARY, DIVIDE PATCH INTO TRIANGULAR REGION AND RECTANGULAR REGION, ARRANGE INTERNAL VERTICES IN RECTANGULAR REGION, DETERMINE CONNECTIVITY OF RECTANGULAR REGION, AND DETERMINE CONNECTIVITY OF TRIANGULAR REGION |

FIG. 5

## FIG. 6

```
Patch A
  Inclusive  #0 u00, v00, #1 u10, v10, #2 u20, v20, #4 u40, v40
  Exclusive  #5 u50, v50, #6 u60, v60, #7 u70, v70, #8 u80, v80
  Non-boundary Vertex #9 u90, v90, #10 u100, v100
Patch B
  Inclusive  #3 u31, v31, #2 u21, v21, #1 u11, v11, #0 u01, v01
  Exclusive  none
  Non-boundary Vertex  none
Patch C
  Inclusive  #4 u42, v42, #2 u22, v22, #3 u32, v32
  Exclusive  none
  Non-boundary Vertex  none
Patch D
  Inclusive  #5 u53, v53, #8 u83, v83, #7 u73, v73, #6 u63, v63
  Exclusive  none
  Non-boundary Vertex  none
```

111

## FIG. 7

EP 4 369 714 A1

120

| Index | #0 | #1 | #2 | #3 | #4 | #5 | #6 | #7 | #8 |
|---|---|---|---|---|---|---|---|---|---|
| 2D Vertex | u00, v00 u01, v01 | u10, v10 u11, v11 | u20, v20 u21, v21 u22, v22 | u31, v31 u32, v32 | u40, v40 u42, v42 | u50, v50 u53, v53 | u60, v60 u63, v63 | u70, v70 u73, v73 | u80, v80 u83, v83 |
| Patch Edge Data | E#1 | | E#2 | E#3 | E#4 | E#5 | E#6 | E#7 | E#8 |

# FIG. 8

```
Patch A
   Inclusive   #0, #1, #2, #4
   Exclusive   #5, #6, #7, #8
Patch B
   Inclusive   #3, #2, #1, #0
   Exclusive   none
Patch C
   Inclusive   #4, #2, #3
   Exclusive   none
Patch D
   Inclusive   #5, #8, #7, #6
   Exclusive   none
```

121

A

```
Patch A
   Inclusive   E#1, E#2, E#4
   Exclusive   E#5, E#6, E#7, E#8
Patch B
   Inclusive   E#3, E#2, E#1
   Exclusive   none
Patch C
   Inclusive   E#4, E#2, E#3
   Exclusive   none
Patch D
   Inclusive   E#5, E#8, E#7, E#6
   Exclusive   none
```

122

B

EP 4 369 714 A1

FIG. 9

density=1

A

density=2

B

density=3

C

FIG. 10

A

B

EP 4 369 714 A1

# FIG. 11

## FIG. 12

FIG. 13

## FIG. 14

## FIG. 15

## FIG. 16

# FIG. 17

*FIG. 18*

EP 4 369 714 A1

# FIG. 19

## FIG. 20

# FIG. 21

# FIG. 22

# FIG. 23

# FIG. 24

## FIG. 25

## FIG. 26

| AS VIEWED FROM CENTER | UPPER LEFT | UPPER RIGHT | LOWER LEFT | LOWER RIGHT |
|---|---|---|---|---|
| 1 | | | | |
| 2 | | | | |

EP 4 369 714 A1

FIG. 27

*FIG. 28*

A

B

EP 4 369 714 A1

## FIG. 29

FIG. 30

EP 4 369 714 A1

FIG. 31

A

B

EP 4 369 714 A1

FIG. 32

A

B

EP 4 369 714 A1

*FIG. 33*

**FIG. 34**

```
( START ENCODING PROCESSING )
            │
            ▼
┌────────────────────────────────────┐
│         VOXELIZE Mesh              │  S301
└────────────────────────────────────┘
            │
            ▼
┌────────────────────────────────────┐
│         GENERATE PATCH             │  S302
└────────────────────────────────────┘
            │
            ▼
┌────────────────────────────────────┐
│  PERFORM BOUNDARY VERTEX MODE      │  S303
│  APPLICATION DETERMINATION PROCESSING │
└────────────────────────────────────┘
            │
            ▼
┌────────────────────────────────────┐
│  GENERATE VERTEX CONNECTION INFORMATION │  S304
└────────────────────────────────────┘
            │
            ▼
┌────────────────────────────────────┐
│     GENERATE VERTEX CONNECTION     │  S305
│     RECONSTRUCTION PARAMETER       │
└────────────────────────────────────┘
            │
            ▼
┌────────────────────────────────────┐
│      GENERATE GEOMETRY IMAGE       │  S306
└────────────────────────────────────┘
            │
            ▼
┌────────────────────────────────────┐
│      GENERATE OCCUPANCY IMAGE      │  S307
└────────────────────────────────────┘
            │
            ▼
┌────────────────────────────────────┐
│ ║   RECONSTRUCT VERTEX CONNECTION  ║ │  S308
└────────────────────────────────────┘
            │
            ▼
┌────────────────────────────────────┐
│       CORRECT TEXTURE IMAGE        │  S309
└────────────────────────────────────┘
            │
            ▼
┌────────────────────────────────────┐
│      ENCODE META INFORMATION       │  S310
└────────────────────────────────────┘
            │
            ▼
┌────────────────────────────────────┐
│       ENCODE GEOMETRY IMAGE        │  S311
└────────────────────────────────────┘
            │
            ▼
┌────────────────────────────────────┐
│      ENCODE OCCUPANCY IMAGE        │  S312
└────────────────────────────────────┘
            │
            ▼
┌────────────────────────────────────┐
│       ENCODE TEXTURE IMAGE         │  S313
└────────────────────────────────────┘
            │
            ▼
┌────────────────────────────────────┐
│            MULTIPLEX               │  S314
└────────────────────────────────────┘
            │
            ▼
         (  END  )
```

# FIG. 35

# FIG. 36

```
          ┌─────────────────────────────────┐
          │   START DECODING PROCESSING      │
          └─────────────────────────────────┘
                          │
                          ▼
          ┌─────────────────────────────────┐  S401
          │     DEMULTIPLEX BIT STREAM       │
          └─────────────────────────────────┘
                          │
                          ▼
          ┌─────────────────────────────────┐  S402
          │     DECODE META INFORMATION      │
          └─────────────────────────────────┘
                          │
                          ▼
          ┌─────────────────────────────────┐  S403
          │     DECODE OCCUPANCY IMAGE        │
          └─────────────────────────────────┘
                          │
                          ▼
          ┌─────────────────────────────────┐  S404
          │     DECODE GEOMETRY IMAGE         │
          └─────────────────────────────────┘
                          │
                          ▼
          ┌─────────────────────────────────┐  S405
          │     DECODE TEXTURE IMAGE          │
          └─────────────────────────────────┘
                          │
                          ▼
          ┌─┤─────────────────────────────┤─┐  S406
          │   RECONSTRUCT VERTEX CONNECTION  │
          └─────────────────────────────────┘
                          │
                          ▼
          ┌─────────────────────────────────┐  S407
          │       RECONSTRUCT PATCH          │
          └─────────────────────────────────┘
                          │
                          ▼
          ┌─────────────────────────────────┐  S408
          │  RECONSTRUCT VERTEX INFORMATION  │
          └─────────────────────────────────┘
                          │
                          ▼
          ┌─────────────────────────────────┐
          │              END                 │
          └─────────────────────────────────┘
```

# FIG. 37

```
  ┌──────────────────────────────┐
  │   START VERTEX CONNECTION     │
  │   RECONSTRUCTION PROCESSING   │
  └──────────────────────────────┘
                 │
                 ▼
  ┌──────────────────────────────────────┐ S421
  │ LINEARLY INTERPOLATE BOUNDARY VERTICES,│
  │   AND DETERMINE IN-PATCH REGION        │
  └──────────────────────────────────────┘
                 │
                 ▼
  ┌──────────────────────────────────────┐ S422
  │        GENERATE POLYGONS               │
  └──────────────────────────────────────┘
                 │
                 ▼
  ┌──────────────────────────────────────┐ S423
  │   DELETE UNNECESSARY POLYGONS          │
  └──────────────────────────────────────┘
                 │
                 ▼
  ┌──────────────────────────────────────┐ S424
  │      EXECUTE MESH REDUCTION            │
  └──────────────────────────────────────┘
                 │
                 ▼
          ┌──────────────┐
          │    RETURN     │
          └──────────────┘
```

# FIG. 38

```
        ( START VERTEX CONNECTION
          RECONSTRUCTION PROCESSING )
                        │
                        ▼
      ┌─────────────────────────────────────┐
      │         CORRECT BOUNDARY            │ S441
      └─────────────────────────────────────┘
                        │
                        ▼
      ┌─────────────────────────────────────┐
      │  DIVIDE PATCH REGION INTO TRIANGULAR │ S442
      │    REGION AND RECTANGULAR REGION     │
      └─────────────────────────────────────┘
                        │
                        ▼
      ┌─────────────────────────────────────┐
      │ ARRANGE INTERNAL VERTICES IN         │ S443
      │         RECTANGULAR REGION           │
      └─────────────────────────────────────┘
                        │
                        ▼
      ┌─────────────────────────────────────┐
      │ DETERMINE CONNECTIVITY OF            │ S444
      │         RECTANGULAR REGION           │
      └─────────────────────────────────────┘
                        │
                        ▼
      ┌─────────────────────────────────────┐
      │ DETERMINE CONNECTIVITY OF            │ S445
      │         TRIANGULAR REGION            │
      └─────────────────────────────────────┘
                        │
                        ▼
                  ( RETURN )
```

FIG. 39

FIG. 40

FIG. 41

EP 4 369 714 A1

*FIG. 42*

EP 4 369 714 A1

FIG. 43

FIG. 44

EP 4 369 714 A1

*FIG. 45*

```
0 U[0],V[0]
1 U[1],V[1]
   .  .  .
K U[K],V[K]
```
561

```
0 Index[0]=U[0] + V[0] * width
1 Index[1]=U[1] + V[1] * width
   .  .  .
K Index[K]=U[K] + V[K] * width
```
562

# FIG. 46

*FIG. 47*

```
( START ENCODING PROCESSING )
```

| VOXELIZE Mesh | S601 |

| GENERATE PATCH | S602 |

| PERFORM BOUNDARY VERTEX MODE APPLICATION DETERMINATION PROCESSING | S603 |

| GENERATE VERTEX CONNECTION INFORMATION | S604 |

| GENERATE VERTEX CONNECTION RECONSTRUCTION PARAMETER | S605 |

| GENERATE GEOMETRY IMAGE | S606 |

| GENERATE Omap CORRECTION INFORMATION | S607 |

| RECONSTRUCT VERTEX CONNECTION | S608 |

| CORRECT TEXTURE IMAGE | S609 |

| ENCODE META INFORMATION | S610 |

| ENCODE GEOMETRY IMAGE | S611 |

| ENCODE Omap CORRECTION INFORMATION | S612 |

| ENCODE TEXTURE IMAGE | S613 |

| MULTIPLEX | S614 |

```
( END )
```

# FIG. 48

```
┌──────────────────────────────────────────┐
│  START Omap CORRECTION INFORMATION       │
│       GENERATION PROCESSING              │
└──────────────────────────────────────────┘
                    │
                    ▼
┌──────────────────────────────────────────┐  S631
│        GENERATE OCCUPANCY IMAGE          │
│           ON BASIS OF PATCH              │
└──────────────────────────────────────────┘
                    │
                    ▼
┌──────────────────────────────────────────┐  S632
│    GENERATE OCCUPANCY IMAGE ON BASIS     │
│     OF VERTEX CONNECTION INFORMATION     │
└──────────────────────────────────────────┘
                    │
                    ▼
┌──────────────────────────────────────────┐  S633
│       COMPARE OCCUPANCY IMAGE, AND       │
│  GENERATE Omap CORRECTION INFORMATION    │
└──────────────────────────────────────────┘
                    │
                    ▼
              ┌──────────┐
              │  RETURN  │
              └──────────┘
```

FIG. 49

EP 4 369 714 A1

# FIG. 50

START DECODING PROCESSING

DEMULTIPLEX BIT STREAM — S701

DECODE META INFORMATION — S702

DECODE Omap CORRECTION INFORMATION — S703

DECODE GEOMETRY IMAGE — S704

DECODE TEXTURE IMAGE — S705

RECONSTRUCT VERTEX CONNECTION — S706

GENERATE OCCUPANCY IMAGE — S707

RECONSTRUCT PATCH — S708

RECONSTRUCT VERTEX INFORMATION — S709

END

# FIG. 51

```
┌─────────────────────────────────┐
│   START OCCUPANCY IMAGE          │
│   GENERATION PROCESSING          │
└─────────────────────────────────┘
                │
                ▼
┌─────────────────────────────────┐ S731
│ GENERATE OCCUPANCY IMAGE ON BASIS│
│ OF VERTEX CONNECTION INFORMATION │
└─────────────────────────────────┘
                │
                ▼
┌─────────────────────────────────┐ S732
│   CORRECT OCCUPANCY IMAGE USING  │
│   Omap CORRECTION INFORMATION    │
└─────────────────────────────────┘
                │
                ▼
          ┌───────────┐
          │  RETURN   │
          └───────────┘
```

FIG. 52

EP 4 369 714 A1

FIG. 53

EP 4 369 714 A1

FIG. 54

EP 4 369 714 A1

FIG. 55

EP 4 369 714 A1

FIG. 56

*FIG. 57*

EP 4 369 714 A1

## FIG. 58

EP 4 369 714 A1

## INTERNATIONAL SEARCH REPORT

| International application No. |
|---|
| **PCT/JP2022/021181** |

### A. CLASSIFICATION OF SUBJECT MATTER

*H04N 19/597*(2014.01)i; *G06T 17/20*(2006.01)i; *H04N 19/46*(2014.01)i
FI:  H04N19/597; G06T17/20 500; H04N19/46

According to International Patent Classification (IPC) or to both national classification and IPC

### B. FIELDS SEARCHED

Minimum documentation searched (classification system followed by classification symbols)

H04N19/00-19/98; G06T17/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore & KEYWORDS: mesh, V-PCC, V3C, patch, etc.

### C. DOCUMENTS CONSIDERED TO BE RELEVANT

| Category* | Citation of document, with indication, where appropriate, of the relevant passages | Relevant to claim No. |
|---|---|---|
| X | GRAZIOSI, Danillo et al. [VPCC] [EE2.6-related] Mesh Patch Data. INTERNATIONAL ORGANISATION FOR STANDARDISATION ORGANISATION. INTERNATIONALE DE NORMALISATION ISO/IEC JTC 1/SC 29/WG 7 CODING OF MOVING PICTURES AND AUDIO. [m55368], m55368 (version 1), [online], 20 October 2020, [retrieved on 05 August 2022], Retrieved from the Internet: <URL:https://mpeg-pcc.org/wp-content/ uploads/2020/10/m55368-v1-m55368_V-PCCEE2.6-related-Mesh-Patch-Data.zip>: m55368_mesh_patch_data.docx: pages 1-14 <br>    particularly, clauses 2.1, 2.3 | 17, 20 |
| A | entire text, all drawings | 1-16, 18-19 |
| A | GRAZIOSI, Danillo et al. [VPCC] [EE2.6-related] Mesh Geometry Smoothing Filter. INTERNATIONAL ORGANISATION FOR STANDARDISATION. ORGANISATION INTERNATIONALE DE NORMALISATION ISO/IEC JTC 1/SC 29/WG 7 CODING OF MOVING PICTURES AND AUDIO. [m55374], m55374 (version 1), [online], 20 October 2020, [retrieved on 05 August 2022], Retrieved from the Internet: <https://mpeg-pcc.org/ wp-content/uploads/2020/10/m55374-v1-m55374_V-PCCEE2.6-related-Mesh-Geometry-Smoothing-Filter.zip>: m55374_mesh_geometry_smoothing.docx: pages 1-6 <br>    entire text, all drawings | 1-20 |

✓ Further documents are listed in the continuation of Box C.    ✓ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 August 2022** | **16 August 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| International application No. |
| --- |
| **PCT/JP2022/021181** |

**C.    DOCUMENTS CONSIDERED TO BE RELEVANT**

| Category* | Citation of document, with indication, where appropriate, of the relevant passages | Relevant to claim No. |
| --- | --- | --- |
| A | FARAMARZI, Esmaeil et al. Mesh Coding Extensions to MPEG-I V-PCC. 2020 IEEE 22nd International Workshop on Multimedia Signal Processing (MMSP). [online], IEEE, 16 December 2020, [retrieved on 05 August 2022], pages 1-5, Retrieved from the Internet: <URL:https://ieeexplore.ieee.org/document/9287057/citations?tabFilter=papers#citations>, <DOI: 10.1109/MMSP48831.2020.9287057><br>entire text, all drawings | 1-20 |
| A | US 2021/0174551 A1 (SONY CORPORATION) 10 June 2021 (2021-06-10)<br>entire text, all drawings | 1-20 |

Form PCT/ISA/210 (second sheet) (January 2015)

**INTERNATIONAL SEARCH REPORT**
Information on patent family members

| | International application No. |
|---|---|
| | **PCT/JP2022/021181** |

| Patent document cited in search report | Publication date (day/month/year) | Patent family member(s) | Publication date (day/month/year) |
|---|---|---|---|
| US 2021/0174551 A1 | 10 June 2021 | WO 2021/116838 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DANILLO GRAZIOSI ; ALEXANDRE ZAGHETTO ; ALI TABATABAI.** VPCC] [EE2.6-related] Mesh Patch Data. *ISO/IEC JTC 1/SC 29/WG 7 m 55368,* October 2020

- Information technology - Coded Representation of Immersive Media - Part 5: Visual Volumetric Video-based Coding (V3C) and Video-based Point Cloud Compression (V-PCC. *ISO/IEC 23090-5:2020(E),ISO/IEC JTC 1/SC 29/WG 11 w19579*
- **HARTMUT PRAUTZSCH ; QI CHEN.** Analyzing Midpoint Subdivision. *arXiv:0911.5157v3,* 27 April 2011